(19) Europäisches Patentamt / European Patent Office / Office européen des brevets

(11) **EP 3 920 498 B1**

(12) **EUROPEAN PATENT SPECIFICATION**

(45) Date of publication and mention
of the grant of the patent:
**15.11.2023 Bulletin 2023/46**

(21) Application number: **20747835.5**

(22) Date of filing: **24.01.2020**

(51) International Patent Classification (IPC):
***H04N 23/60*** *(2023.01)*

(52) Cooperative Patent Classification (CPC):
**H04L 69/323; H04L 69/324; H04N 23/60;**
H04L 69/321

(86) International application number:
**PCT/JP2020/002456**

(87) International publication number:
**WO 2020/158589 (06.08.2020 Gazette 2020/32)**

(54) **TRANSMISSION DEVICE, TRANSMISSION METHOD, RECEPTION DEVICE, RECEPTION METHOD, AND TRANSMISSION/RECEPTION DEVICE**

SENDEVORRICHTUNG, SENDEVERFAHREN, EMPFANGSVORRICHTUNG, EMPFANGSVERFAHREN UND SENDE-/EMPFANGSVORRICHTUNG

DISPOSITIF D'ÉMISSION, PROCÉDÉ D'ÉMISSION, DISPOSITIF DE RÉCEPTION, PROCÉDÉ DE RÉCEPTION, ET DISPOSITIF D'ÉMISSION/RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2019 JP 2019011811**

(43) Date of publication of application:
**08.12.2021 Bulletin 2021/49**

(73) Proprietor: **Sony Semiconductor Solutions Corporation**
**Atsugi-shi, Kanagawa 243-0014 (JP)**

(72) Inventor: **MIZUNO Masatoshi**
**Atsugi-shi, Kanagawa 243-0021 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**WO-A1-2017/098871     JP-A- 2012 120 159**
**US-A1- 2012 120 289**

**Description**

TECHNICAL FIELD

The present technology relates to a transmission device, a transmission method, a reception device, a reception method, and a transmission-reception device, and particularly relates to a transmission device, a transmission method, a reception device, a reception method, and a transmission-reception device that allow separating signal processing units that perform signal processing of different layers.

BACKGROUND ART

There is a scalable low voltage signaling-embedded clock (SLVS-EC) standard as an interface standard for image sensors. A transmission method of the SLVS-EC standard is a method in which data is transmitted in a form having a clock superimposed on the transmitting side, and the clock is reproduced on the receiving side to demodulate and decode the data.

The SLVS-EC standard defines a "link layer" that is a layer that performs application-oriented signal processing such as packet generation, and a "physical layer" that is a layer that performs transmission line-oriented signal processing such as clock generation and reproduction.

Patent Document 1 discloses an image outputting apparatus that includes a header production section for producing a header including header information formed from first and second frame information regarding whether pixel data included in a payload are of first and last lines of one frame, respectively, first line information regarding whether or not the pixel data included in the payload are valid, and second line information regarding a line number of a line formed from the pixel data included in the payload, and an error detection code for use for detection of an error of the header information. A packet production section produces a packet which includes, in the payload thereof, pixel data for one line which configure an image obtained by imaging by an imaging section and to which the header is added. An outputting section outputs the produced packet to an image processing apparatus.

CITATION LIST

PATENT DOCUMENT

Patent Document 1: Japanese Patent Application Laid-Open No. 2012-120159
Patent Document 2: United States Patent Application US 2012/0120289 A1

SUMMARY OF THE INVENTION

PROBLEMS TO BE SOLVED BY THE INVENTION

Detailed signal exchange between the link layer and the physical layer, such as from which port a signal is output and to which port the signal is input, is not defined in the SLVS-EC standard. Thus, it is not possible to mount the link layer and the physical layer on separate IC chips.

The present technology has been made in view of such a situation, and makes it possible to separate signal processing units that perform signal processing of different layers.

SOLUTIONS TO PROBLEMS

According to a first aspect the present invention provides a transmission device in accordance with independent claim 1.

According to a second aspect the present invention provides a transmission method in accordance with independent claim 4.

According to a third aspect the present invention provides a reception device in accordance with independent claim 5.

According to a fourth aspect the present invention provides a reception method in accordance with independent claim 8.

According to a fifth aspect the present invention provides a transmission-reception device in accordance with independent claim 9.

All further aspects of the present invention are provided in the dependent claims, the drawing, and the following description.

BRIEF DESCRIPTION OF DRAWINGS

Fig. 1 is a diagram illustrating a configuration example of a transmission system according to one embodiment of the present technology.

Fig. 2 is a block diagram illustrating a configuration example of a transmission unit and a reception unit.

Fig. 3 is a diagram illustrating an example of input and output of a Tx-Phy Layer signal processing unit of the transmission unit.

Fig. 4 is a diagram illustrating an outline of input and output of respective ports of the Tx-Phy Layer signal processing unit.

Fig. 5 is a diagram illustrating an outline of input and output of respective ports of the Tx-Phy Layer signal processing unit.

Fig. 6 is a diagram illustrating an example of input and output of the Tx-Link Layer signal processing unit of the transmission unit.

Fig. 7 is a diagram illustrating an outline of input and output of respective ports of the Tx-Link Layer signal processing unit.

Fig. 8 is a diagram illustrating an outline of input and output of respective ports of the Tx-Link Layer signal processing unit.

Fig. 9 is a diagram illustrating an example of state transition of the Tx-Phy Layer signal processing unit.

Fig. 10 is a diagram illustrating an example of a timing chart of signals.

Fig. 11 is a diagram illustrating an example of input and output of an Rx-Phy Layer signal processing unit of the reception unit.

Fig. 12 is a diagram illustrating an outline of input and output of respective ports of the Rx-Phy Layer signal processing unit.

Fig. 13 is a diagram illustrating an outline of input and output of respective ports of the Rx-Phy Layer signal processing unit.

Fig. 14 is a diagram illustrating an example of input and output of the Rx-Link Layer signal processing unit of the reception unit.

Fig. 15 is a diagram illustrating an outline of input and output of respective ports of the Rx-Link Layer signal processing unit.

Fig. 16 is a diagram illustrating an outline of input and output of respective ports of the Rx-Link Layer signal processing unit.

Fig. 17 is a diagram illustrating an example of state transition of the Rx-Phy Layer signal processing unit.

Fig. 18 is a diagram illustrating an example of a timing chart of signals.

Fig. 19 is a block diagram illustrating an example of mounting.

Fig. 20 is a block diagram illustrating another mounting example.

Fig. 21 is a diagram illustrating an example of connection with another transmission standard.

Fig. 22 is a diagram illustrating an example of connection with another transmission standard.

Fig. 23 is a diagram illustrating an example of a frame format.

Fig. 24 is a diagram illustrating a configuration example of a transmission unit and a reception unit.

Fig. 25 is a diagram illustrating a header structure.

Fig. 26 is a diagram illustrating content and information amount of header information.

Fig. 27 is a diagram illustrating an example of a bit array.

Fig. 28 is a diagram illustrating an example of Pixel to Byte conversion in a case where a pixel value of each pixel is represented by eight bits.

Fig. 29 is a diagram illustrating an example of Pixel to Byte conversion in a case where the pixel value of each pixel is represented by 10 bits.

Fig. 30 is a diagram illustrating an example of Pixel to Byte conversion in a case where the pixel value of each pixel is represented by 12 bits.

Fig. 31 is a diagram illustrating an example of Pixel to Byte conversion in a case where the pixel value of each pixel is represented by 14 bits.

Fig. 32 is a diagram illustrating an example of Pixel to Byte conversion in a case where the pixel value of each pixel is represented by 16 bits.

Fig. 33 is a diagram illustrating an example of payload data.

Fig. 34 is a diagram illustrating another example of payload data.

Fig. 35 is a diagram illustrating an example of payload data in which a parity is inserted.

Fig. 36 is a diagram illustrating a state in which a header is added to the payload data.

Fig. 37 is a diagram illustrating a state in which a header and a footer are added to the payload data.

Fig. 38 is a diagram illustrating a state in which a header is added to payload data in which a parity is inserted.

Fig. 39 is a diagram illustrating an example of assignment of packet data.

Fig. 40 is a diagram illustrating an example of a control code.

Fig. 41 is a diagram illustrating values of K Characters.

Fig. 42 is a diagram illustrating an example of inserting a Pad Code.

Fig. 43 is a diagram illustrating an example of packet data after inserting a control code.

Fig. 44 is a diagram illustrating an example of correction of Data Skew.

Fig. 45 is a flowchart describing a process of an imaging device.

Fig. 46 is a flowchart describing a data transmission process performed in step S2 of Fig. 45.

Fig. 47 is a flowchart describing a data reception process performed in step S3 of Fig. 45.

Fig. 48 is a diagram illustrating a control sequence in a case of switching the number of lanes.

Fig. 49 is a diagram illustrating a first combination.

Fig. 50 is a diagram illustrating a second combination.

Fig. 51 is a diagram illustrating a third combination.

Fig. 52 is a diagram illustrating a fourth combination.

Fig. 53 is a diagram illustrating a fifth combination.

Fig. 54 is a diagram illustrating a sixth combination.

Fig. 55 is a diagram illustrating a configuration example on a transmitting side in the first combination.

Fig. 56 is a diagram illustrating a configuration example of a receiving side in the first combination.

Fig. 57 is a diagram illustrating a configuration example on a transmitting side in the second combination.

Fig. 58 is a diagram illustrating a configuration example of a receiving side in the second combination.

Fig. 59 is a diagram illustrating a configuration example on a transmitting side in the third combination.

Fig. 60 is a diagram illustrating a configuration example on a receiving side in the third combination.

Fig. 61 is a diagram illustrating a configuration example on a transmitting side in the fourth combination.

Fig. 62 is a diagram illustrating a configuration example on a receiving side in the fourth combination.

Fig. 63 is a diagram illustrating a configuration example on a transmitting side in the fifth combination.

Fig. 64 is a diagram illustrating a configuration example on a receiving side in the fifth combination.

Fig. 65 is a diagram illustrating a configuration example on a transmitting side in the sixth combination.

Fig. 66 is a diagram illustrating a configuration example of a receiving side in the sixth combination.

Fig. 67 is a block diagram illustrating a configuration example of a signal conversion device.

Fig. 68 is a block diagram illustrating a configuration example of a computer.

MODE FOR CARRYING OUT THE INVENTION

Hereinafter, a mode for carrying out the present technology will be described. The description will be made in the following order.

1. Phy Protocol Interface
2. SLVS-EC standard
3. Modification example

<<Phy Protocol Interface>>

<Configuration example of transmission system>

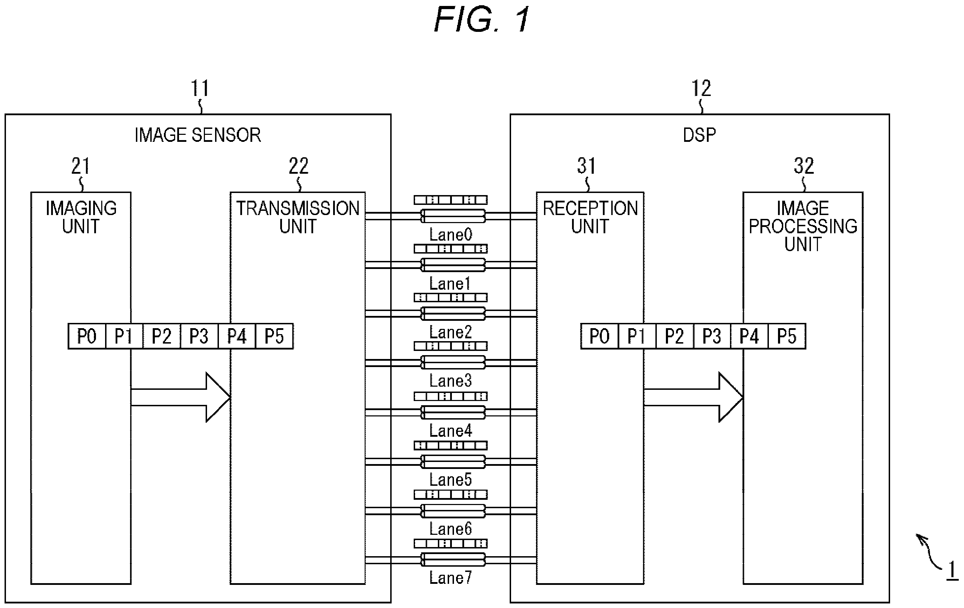

Fig. 1 is a diagram illustrating a configuration example of a transmission system according to one embodiment of the present technology.

The transmission system 1 of Fig. 1 includes an image sensor 11 and a DSP 12. The image sensor 11 and the DSP 12 are provided in the same imaging device having an imaging function, such as a digital camera or a mobile phone. The image sensor 11 is provided with an imaging unit 21 and a transmission unit 22, and the DSP 12 is provided with a reception unit 31 and an image processing unit 32.

The imaging unit 21 of the image sensor 11 includes an imaging element such as a complementary metal oxide semiconductor (CMOS) image sensor, and performs photoelectric conversion of light received through a lens. Furthermore, the imaging unit 21 performs A/D conversion and the like of a signal obtained by the photoelectric conversion, and outputs pixel data constituting an image of one frame to the transmission unit 22 in order for every piece of data of one pixel.

The transmission unit 22 assigns data of each pixel supplied from the imaging unit 21 to a plurality of transmission lines in the order of supply from the imaging unit 21, for example, and transmits the data to the DSP 12 in parallel via the plurality of transmission lines. In the example of Fig. 1, pixel data is transmitted using eight transmission lines. Transmission lines between the image sensor 11 and the DSP 12 may be wired transmission lines or wireless transmission lines. Hereinafter, a transmission line between the image sensor 11 and the DSP 12 is appropriately referred to as a Lane.

The reception unit 31 of the DSP 12 receives the pixel data transmitted from the transmission unit 22 via eight lanes, and outputs data of each pixel to the image processing unit 32 in order.

The image processing unit 32 generates an image of one frame on the basis of the pixel data supplied from the reception unit 31, and performs various image processing using the generated image. The image data transmitted from the image sensor 11 to the DSP 12 is, for example, RAW data, and the image processing unit 32 performs various processes such as compression of the image data, display of the image, and recording of the image data on a recording medium. In addition to RAW data, JPEG data and additional data other than pixel data may be transmitted from the image sensor 11 to the DSP 12.

As described above, data is transmitted and received using a plurality of lanes between the transmission unit 22 provided in the image sensor 11 of the transmission system 1 and the reception unit 31 provided in the DSP 12.

It is also possible to provide the same numbers of transmission units 22 and reception units 31. In this case, data transmission and reception using the plurality of lanes is performed between each set of the transmission unit 22 and the reception unit 31.

Transmission and reception of data between the transmission unit 22 and the reception unit 31 is performed according to, for example, the SLVS-EC standard.

In the SLVS-EC standard, an application layer (Application Layer), a link layer (LINK Layer), and a physical layer (PHY Layer) are defined according to the content of signal processing. The signal processing of each layer is performed by the transmission unit 22 that is a transmitting side (Tx) and the reception unit 31 that is a receiving side (Rx).

Although details will be described later, in the link layer, signal processing for achieving the following functions is basically performed.

1. Pixel data-byte data conversion
2. Error correction of payload data
3. Transmission of packet data and auxiliary data
4. Error correction of payload data using packet footer
5. Lane management
6. Protocol management for packet generation

On the other hand, in the physical layer, signal processing for achieving the following functions is basically performed.

1. Generation and extraction of control code
2. Bandwidth control
3. Control of skew between lanes
4. Arrangement of symbols
5. Symbol coding for bit synchronization
6. SERializer/DESerializer (SERDES)
7. Generation and reproduction of clock
8. Transmission of Scalable Low Voltage Signaling (SLVS) signal

In the transmission unit 22 of Fig. 1, a signal processing unit that performs signal processing of the link layer on the transmitting side and a signal processing unit that performs signal processing of the physical layer on the transmitting side are separately provided.

Furthermore, in the reception unit 31, a signal processing unit that performs signal processing of the physical layer on the receiving side and a signal processing unit that performs signal processing of the link layer on the receiving side are separately provided.

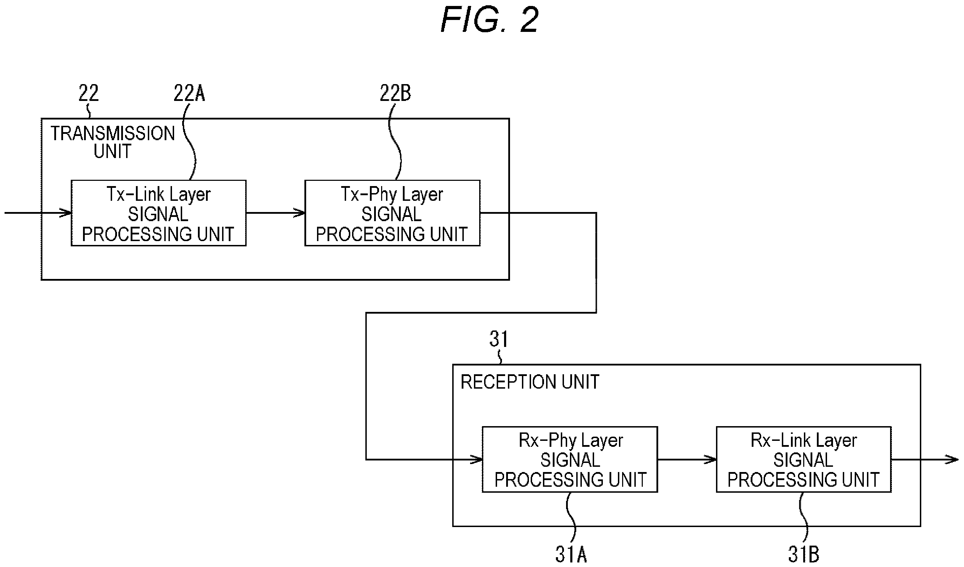

Fig. 2 is a block diagram illustrating a configuration example of the transmission unit 22 and the reception unit 31.

As illustrated in Fig. 2, the transmission unit 22 has a Tx-Link Layer signal processing unit 22A and a Tx-Phy Layer signal processing unit 22B. Furthermore, the reception unit 31 has an Rx-Phy Layer signal processing unit 31A and an Rx-Link Layer signal processing unit 31B. Pixel data output from the image sensor 11 is input to the Tx-Link Layer signal processing unit 22A as data to be transmitted.

The Tx-Link Layer signal processing unit 22A of the transmission unit 22 performs signal processing of the link layer on the data to be transmitted. In the Tx-Link Layer signal processing unit 22A, in addition to the above-described processing, at least a process of generating a packet for storing the data to be transmitted and a process of distributing the generated packet to a plurality of lanes are performed. The Tx-Link Layer signal processing unit 22A outputs a packet storing data to be transmitted.

The Tx-Phy Layer signal processing unit 22B performs signal processing of the physical layer on the packet supplied from the Tx-Link Layer signal processing unit 22A. In the Tx-Phy Layer signal processing unit 22B, processing including a process of inserting a control code into packets distributed to each lane is performed in parallel for each lane. A data stream of each lane is output from the Tx-Phy Layer signal processing unit 22B and transmitted to the reception unit 31.

The Rx-Phy Layer signal processing unit 31A of the reception unit 31 receives a data stream transmitted from the Tx-Phy Layer signal processing unit 22B of the transmission unit 22, and performs signal processing of the physical layer on the received data stream. In the Rx-Phy Layer signal processing unit 31A, in addition to the above-described processing, processing including a symbol synchronization process and control code removal is performed in parallel for each lane. From the Rx-Phy Layer signal processing unit 31A, a data stream constituted of packets storing data to be transmitted is output using a plurality of lanes.

The Rx-Link Layer signal processing unit 31B performs signal processing of the link layer on the data stream of each lane supplied from the Rx-Phy Layer signal processing unit 31A. In the Rx-Link Layer signal processing unit 31B, at least processing of integrating the data streams of a plurality of lanes into one series of data and processing of acquiring the packets constituting the data stream are performed. The Rx-Link Layer signal processing unit 31B outputs data to be transmitted extracted from the packet.

Transmission and reception of signals between the Tx-Link Layer signal processing unit 22A and the Tx-Phy Layer signal processing unit 22B in the transmission unit 22 are performed according to specifications regarding the interface between the link layer and the physical layer. For example, as the specifications regarding the interface between two signal processing units on the transmitting side, specifications based on the link layer and specifications based on the physical layer are defined separately.

Similarly, transmission-reception of signals between the Rx-Phy Layer signal processing unit 31A and the Rx-Link Layer signal processing unit 31B in the reception unit 31 are performed according to specifications regarding the interface between the link layer and the physical layer. For example, as the specifications regarding the interface between two signal processing units on the receiving side, specifications based on the link layer and specifications based on the physical layer are defined separately.

It is also possible to define specifications regarding such interface between the link layer and the physical layer in the SLVS-EC standard.

<Phy Protocol Interface on transmitting side>

- Specifications based on physical layer

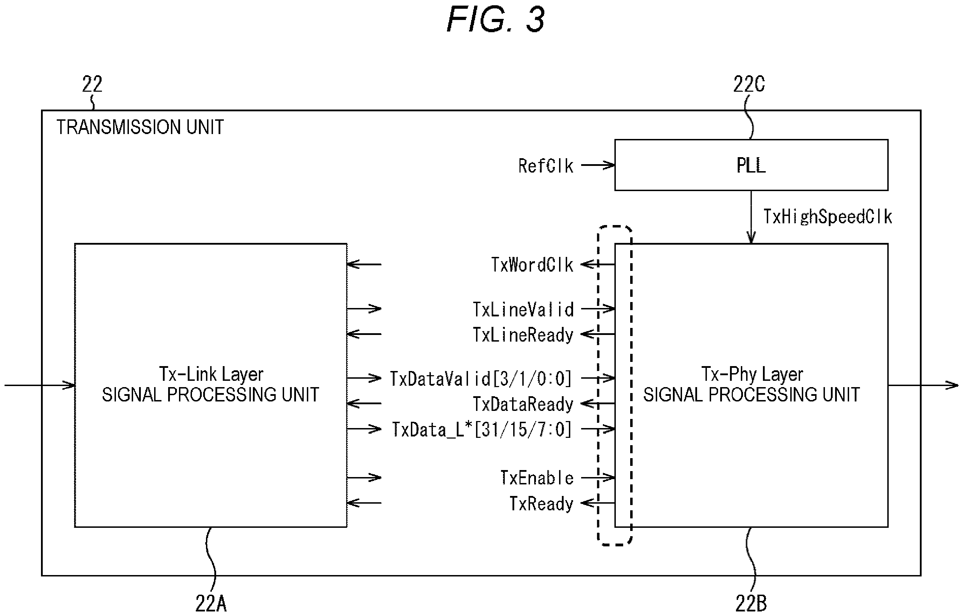

Fig. 3 is a diagram illustrating an example of input and output of the Tx-Phy Layer signal processing unit 22B of the transmission unit 22.

A signal input to each port and a signal output from each port of the Tx-Phy Layer signal processing unit 22B indicated by enclosing with a dashed line are defined. The Tx-Link Layer signal processing unit 22A is provided with a plurality of ports in a form corresponding to respective ports on the Tx-Phy Layer signal processing unit 22B side.

Note that the transmission unit 22 is provided with a phase locked loop (PLL) 22C. In the PLL 22C, a high-speed clock for Data transfer is generated on the basis of a reference clock. The high-speed clock for Data transfer generated in the PLL 22C is input to a port TxHighSpeedClk of the Tx-Phy Layer signal processing unit 22B.

A Word clock is output from a port TxWordClk. The Word clock output from the port TxWordClk is input to a corresponding port of the Tx-Link Layer signal processing unit 22A.

A Packet Data Transfer request output from a predetermined port of the Tx-Link Layer signal processing unit 22A is input to a port TxLineValid.

A Packet Data Transfer status notification is output from a port TxLineReady. The Packet Data Transfer status notification output from the port TxLineReady is input to a corresponding port of the Tx-Link Layer signal processing unit 22A.

A Packet Data Valid output from a predetermined port of the Tx-Link Layer signal processing unit 22A is input to a port TxDataValid.

A Packet data output status notification is output from a port TxDataReady. The Packet data output status notification output from the port TxDataReady is input to a corresponding port of the Tx-Link Layer signal processing unit 22A.

Packet Data output from a predetermined port of the Tx-Link Layer signal processing unit 22A is input to a port TxData_L.

An activation request for the physical layer output from a predetermined port of the Tx-Link Layer signal processing unit 22A is input to a port TxEnable.

A Phy status notification is output from a port TxReady. The Phy status notification output from the port TxReady is input to a corresponding port of the Tx-Link Layer signal processing unit 22A.

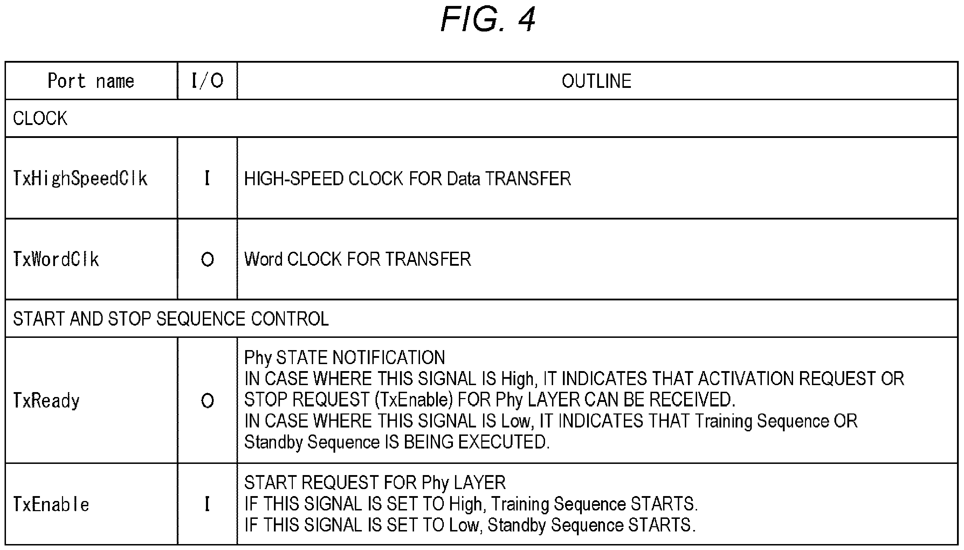

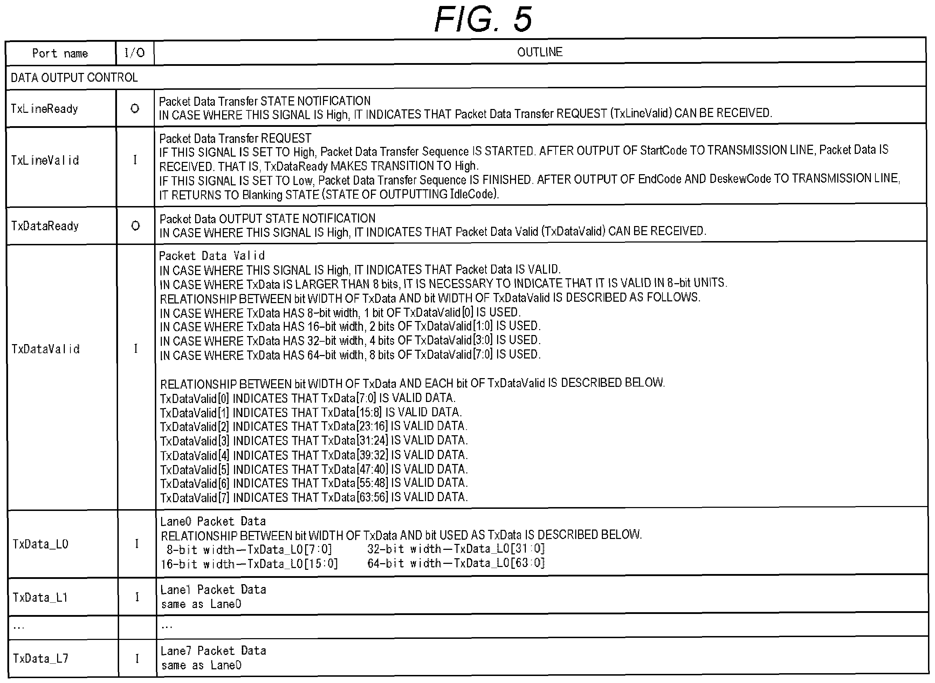

Figs. 4 and 5 are diagrams illustrating an outline of input and output of respective ports of the Tx-Phy Layer signal processing unit 22B.

As illustrated in Fig. 4, the port TxHighSpeedClk and the port TxWordClk are ports used for clock input and output.

A clock input to the port TxHighSpeedClk is a high-speed clock for Data transfer. The high-speed clock for Data transfer is used in the Tx-Phy Layer signal processing unit 22B to transmit bits of high-speed data via the lanes between the transmission unit 22 and the reception unit 31.

The Word clock output from the port TxWordClk is used in the Tx-Link Layer signal processing unit 22A to synchronize a SLVS-EC Phy Protocol Interface (PPI) signal. The SLVS-EC PPI signal on the transmission unit 22 side is each signal illustrated in Figs. 4 and 5.

The port TxReady and the port TxEnable are ports used to control a start and stop sequence.

As will be described later, a Training Sequence, which is an activation sequence, is performed by the Tx-Phy Layer signal processing unit 22B at a predetermined timing such as before starting transmission of the data to be transmitted. Furthermore, a Standby Sequence, which is a stop sequence, is performed by the Tx-Phy Layer signal processing unit 22B at a predetermined timing such as before stopping the transmission of data.

If the Phy status notification output from the port TxReady is High, it indicates that an activation request or a stop request for the physical layer can be received by the port TxEnable. Furthermore, if the Phy status notification is Low, it indicates that the Training Sequence or Standby Sequence is being executed.

If the activation request for the physical layer input to the port TxEnable is High, it indicates to start the Training Sequence. Furthermore, if the activation request for the physical layer is Low, it indicates to start the Standby Sequence.

As illustrated in Fig. 5, the port TxLineReady, port TxLineValid, port TxDataReady, port TxDataValid, and ports TxData _L0 to L7 are ports used for output control of data.

If the Packet Data Transfer status notification output from the port TxLineReady is High, it indicates that the Packet Data Transfer request can be received at the port TxLineValid.

If the Packet Data Transfer request input to the port TxLineValid is High, it indicates to start a Packet Data Transfer Sequence. In the Packet Data Transfer Sequence, after a StartCode is output from the Tx-Phy Layer signal processing unit 22B to the transmission line, Packet Data output from the Tx-Link Layer signal processing unit 22A is received by the Tx-Phy Layer signal processing unit 22B.

On the other hand, if the Packet Data Transfer request is Low, it indicates to finish the Packet Data Transfer Sequence. After an End Code and a Deskew Code are output from the Tx-Phy Layer signal processing unit 22B to the transmission lines, the state of the Tx-Phy Layer signal processing unit 22B becomes a Blanking state (a state of outputting an IdleCode to the transmission lines).

If the Packet data output status notification output from the port TxDataReady is High, it indicates that the Packet Data Valid can be received at the port TxDataValid.

If the Packet Data Valid input to the port TxDataValid is High, it indicates that the Packet Data is valid.

In a case where the bit width of the TxData (Packet Data) is wider than eight bits, it is necessary to indicate which eight bits are valid data in 8-bit units. There are four types of bit widths of the TxData, for example, eight bits, 16 bits, 32 bits, and 64 bits.

In a case where the bit width of the TxData is eight bits, one bit of the TxDataValid[0] is used as the Packet Data Valid.

In a case where the bit width of the TxData is 16 bits, two bits of the TxDataValid[1: 0] are used as the Packet Data Valid.

In a case where the bit width of the TxData is 32 bits, four bits of the TxDataValid[3: 0] are used as the Packet Data Valid.

In a case where the bit width of the TxData is 64 bits, eight bits of the TxDataValid[7: 0] are used as the Packet Data Valid.

If the zeroth bit (TxDataValid[0]) of the Packet Data Valid is High, it represents that eight bits of the TxData[7: 0] are valid.

If the first bit (TxDataValid[1]) of the Packet Data Valid is High, it represents that eight bits of the TxData[15: 8] are valid.

If the second bit (TxDataValid[2]) of the Packet Data Valid is High, it represents that eight bits of the TxData[23: 16] are valid.

If the third bit (TxDatavalid[3]) of the Packet Data Valid is High, it represents that eight bits of the TxData[31:

24] are valid.

If the fourth bit (TxDatavalid[4]) of the Packet Data Valid is High, it represents that eight bits of the TxData[39: 32] are valid.

If the fifth bit (TxDatavalid[5]) of the Packet Data Valid is High, it represents that eight bits of the TxData[47: 40] are valid.

If the sixth bit (TxDatavalid[6]) of the Packet Data Valid is High, it represents that eight bits of the TxData[55: 48] are valid.

If the seventh bit (TxDatavalid[7]) of the Packet Data Valid is High, it represents that eight bits of the TxData[63: 56] are valid.

Packet Data input to the port TxData_L0 is Packet Data of Lane 0.

In a case where the bit width of the TxData is eight bits, eight bits of the TxData_L0 [7: 0] are used as the TxData.

In a case where the bit width of the TxData is 16 bits, 16 bits of the TxData_L0 [15: 0] are used as the TxData.

In a case where the bit width of the TxData is 32 bits, 32 bits of the TxData_L0 [31: 0] are used as the TxData.

In a case where the bit width of the TxData is 64 bits, 64 bits of the TxData_L0 [63: 0] are used as the TxData.

Packet Data input to the ports TxData L1 to L7 is Packet Data of Lane 1 to Lane 7, respectively. Packet Data with a predetermined bit width is input to the ports TxData_L1 to L7 similarly to the port TxData_L0.

- Specifications based on link layer

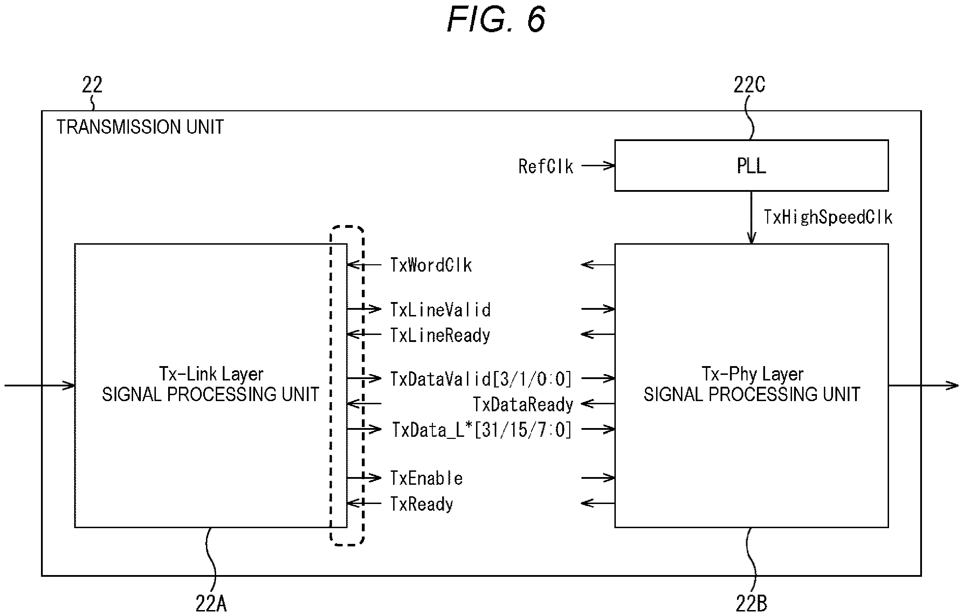

Fig. 6 is a diagram illustrating an example of input and output of the Tx-Link Layer signal processing unit 22A of the transmission unit 22.

A signal input to each port and a signal output from each port of the Tx-Link Layer signal processing unit 22A indicated by enclosing with a dashed line are defined. The Tx-Link Layer signal processing unit 22A is provided with a plurality of ports in a form corresponding to respective ports on the Tx-Phy Layer signal processing unit 22B side.

The above-mentioned signals output from the respective ports of the Tx-Phy Layer signal processing unit 22B are input to respective ports of the Tx-Link Layer signal processing unit 22A. Furthermore, the above-mentioned signals to be input to the respective ports of the Tx-Phy Layer signal processing unit 22B are output from respective ports of the Tx-Link Layer signal processing unit 22A. The input and output of the Tx-Link Layer signal processing unit 22A correspond to the input and output of the Tx-Phy Layer signal processing unit 22B. Duplicate descriptions will be omitted as appropriate.

That is, the Word clock output from the Tx-Phy Layer signal processing unit 22B is input to a port TxWordClk.

A Packet Data Transfer request is output from a port TxLineValid.

The Packet Data Transfer status notification is input to a port TxLineReady.

Packet Data Valid is output from a port TxDataValid.

The Packet data output status notification is input to a port TxDataReady.

Packet Data is output from a port TxData_L.

An activation request for the physical layer is output from a port TxEnable.

The Phy status notification is input to a port TxReady.

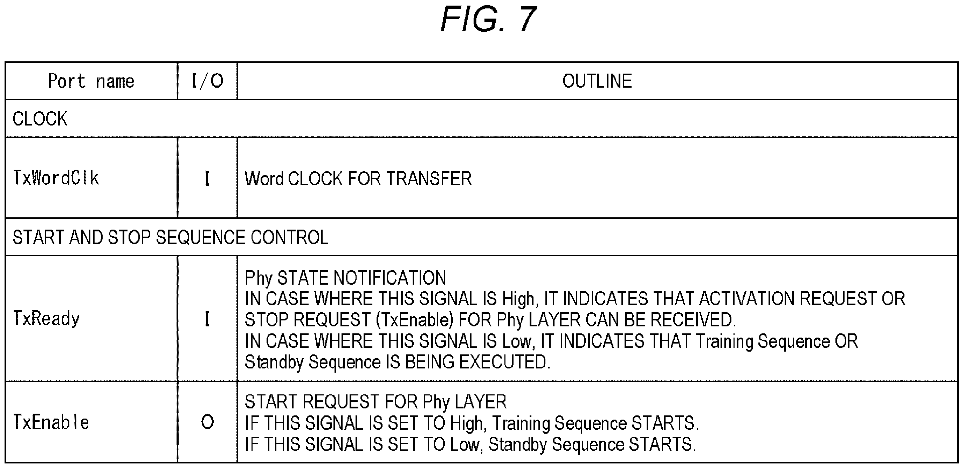

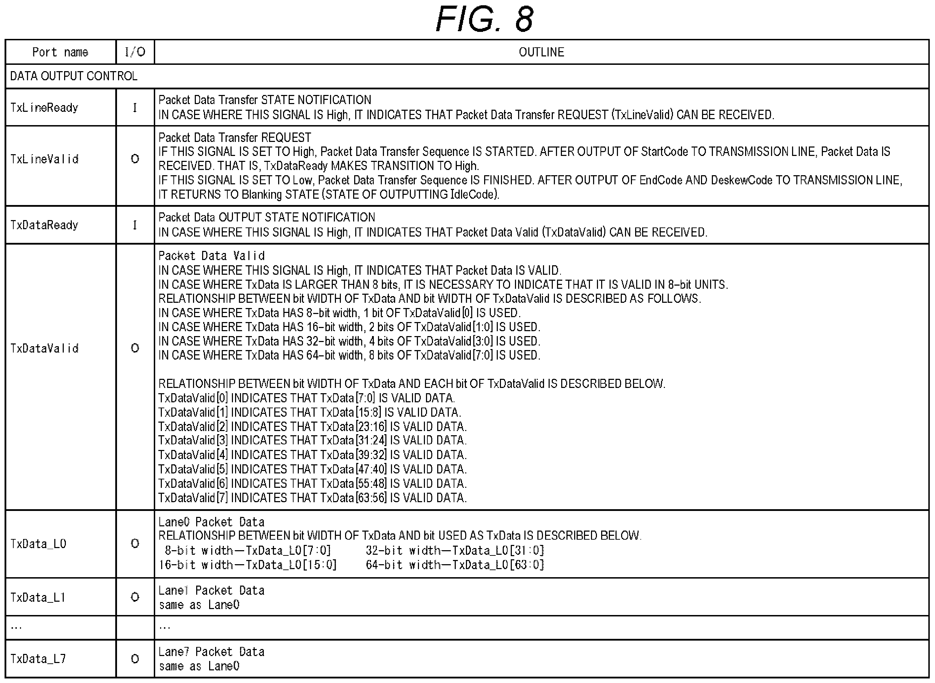

Figs. 7 and 8 are diagrams illustrating an outline of input and output of respective ports of the Tx-Link Layer signal processing unit 22A.

Descriptions presented in Figs. 7 and 8 are basically similar to the descriptions in Figs. 4 and 5 except that an input (I) in the Tx-Phy Layer signal processing unit 22B becomes an output (O) in the Tx-Link Layer signal processing unit 22A, and an output (O) in the Tx-Phy Layer signal processing unit 22B is an input (I) in the Tx-Link Layer signal processing unit 22A. Note that the port TxHighSpeedClk is not provided in the Tx-Link Layer signal processing unit 22A.

- State transition

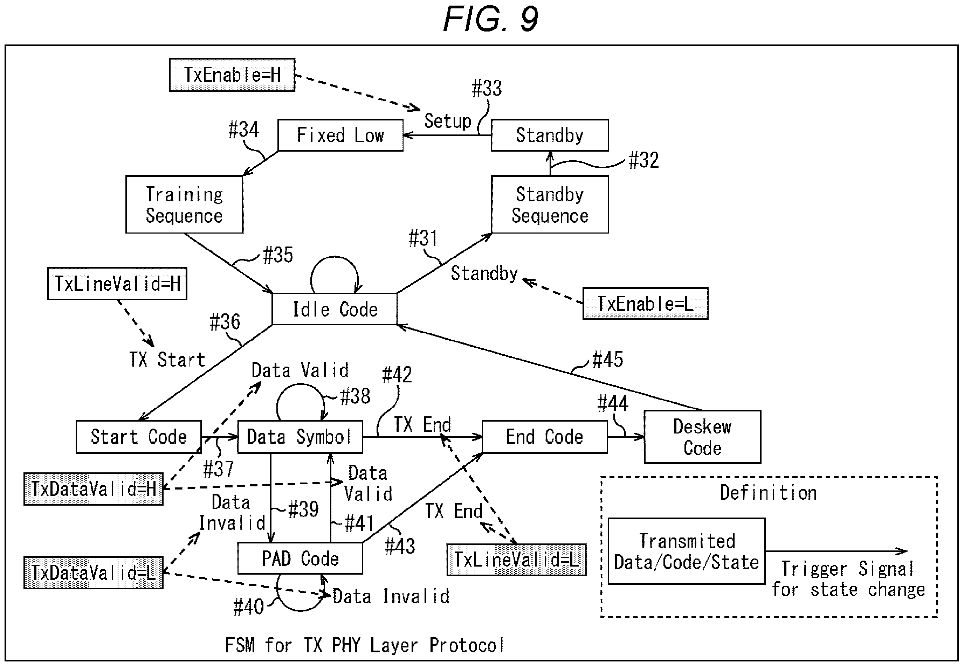

Fig. 9 is a diagram illustrating an example of state transition of the physical layer.

Each white block in Fig. 9 represents a state of the physical layer. An arrow from one state to another state represents a state transition that occurs when a trigger signal illustrated near each arrow is output from the link layer. Main state transitions will be described. Details of control codes such as Idle Code will be described later.

For example, in a case where a Standby is output from the link layer in a state during transmission of an Idle Code illustrated in the center, the state of the physical layer makes a transition to a state of Standby Sequence as indicated ahead of arrow #31. An activation request for the physical layer indicating Low input to the port TxEnable corresponds to the Standby and is defined as a trigger signal for causing a transition to the state of Standby Sequence.

The Standby Sequence is a process for causing the states of the transmission unit 22 and the reception unit 31 to be a Standby state, or a signal used for this process.

In a case where the Standby Sequence has been finished, the state of each lane becomes the Standby state as indicated ahead of arrow #32. A state where the state of each lane is High-Z corresponds to the Standby state. In a case where the High-Z state adversely affects the receiving side, it may be changed to a Fixed Low state.

In a case where a Setup is output from the link layer while each lane is in the Standby state, the state of the physical layer is a Fixed Low state (a state of outputting a Low signal from each lane) as indicated ahead of arrow #33. An activation request for the physical layer indicating High input to the port TxEnable corresponds to the Setup and is defined as a trigger signal for causing a transition to the Fixed Low state.

After being in the Fixed Low state, the state of the physical layer becomes a state of the Training Sequence, as indicated ahead of arrow #34.

The training sequence is a process performed in the reception unit 31 to reproduce a clock by performing CDR, establish synchronization, and correct a Data Skew between lanes, or a signal used for the process.

In a case where the Training Sequence has been finished, the state of the physical layer returns to the state of transmitting the Idle Code, as indicated ahead of arrow #35.

In a case where a TX Start is output from the link layer in the state during transmission of the Idle Code, the state of the physical layer makes a transition to a state of outputting a Start Code, as indicated ahead of arrow #36. The Packet Data Transfer request indicating High input to the port TxLineValid corresponds to the TX Start and is defined as a trigger signal for causing a transition to the state of outputting the Start Code.

After the output of the Start Code is finished, the state of the physical layer becomes a state of outputting a Data Symbol as indicated ahead of arrow #37. The Data Symbol is a signal obtained by subjecting Packet Data to a predetermined process such as 8B10B encoding.

As indicated by arrow #38, Packet Data is output from the Tx-Phy Layer signal processing unit 22B to the transmission line while Data Valid is output from the link layer. Packet Data Valid indicating High input to the port TxDataValid corresponds to the Data Valid and is defined as a trigger signal for outputting Packet Data.

In a case where the Data Invalid is output from the link layer in a state during transmission of Packet Data, the state of the physical layer makes a transition to a state of outputting a Pad Code as indicated ahead of arrow #39. Packet Data Valid indicating Low input to the port TxDataValid corresponds to the Data Invalid and is defined as a trigger signal for causing a transition to the state of outputting the Pad Code.

As indicated by arrow #40, the Pad Code is output from the Tx-Phy Layer signal processing unit 22B to the transmission line while Data Invalid is output from the link layer.

In a case where Data Valid is output from the link layer in a state during transmission of the Pad Code, the state of the physical layer returns to the state of outputting the Data Symbol (Packet Data) as indicated ahead of arrow #41.

In a case where a TX End is output from the link layer in a state during transmission of Packet Data, the state of the physical layer makes a transition to a state of outputting an End Code, as indicated ahead of arrow #42. The Packet Data Transfer request indicating Low input to the port TxLineValid corresponds to the TX End and is defined as a trigger signal for causing a transition to the state of outputting the End Code.

In a case where the TX End is output from the link layer in a state during transmission of the Pad Code, similarly, the state of the physical layer makes a transition to the state of outputting the End Code as indicated ahead of arrow #43.

In a case where the output of the End Code has been finished, the state of the physical layer makes a transition to a state of outputting a Deskew Code as indicated ahead of arrow #44.

In a case where the output of the Deskew Code has been finished, the state of the physical layer returns to the state of transmitting the Idle Code as indicated ahead of arrow #45.

The respective signals described above are used to implement the transitions as described above.

It is possible to express two trigger signals for Standby and Setup by the activation request for the physical layer, which is one signal input to the port TxEnable.

Furthermore, it is possible to express two trigger signals for TX Start and TX End by the Packet Data Transfer request, which is one signal input to the port TxLineValid.

Moreover, it is possible to express two trigger signals for Data Valid and Data Invalid by Packet Data Valid, which is one signal input to the port TxDataValid.

With such definitions performed, the Tx-Link Layer signal processing unit 22A as the link layer can control output of the Training Sequence and Standby Sequence, output of the Start Code and End Code, and output of the Pad Code of the SLVS-EC standard by using the trigger signals. The Tx-Link Layer signal processing unit 22A can control output of the Pad Code during data transfer, which is a feature of the SLVS-EC standard, by using a trigger signal.

A state of the physical layer (state of the Tx-Phy Layer signal processing unit 22B) is controlled according to the state transition diagram as illustrated in Fig. 9.

- Timing chart

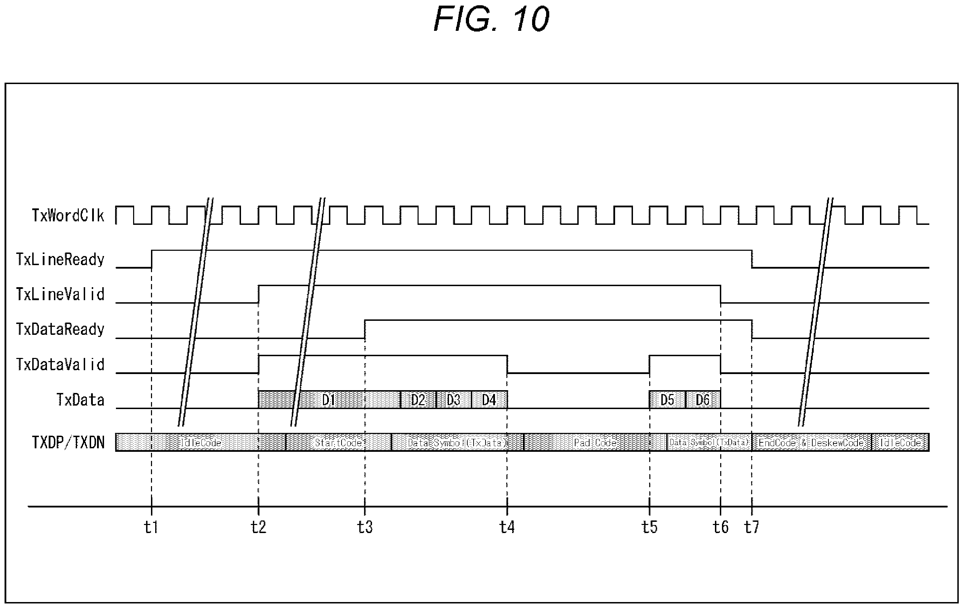

Fig. 10 is a diagram illustrating an example of a timing chart of signals.

The top row of Fig. 10 illustrates the Word clock output from the port TxWordClk of the Tx-Phy Layer signal processing unit 22B. The Word clock serves as a reference for timing of transmission and reception of each signal.

The bottom row of Fig. 10 illustrates data output from ports TXDP/TXDN of the Tx-Phy Layer signal processing unit 22B to the transmission line. The ports TXDP/TXDN are two ports used to output differential signals.

In a case where the training sequence has been completed, the state of the Tx-Link Layer signal processing unit 22A becomes a state where Packet Data can be output after a Blanking state.

As illustrated in the second row, at time t1, the Packet Data Transfer status notification output from the port TxLineReady of the Tx-Phy Layer signal processing unit 22B becomes High.

The Packet Data Transfer Sequence is started at time t2 when output of the port TxLineReady is High and the Packet Data Transfer request input to the port TxLineValid of the Tx-Phy Layer signal processing unit 22B becomes High as illustrated in the third row. The Start Code is output to the transmission line at the timing at time t2 and thereafter.

Furthermore, as illustrated in the fifth row, at time t2, the Packet Data Valid input to the port TxDataValid of the Tx-Phy Layer signal processing unit 22B becomes High. As illustrated in the sixth row, Packet Data is input from the Tx-Link Layer signal processing unit 22A to the Tx-Phy Layer signal processing unit 22B.

Thus, the TxData input from the Tx-Link Layer signal processing unit 22A after the output of the StartCode is completed can be received by the Tx-Phy Layer signal processing unit 22B.

As illustrated in the fourth row, at time t3 after it becomes possible to receive Packet Data, the Packet data output status notification output from the port TxDataReady of the Tx-Phy Layer signal processing unit 22B becomes High.

At time t3 and thereafter, output of the port TxDataReady is High and input to the port TxDataValid is High. The TxData in this state is valid data.

Thereafter, TxData in a state where input to the port TxLineValid is High, output of the port TxDataReady is High, and input to the port TxDataValid is High is received by the Tx-Phy Layer signal processing unit 22B and output to the transmission line.

In the example of Fig. 10, packets D1 to D4, which are TxData input to the Tx-Phy Layer signal processing unit 22B between time t3 and time t4, are received and sequentially output to the transmission line as the Data Symbol (TxData).

As illustrated in the fifth row, in a case where the input of valid data has been finished at time t4, the Packet Data Valid input to the port TxDataValid of the Tx-Phy Layer signal processing unit 22B becomes Low. Output of the Pad Code starts at the timing at time t4 and thereafter.

In a case where the Packet Data Valid input to the port TxDataValid of the Tx-Phy Layer signal processing unit 22B becomes High at time t5 when the Pad Code is output, packets D5 and D6 that are the TxData are received and sequentially output as the Data Symbol to the transmission line.

As illustrated in the third row, in a case where the Packet Data Transfer request input to the port TxLineValid of the Tx-Phy Layer signal processing unit 22B becomes Low at time t6, the Packet Data Transfer Sequence ends.

At time t7, the output of the port TxDataReady becomes Low, and at the timing at that time and thereafter, the End Code and Deskew Code are output. Thereafter, it becomes a state that the Idle Code is output.

<Phy Protocol Interface on receiving side>

- Specifications based on physical layer

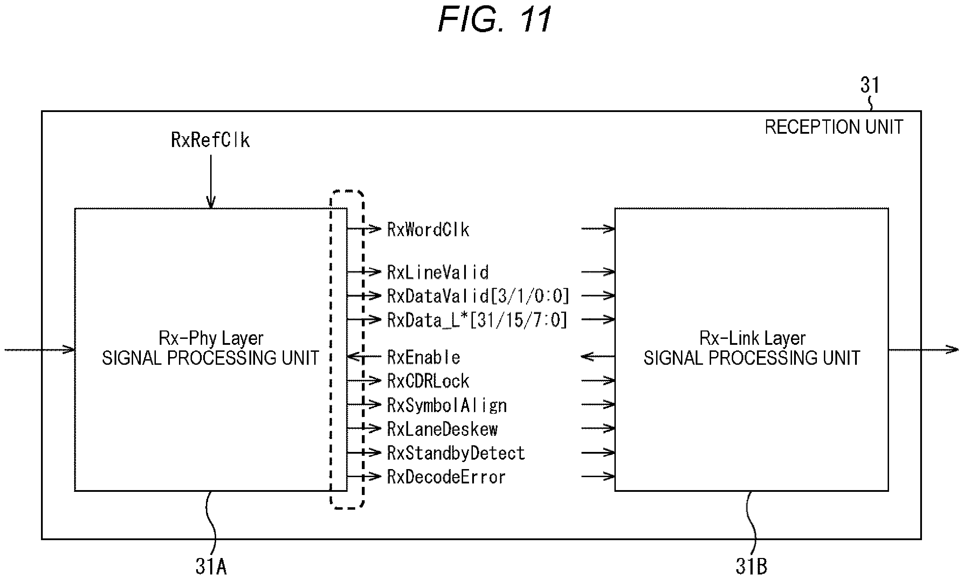

Fig. 11 is a diagram illustrating an example of input and output of the Rx-Phy Layer signal processing unit 31A of the reception unit 31.

A signal input to each port and a signal output from each port on the Rx-Phy Layer signal processing unit 31A side indicated by enclosing with a dashed line are defined. The Rx-Link Layer signal processing unit 31B is provided with a plurality of ports in a form corresponding to respective ports on the Rx-Phy Layer signal processing unit 31A side.

A reference clock is input to a port RxRefClk.

A Word clock is output from a port RxWordClk. The Word clock output from the port RxWordClk is input to a corresponding port of the Rx-Link Layer signal processing unit 31B.

A Packet Data Transfer Sequence reception flag is output from a port RxLineValid. The Packet Data Transfer Sequence reception flag output from the port RxLineValid is input to a corresponding port of the Rx-Link Layer signal processing unit 31B.

Packet Data Valid is output from a port RxDataValid. The Packet Data Valid output from the port RxDataValid is input to a corresponding port of the Rx-Link Layer signal processing unit 31B.

Packet Data is output from a port RxData L. The Packet Data output from the port RxData L is input to a corresponding port of the Rx-Link Layer signal processing unit 31B.

An activation request for the physical layer output from a predetermined port of the Rx-Link Layer signal processing unit 31B is input to a port RxEnable.

CDR Lock completion is output from a port RxCDRLock. The CDR Lock completion output from the port RxCDRLock is input to a corresponding port of the Rx-Link Layer signal processing unit 31B.

Symbol Alignment completion is output from a port RxSymbolAlign. The Symbol Alignment completion output from the port RxSymbolAlign is input to a corresponding port of Rx-Link Layer signal processing unit 31B.

Inter-Lane Skew Alignment completion is output from a port RxSkewAlign. The inter-Lane Skew Alignment output from the port RxSkewAlign is input to a corresponding port of the Rx-Link Layer signal processing unit 31B.

Standby Sequence Detect is output from a port RxStandbyDetect. The Standby Sequence Detect output from the port RxStandbyDetect is input to a corresponding port of the Rx-Link Layer signal processing unit 31B.

A 10B8B decoding error detection is output from a port RxDecodeError. The 10B8B decoding error detection output from the port RxDecodeError is input to a corresponding port of the Rx-Link Layer signal processing unit 31B.

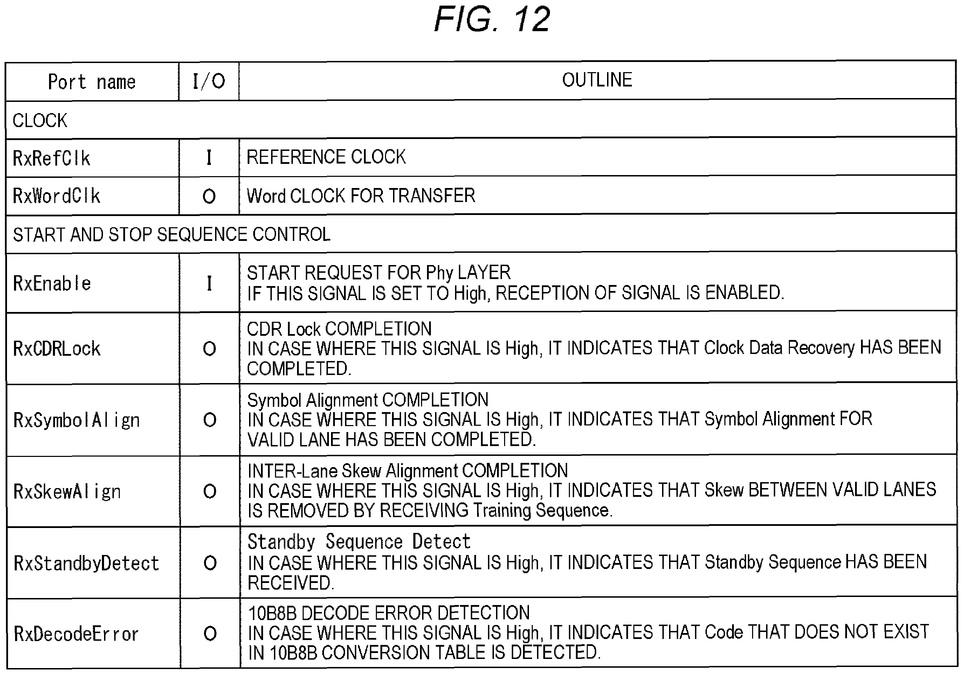

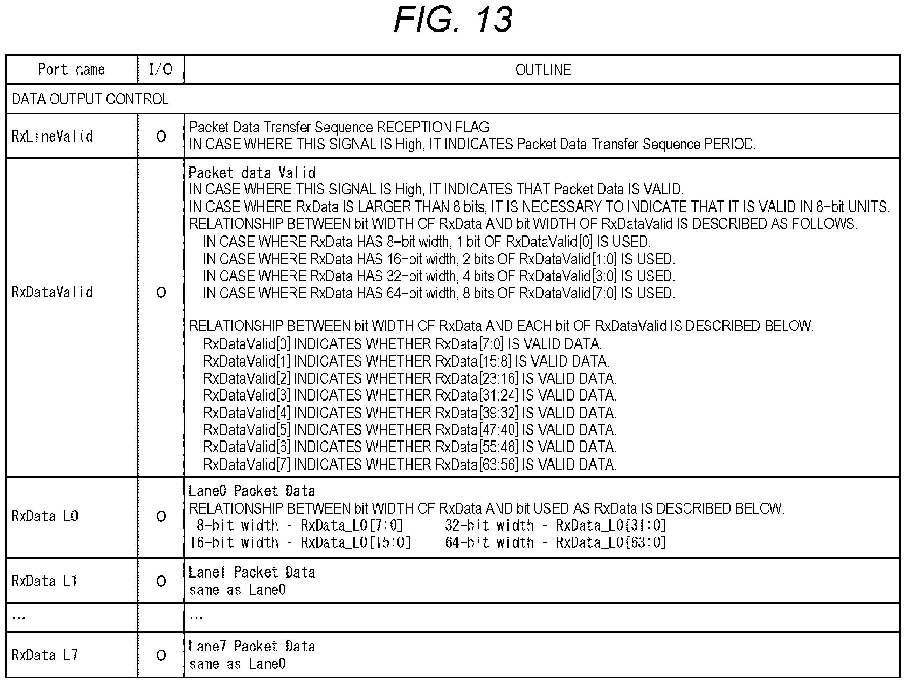

Figs. 12 and 13 are diagrams illustrating an outline of input and output of respective ports of the Rx-Phy Layer signal processing unit 31A.

As illustrated in Fig. 12, the port RxRefClk and the port RxWordClk are ports used for clock input and output.

A reference clock is input to the port RxRefClk.

The Word clock for transfer output from the port RxWordClk is used in the Rx-Link Layer signal processing unit 31B to synchronize an SLVS-EC PPI signal. The SLVS-EC PPI signal referred to on the reception unit 31 side is each signal illustrated in Figs. 12 and 13.

The port RxEnable, port RxCDRLock, port RxSymbolAlign, port RxSkewAlign, port RxStandbyDetect, and port RxDecodeError are ports used to control the start and stop sequence. The port RxCDRLock, port RxSymbolAlign, port RxSkewAlign, port RxStandbyDetect, and port RxDecodeError are also used for notification of the state of the physical layer.

If the activation request for the physical layer input to the port RxEnable is High, it indicates to enable reception of signals of Training Sequence and the like.

If the CDR Lock completion output from the port RxCDRLock is High, it indicates that Clock Data Recovery has been completed.

If the Symbol Alignment completion output from port RxSymbolAlign is High, it indicates that the Symbol Alignment for the effective lane has been completed.

If the Inter-Lane Skew Alignment completion output from the port RxSkewAlign is High, it indicates that the Data Skew between effective lanes has been corrected by receiving the Training Sequence.

If the Standby Sequence Detect output from the port RxStandbyDetect is High, it indicates that the Standby Sequence has been received.

If the 10B8B decode error detection output from the port RxDecodeError is High, it indicates that a Code that does not exist in the 10B8B conversion table has been detected.

As illustrated in Fig. 13, the port RxLineValid, port RxDataValid, and ports RxData _L0 to L7 are ports used for output control of data.

If the Packet Data Transfer Sequence reception flag output from the port RxLineValid is High, it indicates that it is the period of the Packet Data Transfer Sequence.

If Packet Data Valid output from the port RxDataValid is High, it indicates that the Packet Data is valid.

In a case where the bit width of RxData (Packet Data) is wider than eight bits, it is necessary to indicate which eight bits are valid data in 8-bit units. There are four types bit widths of RxData, eight bits, 16 bits, 32 bits, and 64 bits.

In a case where the bit width of RxData is eight bits, one bit of the RxDataValid[0] is used as the Packet Data Valid.

In a case where the bit width of RxData is 16 bits, two bits of the RxDataValid[1: 0] are used as the Packet Data Valid.

In a case where the bit width of RxData is 32 bits, four bits of the RxDataValid[3: 0] are used as the Packet Data Valid.

In a case where the bit width of RxData is 64 bits, eight bits of RxDataValid[7: 0] are used as the Packet Data Valid.

If the zeroth bit (RxDataValid[0]) of the Packet Data Valid is High, it indicates that eight bits of the RxData[7: 0] are valid.

If the first bit (RxDataValid[1]) of the Packet Data Valid is High, it indicates that eight bits of the RxData[15: 8] are valid.

If the second bit (RxDataValid[2]) of the Packet Data Valid is High, it indicates that eight bits of the RxData[23:16] are valid.

If the third bit (RxDataValid[3]) of the Packet Data Valid is High, it indicates that eight bits of the RxData[31:24] are valid.

If the fourth bit (RxDataValid[4]) of the Packet Data Valid is High, it indicates that eight bits of the RxData[39:32] are valid.

If the fifth bit (RxDataValid[5]) of the Packet Data Valid is High, it indicates that eight bits of the RxData[47:40] are valid.

If the sixth bit (RxDataValid[6]) of the Packet Data Valid is High, it indicates that eight bits of the RxData[55:48] are valid.

If the seventh bit (RxDataValid[7]) of the Packet Data Valid is High, it indicates that eight bits of the RxData[63: 56] are valid.

Packet Data input to the port RxData _L0 is Packet Data of Lane 0.

In a case where the bit width of the RxData is eight bits, eight bits of RxData_L0 [7: 0] are used as the RxData.

In a case where the bit width of the RxData is 16 bits, 16 bits of RxData_L0 [15: 0] are used as the RxData.

In a case where the bit width of the RxData is 32 bits, 32 bits of RxData_L0 [31: 0] are used as the RxData.

In a case where the bit width of the RxData is 64 bits, 64 bits of RxData_L0 [63: 0] are used as the RxData.

Packet Data output from the ports RxData L1 to L7 is Packet Data of Lane 1 to Lane 7, respectively. Packet Data with a predetermined bit width is output from the ports RxData_L1 to L7 similarly to the ports RxData_L0.

- Specifications based on link layer

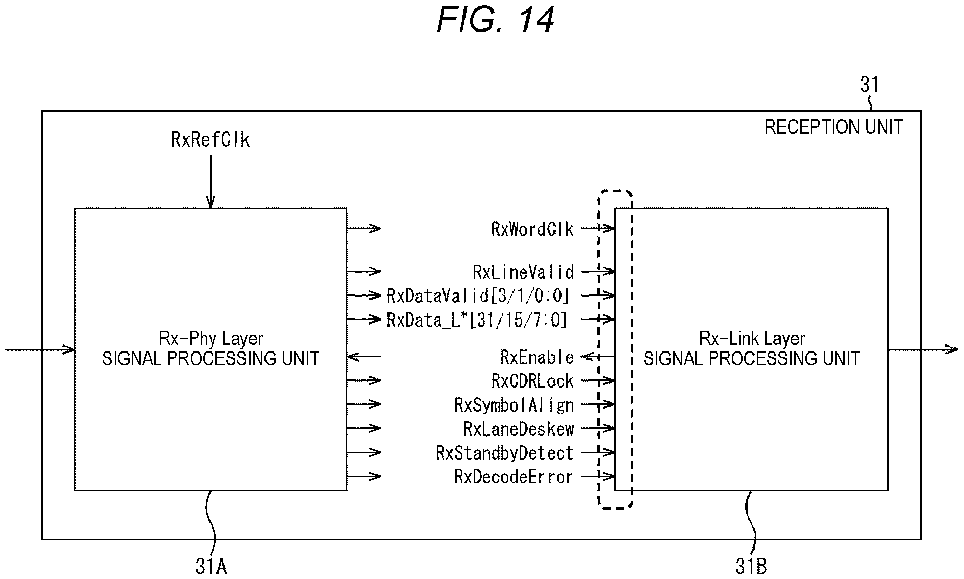

Fig. 14 is a diagram illustrating an example of input and output of the Rx-Link Layer signal processing unit 31B of the reception unit 31.

A signal input to each port and a signal output from each port of the Rx-Link Layer signal processing unit 31B indicated by enclosing with a dashed line are defined. The Rx-Link Layer signal processing unit 31B is provided with a plurality of ports in a form corresponding to respective ports on the Rx-Phy Layer signal processing unit 31A side.

The above-mentioned signals output from the respective ports of the Rx-Phy Layer signal processing unit 31A are input to respective ports of the Rx-Link Layer signal processing unit 31B. Furthermore, the above-mentioned signals to be input to the respective ports of the Rx-Phy Layer signal processing unit 31A are output from respective ports of the Rx-Link Layer signal processing unit 31B. The input and output of the Rx-Link Layer signal processing unit 31B correspond to the input and output of the Rx-Phy Layer signal processing unit 31A. Duplicate descriptions will be omitted as appropriate.

That is, the Word clock output from the Rx-Phy Layer signal processing unit 31A is input to the port RxWordClk.

The Packet Data Transfer Sequence reception flag is input to the port RxLineValid.

Packet Data Valid is input to the port RxDataValid.

Packet Data is input to the port RxData_L.

An activation request for the physical layer is output from the port RxEnable.

The CDR Lock completion is input to the port RxCDRLock.

The Symbol Alignment completion is input to the port RxSymbolAlign.

The Inter-Lane Skew Alignment completion is input to the port RxSkewAlign.

The Standby Sequence Detect is input to the port RxStandbyDetect.

A 10B8B decode error detection is input to the port RxDecodeError.

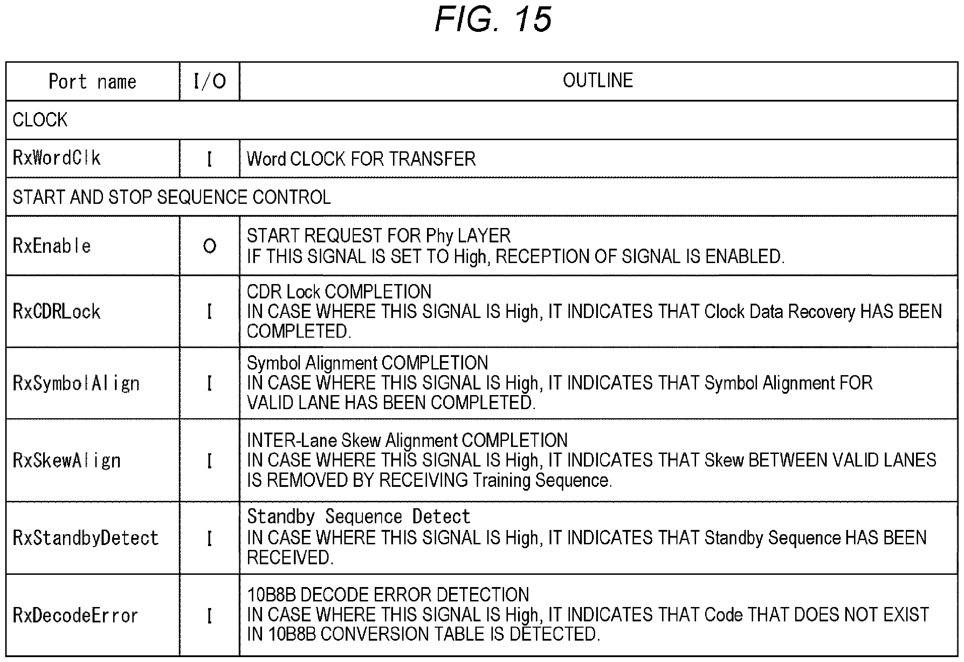

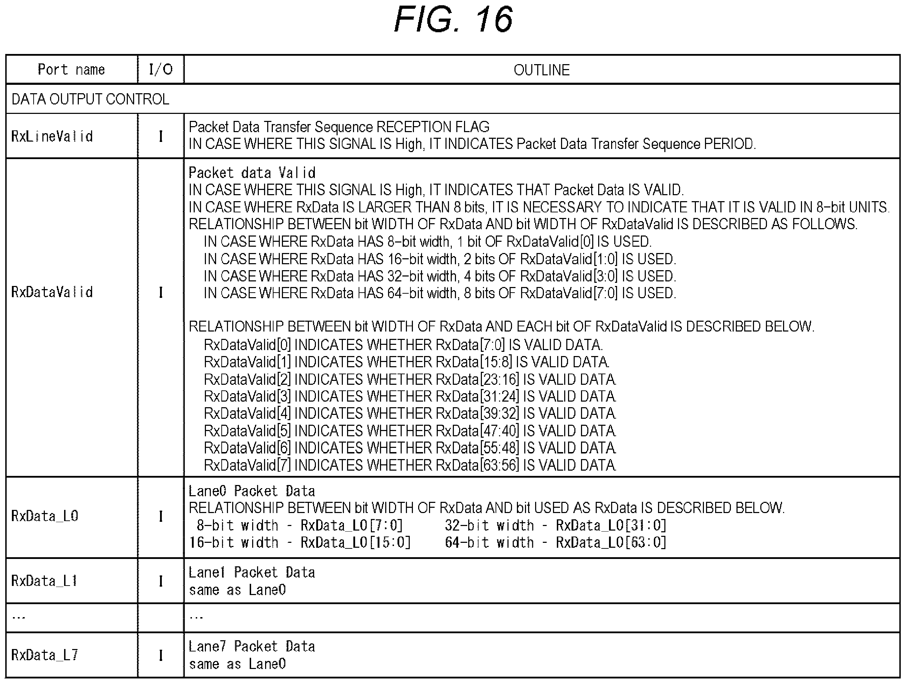

Figs. 15 and 16 are diagrams illustrating an outline of input and output of respective ports of the Rx-Link Layer signal processing unit 31B.

Descriptions represented in Figs. 15 and 16 are basically similar to the descriptions in Figs. 12 and 13 except that an input (I) in the Rx-Phy Layer signal processing unit 31A becomes an output (O) in the Rx-Link Layer signal processing unit 31B, and an output (O) in the Rx-Phy Layer signal processing unit 31A becomes an input (I) in the Rx-Link Layer signal processing unit 31B. Note that the port RxRefClk is not provided in the Rx-Link Layer signal processing unit 31B.

- State transition

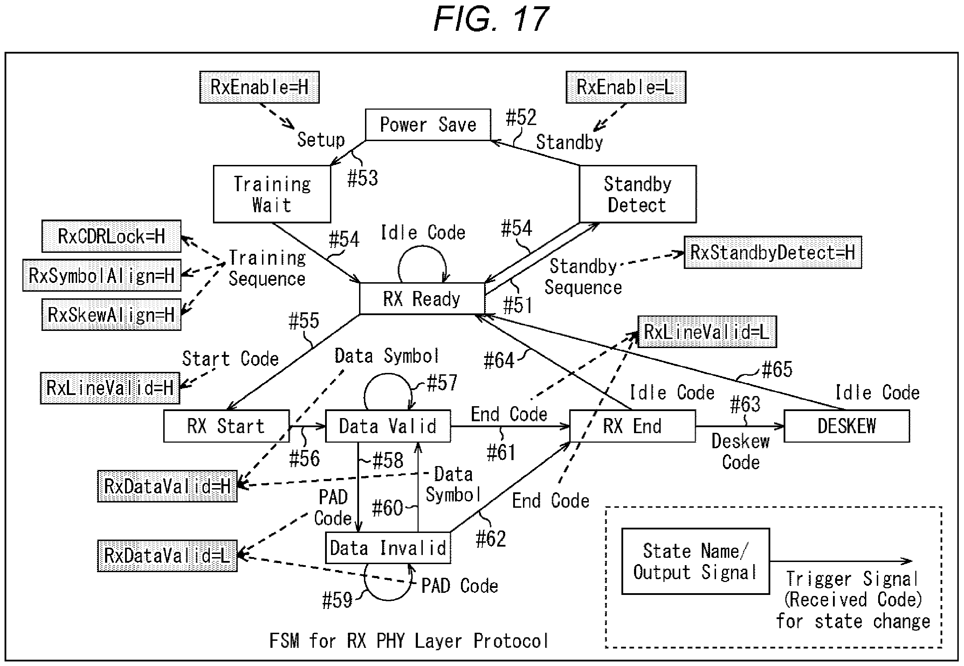

Fig. 17 is a diagram illustrating an example of state transition of the physical layer.

For example, in a case where a Standby Sequence is received in a state of outputting RX Ready illustrated in the center to the link layer, the state of the physical layer makes a transition to a state of outputting a Standby Detect to the link layer as indicated ahead of arrow #51. The Standby Sequence Detect indicating High output from port RxStandbyDetect corresponds to the Standby Detect. The Standby Sequence is defined as a trigger signal for causing a transition to the state of outputting the Standby Detect.

In a case where a Standby is output from the link layer in a state of outputting the Standby Detect, the state of the physical layer makes a transition to a state of Power Save as indicated ahead of arrow #52. An activation request for the physical layer indicating Low input to the port RxEnable corresponds to the Standby and is defined as a trigger signal for causing a transition to the state of Power Save.

In a case where a Setup is output from the link layer in the state of Power Save, the state of the physical layer makes a transition to a state of Training Wait as indicated ahead of arrow #53. An activation request for the physical layer indicating High input to the port RxEnable corresponds to the Setup and is defined as a trigger signal for transition to the state of the Training Wait.

In a case where the Training Sequence is received in the state of Training Wait or the state of Standby Detect, the Training Sequence is performed in the Rx-Phy Layer signal processing unit 31A.

In a case where Clock Data Recovery has been completed by performing the Training Sequence, the CDR Lock completion indicating High is output from the port RxCDRLock.

Furthermore, in a case where the Symbol Alignment of the effective lane has been completed, the symbol Alignment completion indicating High is output from the port RxSymbolAlign.

In a case where the Data Skew correction between effective lanes is performed, the Skew Alignment completion between Lanes indicating High is output from the port RxSkewAlign.

In a case where the Training Sequence has been finished, the state of the physical layer returns from the state of Training Wait or the state of Standby Detect to the state of outputting RX Ready, as indicated ahead of arrow #54.

In a case where a Start Code is received in the state of outputting the RX Ready, the state of the physical layer makes a transition to a state of outputting RX Start to the link layer, as indicated ahead of arrow #55. The Packet Data Transfer Sequence indicating High output from the port RxLineValid corresponds to the RX Start. The Start Code is defined as a trigger signal for causing a transition to the state of outputting the RX Start to the link layer.

After the output of the RX Start is finished, the state of the physical layer becomes a state of receiving the Data Symbol and outputting the Data Valid as indicated ahead of arrow #56.

As indicated by arrow #57, the Data Valid is output from the physical layer while the Data Symbol is being received. The Packet Data Valid indicating High output from the port RxDataValid corresponds to the Data Valid. The Data Symbol is defined as a trigger signal for causing a transition to the state of outputting the Data Valid.

In a case where the Pad Code is received in a state during reception of the Data Symbol, the state of the physical layer makes a transition to a state of outputting Data Invalid to the link layer, as indicated ahead of arrow #58. The Packet Data Valid indicating Low output from the port RxDataValid corresponds to the Data Invalid. The Pad Code is defined as a trigger signal for causing a transition to the state of outputting the Data Invalid to the link layer.

As indicated by arrow #59, the Data Invalid is output from the physical layer while the Pad Code is being received.

In a case where the Data Symbol is received in a state during reception of the Pad Code, the state of the physical layer makes a transition to a state of outputting Data Valid to the link layer, as indicated ahead of arrow #60.

In a case where the End Code is received in a state during reception of the Data Symbol, the state of the physical layer makes a transition to a state of outputting an RX End to the link layer, as indicated ahead of arrow #61. The Packet Data Transfer Sequence reception flag indicating Low output from the port RxLineValid corresponds to the RX End. The End Code is defined as a trigger signal for causing a transition to the state of outputting the RX End to the link layer.

Similarly, in a case where the End Code is received in a state during reception of the Pad Code, the state of the physical layer makes a transition to the state of outputting the RX End to the link layer as indicated ahead of the arrow #62.

In a case where the Deskew Code is received in the state of outputting the RX End, the state of the physical layer makes a transition to a Deskew state as indicated ahead of arrow #63.

In a case where the Idle Code is received in the state of outputting the RX End, the state of the physical layer makes a transition to the state of outputting the RX Ready, as indicated ahead of arrow #64.

Similarly, in a case where the Idle Code is received in the Deskew state, the state of the physical layer makes a transition to the state of outputting RX Ready as indicated ahead of arrow #65.

The respective signals described above are used to implement the transitions as described above.

It is possible to express the two signals of Standby and Setup by the activation request for the physical layer, which is one signal output from the port RxEnable.

Furthermore, it is possible to express the two signals of RX Start and RX End by a Packet Data Transfer request, which is one signal output from the port RxLineValid.

Moreover, it is possible to express the two signals of Data Valid and Data Invalid by Packet Data Valid, which is one signal output from the port RxDataValid.

By making such definitions, the Rx-Phy Layer signal processing unit 31A as the physical layer can express output of the Training Sequence and Standby Sequence, output of the Start Code and End Code, and output of the Pad Code of the SLVS-EC standard using the respective signals. The Rx-Link Layer signal processing unit 31B as the link layer can recognize detection of the Training Sequence and Standby Sequence and completion of the processing by the Sequence on the basis of a signal supplied from the Rx-Phy Layer signal processing unit 31A.

The state of the physical layer (the state of the Rx-Phy Layer signal processing unit 31A) is controlled according to a state transition diagram as illustrated in Fig. 17.

- Timing chart

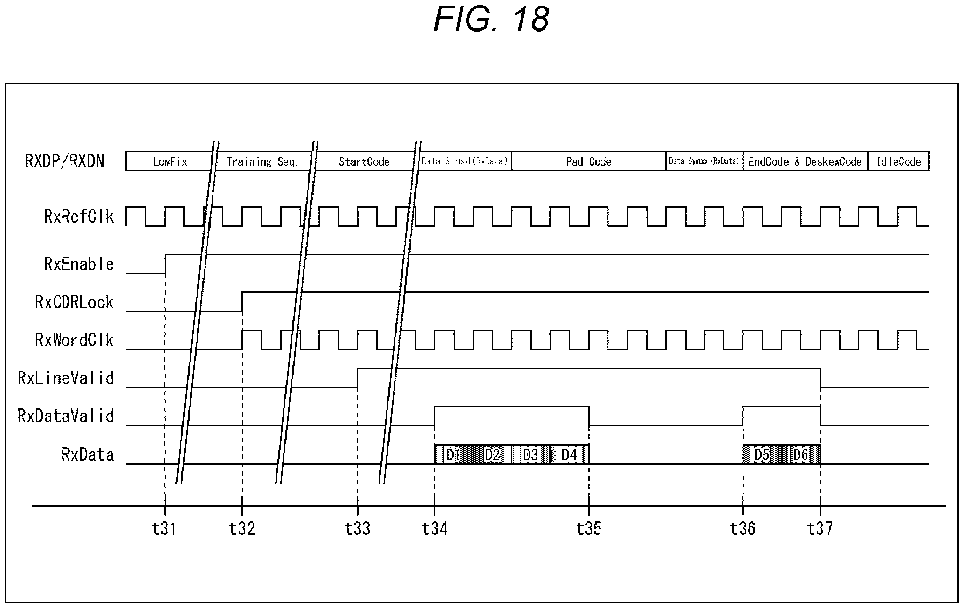

Fig. 18 is a diagram illustrating an example of a timing chart of signals.

The top row of Fig. 18 illustrates data input to ports RXDP/RXDN of the Rx-Phy Layer signal processing unit 31A. The ports RXDP/RXDN are two ports used to input differential signals.

The second row of Fig. 18 illustrates a reference clock input to the port RxRefClk of the Rx-Phy Layer signal processing unit 31A. The reference clock input to the port RxRefClk is used as a reference clock for performing CDR. Each signal is transmitted and received with reference to the Word clock (port RxWordClk) obtained by Lock of the CDR.

In a case where the input to the port RxEnable is set to High at time t31 as illustrated in the third row and CDR Lock (reproduction of clock) has been completed at time t32, the CDR Lock completion output from the port RxCDRLock becomes high as illustrated in the fourth row.

As illustrated in the fifth row, at time t32 and thereafter, the Word clock synchronized with data is output from the port RxWordClk.

As illustrated in the sixth row, at time t33 when the Packet Data Transfer Sequence (StartCode) is received by the Rx-Phy Layer signal processing unit 31A, the Packet Data Transfer Sequence reception flag output from the port RxLineValid becomes High.

At time t33 and thereafter, various processes of the physical layer including a process of decoding Packet Data from Data Symbol and a process of excluding control codes and Stuffing and the like from the Packet Data are performed in the Rx-Phy Layer signal processing unit 31A.

Payload Data extracted from the Packet Data by processing of the physical layer is output from the port RxData L as RxData. As illustrated in the seventh row, the Packet Data Valid output from the port RxDataValid is High during a period in which the RxData is output.

In the example of Fig. 18, a period from time t34 to time t35, which is a period in which Payload Data of packets D1 to D4 is output, and a period from time t36 to time t37, which is a period in which Payload Data of packets D5 and D6 are output, the output of the port RxDataValid becomes High.

During a period from time t35 to time 36 during which the Pad Code is being received, the output of the port RxDataValid becomes Low.

In a case where the Packet Data Transfer Sequence is finished (in a case where the End Code is received), the output of the port RxLineValid becomes Low at time t37 as illustrated in the sixth row. Thereafter, the reception of the Idle Code will continue.

<Mounting example>

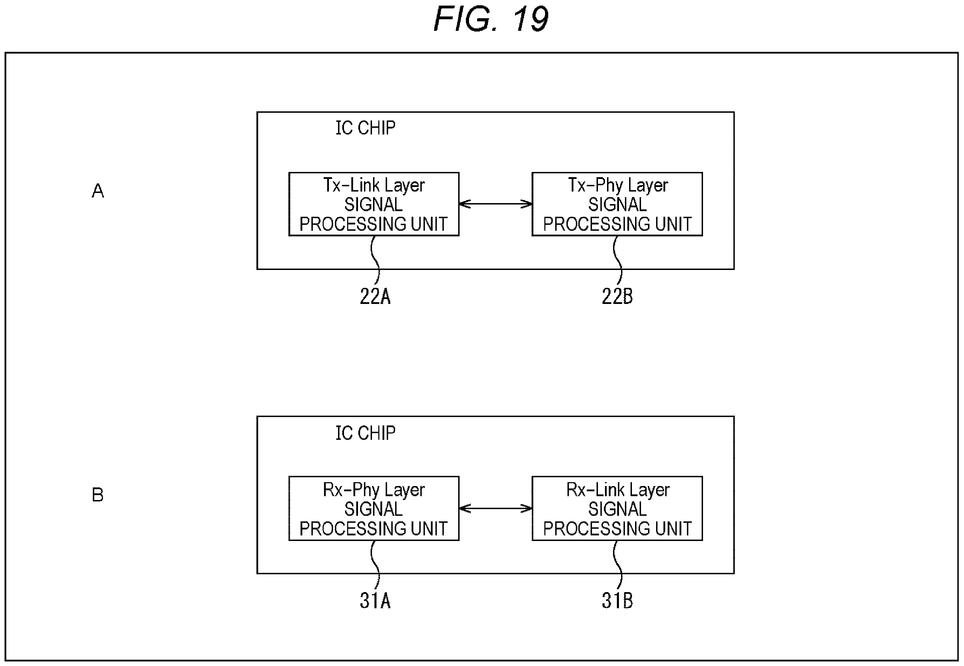

Fig. 19 is a block diagram illustrating an example of mounting.

A of Fig. 19 illustrates an example of implementation of the transmission unit 22, and B of Fig. 19 illustrates an example of mounting of the reception unit 31.

As illustrated in A of Fig. 19, the Tx-Link Layer signal processing unit 22A and the Tx-Phy Layer signal processing unit 22B constituting the transmission unit 22 can be provided on the same IC chip.

Furthermore, as illustrated in B of Fig. 19, the Rx-Phy Layer signal processing unit 31A and the Rx-Link Layer signal processing unit 31B constituting the reception unit 31 can be provided on the same IC chip.

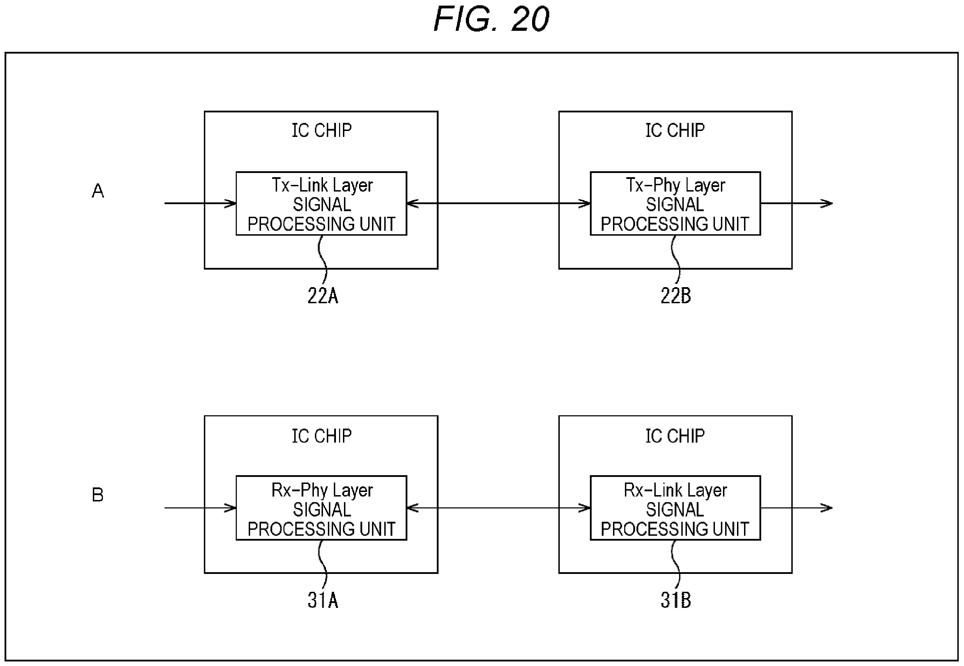

Fig. 20 is a block diagram illustrating another example of mounting.

A in Fig. 20 illustrates another example of mounting of the transmission unit 22, and B in Fig. 20 illustrates another example of mounting of the reception unit 31.

As illustrated in A of Fig. 20, the Tx-Link Layer signal processing unit 22A and the Tx-Phy Layer signal processing unit 22B constituting the transmission unit 22 can be provided on different IC chips.

Furthermore, as illustrated in B of Fig. 20, the Rx-Phy Layer signal processing unit 31A and the Rx-Link Layer signal processing unit 31B constituting the reception unit 31 can be provided on different IC chips.

Thus, by defining the specifications related to the interface between the link layer and the physical layer in the SLVS-EC standard, it is possible to separately mount the signal processing unit that performs signal processing of the link layer and the signal processing unit that performs signal processing of the physical layer.

Furthermore, by separating the signal processing unit that performs signal processing of the link layer and the signal processing unit that performs signal processing of the physical layer, it is possible to connect to other transmission standard. The other transmission standard include, for example, CSI-2 standard of Mobile Industry Processor Interface (MIPI).

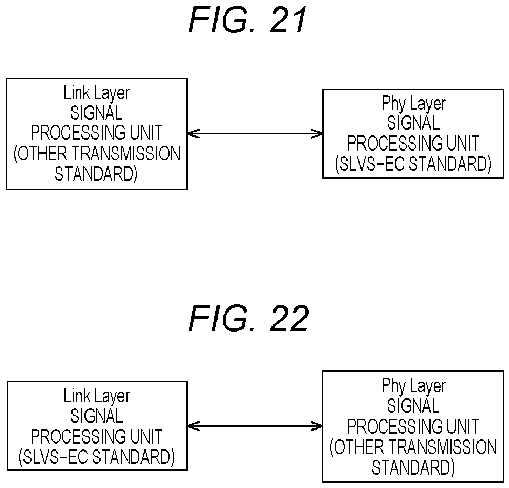

Figs. 21 and 22 are diagrams illustrating connection examples with another transmission standard.

Fig. 21 illustrates an example of mounting using a Link Layer signal processing unit of another transmission standard as a signal processing unit that performs signal processing of the link layer, and a Phy Layer signal processing unit of the SLVS-EC standard is used as a signal processing unit that performs signal processing of the physical layer. The Phy Layer signal processing unit of the SLVS-EC standard is the Tx-Phy Layer signal processing unit 22B or the Rx-Phy Layer signal processing unit 31A.

For example, in a case where the Link Layer signal processing unit of the other transmission standard in Fig.

21 and the Phy Layer signal processing unit of the SLVS-EC standard are a configuration on the transmitting side, transmission and reception of signals similar to the respective signals described with reference to Fig. 3 and so on are performed between the Link Layer signal processing unit and the Phy Layer signal processing unit.

In a case where the Link Layer signal processing unit of the other transmission standard and the Phy Layer signal processing unit of the SLVS-EC standard in Fig. 21 are a configuration on the receiving side, transmission and reception of signals similar to the respective signals described with reference to Fig. 11 and so on are performed between the Link Layer signal processing unit and the Phy Layer signal processing unit.

Fig. 22 illustrates an example of mounting using a Link Layer signal processing unit of the SLVS-EC standard as a signal processing unit that performs signal processing of the link layer, and a Phy Layer signal processing unit of the other transmission standard is used as a signal processing unit that performs signal processing of the physical layer.

For example, in a case where the Link Layer signal processing unit of the SLVS-EC standard and the Phy Layer signal processing unit of the other transmission standard in Fig. 22 are a configuration on the transmitting side, transmission and reception of signals similar to the respective signals described with reference to Fig. 6 and so on are performed between the Link Layer signal processing unit and the Phy Layer signal processing unit.

Furthermore, in a case where the Link Layer signal processing unit of the SLVS-EC standard and the Phy Layer signal processing unit of the other transmission standard in Fig. 22 are a configuration on the receiving side, transmission and reception of signals similar to the respective signals described with reference to Fig. 14 and so on are performed between the Link Layer signal processing unit and the Phy Layer signal processing unit.

Thus, mounting is possible such that the signal processing unit that performs signal processing of the link layer of the SLVS-EC standard and the signal processing unit that performs signal processing of the physical layer of the other transmission standard are connected, and conversely, the signal processing unit that performs signal processing of the link layer of the other transmission standard and the signal processing unit that performs signal processing of the physical layer of the SLVS-EC standard are connected.

Since the signal processing of the physical layer of the SLVS-EC standard is signal processing using differential signals that multiplex the clock, by using the latter mounting in particular, it is possible to secure a transmission distance while using processing of the other transmission standard as signal processing of the link layer.

<<SLVS-EC standard>>

Here, the SLVS-EC standard will be described.

<Frame format>

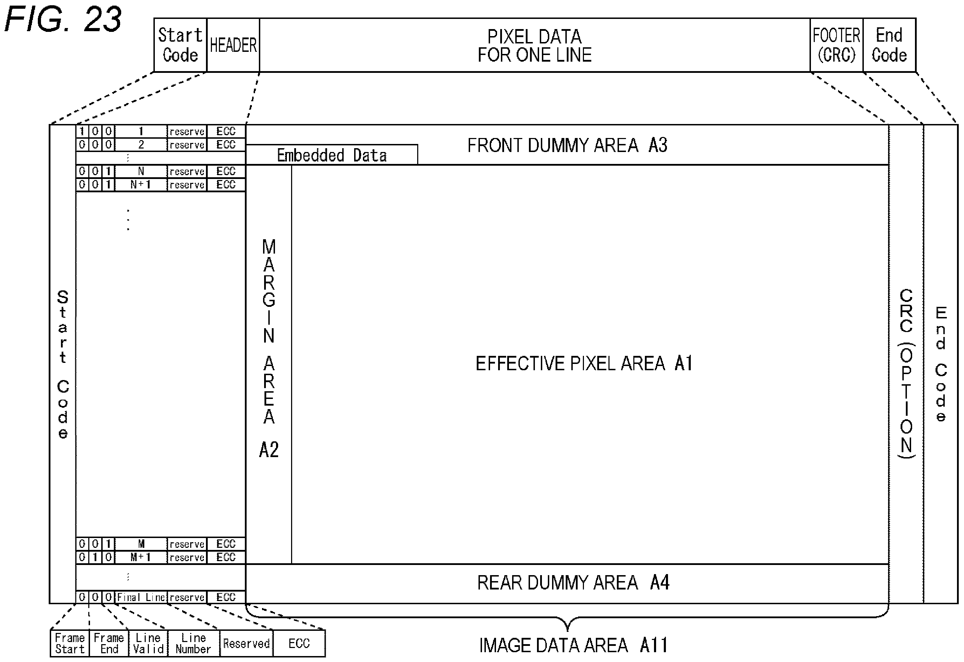

Fig. 23 is a diagram illustrating an example of a format used for transmitting image data of one frame between the image sensor 11 and the DSP 12 of Fig. 1.

An effective pixel area A1 is an area of effective pixels of an image of one frame captured by the imaging unit 21. On the left side of the effective pixel area A1, a margin area A2 is set in which the number of pixels in a vertical direction is the same as the number of pixels in the vertical direction of the effective pixel area A1.

On an upper side of the effective pixel area A1, a front dummy area A3 is set in which the number of pixels in a horizontal direction is the same as the number of pixels in the horizontal direction of the entire effective pixel area A1 and margin area A2. In the example of Fig. 23, Embedded Data is inserted in the front dummy area A3. The Embedded Data includes information regarding set values related to imaging by the imaging unit 21, such as shutter speed, aperture value, and gain. The Embedded Data may be inserted into a rear dummy area A4.

The rear dummy area A4 is set below the effective pixel area A1 in which the number of pixels in the horizontal direction is the same as the number of pixels in the horizontal direction of the entire effective pixel area A1 and margin area A2.

An image data area A11 includes the effective pixel area A1, the margin area A2, the front dummy area A3, and the rear dummy area A4.

A header is added before each line constituting the image data area A11, and a Start Code is added before the header. Furthermore, a footer is optionally added after each line constituting the image data area A11, and a control code as described later such as End Code is added after the footer. In a case where the footer is not added, a control code such as End Code is added after each line constituting the image data area A11.

Every time an image of one frame captured by the imaging unit 21 is transmitted from the image sensor 11 to the DSP 12, the entire data in the format illustrated in Fig. 23 is transmitted as transmission data.

An upper band in Fig. 23 illustrates the structure of a packet used for transmitting transmission data illustrated on a lower side. Assuming that an array of pixels in the horizontal direction is a line, data of pixels constituting one line of the image data area A11 is stored in a payload of the packet. Transmission of the entire image data of one frame is performed using the number of packets equal to or larger than the number of pixels in the vertical direction of the image data area A11.

One packet is formed by adding the header and the footer to the payload in which pixel data for one line is stored. As described in detail later, the header includes additional information of the pixel data stored in the payload, such as Frame Start, Frame End, Line Valid, Line Number, and ECC. At least a Start Code and an End Code that are control codes are added to each packet.

Thus, by employing the format in which the pixel data constituting an image of one frame is transmitted for every line, additional information such as the header and control codes such as the Start Code and the End Code can be transmitted during a blanking period of every line.

<Configuration of transmission unit 22 and reception unit 31>

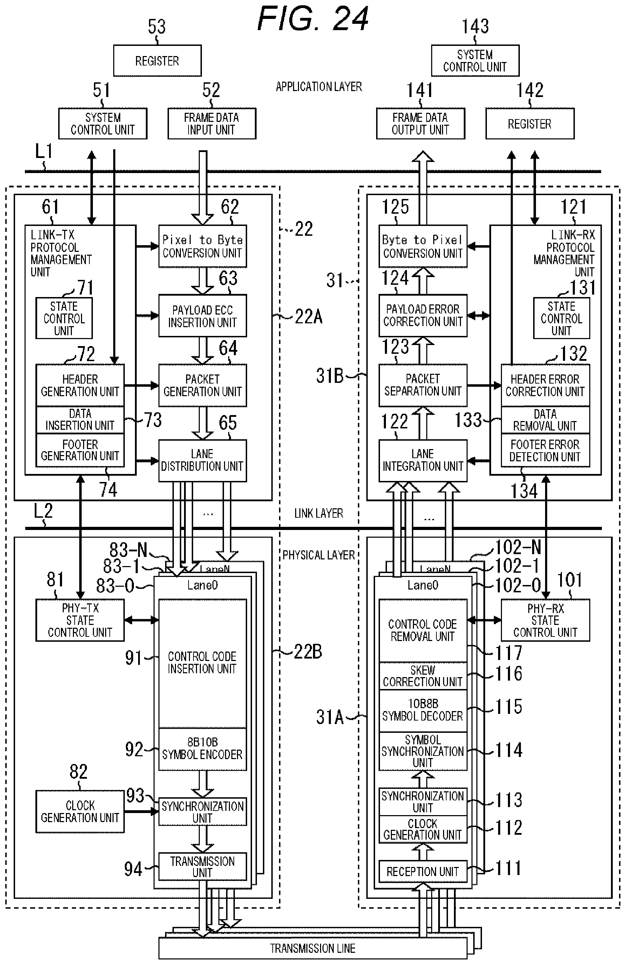

Fig. 24 is a diagram illustrating a configuration example of the transmission unit 22 and the reception unit 31.

A configuration indicated by enclosing with a dashed line on the left side of Fig. 24 is a configuration of the transmission unit 22, and a configuration indicated by enclosing with a dashed line on the right side is a configuration of the reception unit 31. The transmission unit 22 and the reception unit 31 have a configuration of the link layer and a configuration of the physical layer, respectively.

A configuration illustrated above the solid line L2 is a configuration of the link layer, and a configuration illustrated below the solid line L2 is a configuration of the physical layer. In the transmission unit 22, a configuration illustrated above the solid line L2 corresponds to the Tx-Link Layer signal processing unit 22A as a configuration for performing signal processing of the link layer, and a configuration illustrated below the solid line L2 corresponds to the Tx-Phy Layer signal processing unit 22B as a configuration for performing signal processing of the physical layer.

Signal exchange between the Tx-Link Layer signal processing unit 22A and the Tx-Phy Layer signal processing unit 22B is defined in a form as described with reference to Fig. 3 and so on.

Furthermore, in the reception unit 31, a configuration illustrated below the solid line L2 corresponds to the Rx-Phy Layer signal processing unit 31A as a configuration for performing signal processing of the physical layer, and a configuration illustrated above the solid line L2 corresponds to the Rx-Link Layer signal processing unit 31B as a configuration for performing signal processing of the link layer.

Signal exchange between the Rx-Phy Layer signal processing unit 31A and the Rx-Link Layer signal processing unit 31B is defined in a form as described with reference to Fig. 11 and the like.

Note that a configuration illustrated above the solid line L1 is a configuration of the application layer. A system control unit 51, a frame data input unit 52, and a register 53 are implemented in the imaging unit 21.

The system control unit 51 communicates with the LINK-TX protocol management unit 61 of the transmission unit 22 and controls transmission of image data by providing information regarding the frame format and the like.

The frame data input unit 52 captures an image in response to an instruction or the like from the user, and supplies data of each pixel constituting the image obtained by image-capturing to a Pixel to Byte conversion unit 62 of the transmission unit 22.

The register 53 stores information such as the bit depth and the number of Lanes for Pixel to Byte conversion. Transmission processing of image data is performed according to the information stored in the register 53.

Furthermore, a frame data output unit 141, a register 142, and a system control unit 143 in the configuration of the application layer are implemented in the image processing unit 32.

The frame data output unit 141 generates and outputs an image of one frame on the basis of the pixel data of each line supplied from the reception unit 31. Various processes are performed using the image output from the frame data output unit 141.

The register 142 stores various set values related to reception of image data, such as the bit depth and the number of Lanes for Byte to Pixel conversion. A reception process of image data is performed according to information stored in the register 142.

The system control unit 143 communicates with the LINK-RX protocol management unit 121 and controls a sequence such as a mode change.

<Configuration of link layer of transmission unit 22>

First, a configuration of the link layer of the transmission unit 22 (configuration of the Tx-Link Layer signal processing unit 22A) will be described.

The transmission unit 22 is provided with a LINK-TX protocol management unit 61, a Pixel to Byte conversion unit 62, a payload ECC insertion unit 63, a packet generation unit 64, and a lane distribution unit 65 as a configuration of the link layer. The LINK-TX protocol management unit 61 includes a state control unit 71, a header generation unit 72, a data insertion unit 73, and a footer generation unit 74.

The state control unit 71 of the LINK-TX protocol management unit 61 manages the state of the link layer of the transmission unit 22.

The header generation unit 72 generates the header to be added to the payload in which pixel data for one line is stored, and outputs the header to the packet generation unit 64.

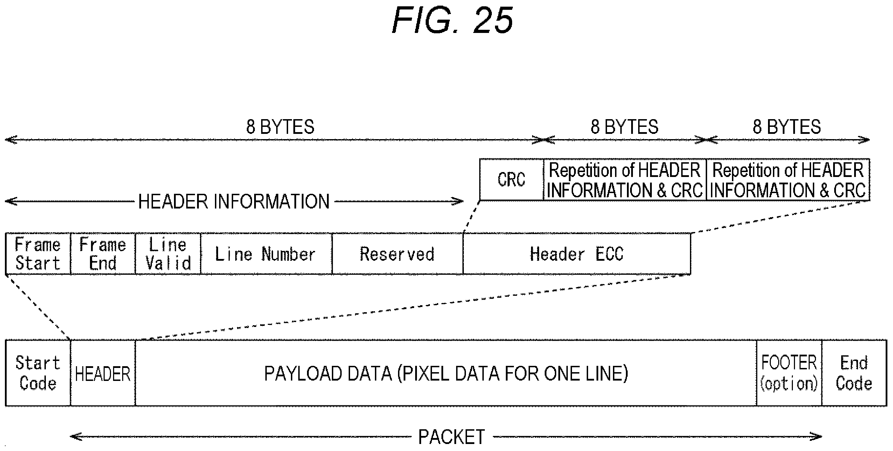

Fig. 25 is a diagram illustrating a structure of the header generated by the header generation unit 72.

As described above, one entire packet includes the header and the payload data that is pixel data for one line. The footer may be added to the packet. The header includes header information and Header ECC.

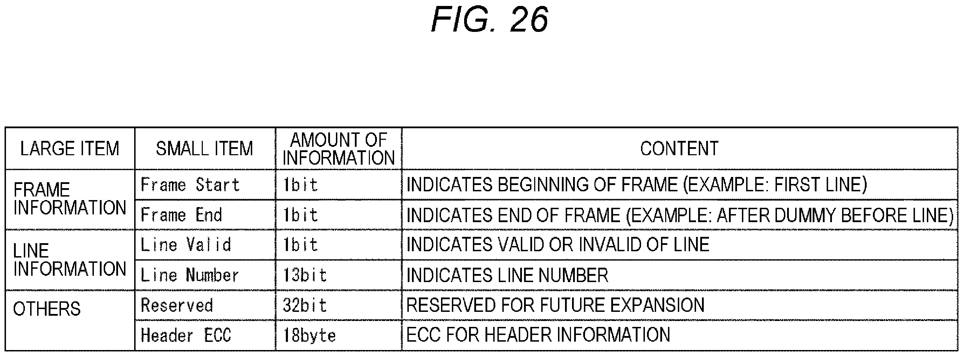

The header information includes Frame Start, Frame End, Line Valid, Line Number, and Reserved. The content and information amount of each piece of information are illustrated in Fig. 26.

The Frame Start is one-bit information indicating the beginning of a frame. A value of 1 is set to the Frame Start of the header of a packet used for transmitting pixel data of the first line of the image data area A11 in Fig. 23, and a value of 0 is set to the Frame Start of the header of a packet used for transmitting pixel data of another line.

The Frame End is one-bit information indicating the end of the frame. A value of 1 is set to Frame End of the header of a packet including pixel data of an end line of the effective pixel area A1 in the payload, and a value of 0 is set to Frame End of the header of a packet used for transmitting pixel data of another line.

The Frame Start and Frame End are frame information which is information regarding the frame.

The Line Valid is 1-bit information representing whether or not a line of pixel data stored in the payload is a line of effective pixels. A value of 1 is set to Line Valid of the header of a packet used for transmitting pixel data of a line in the effective pixel area A1, and a value of 0 is set to Line Valid of the header of a packet used for transmitting pixel data of another line.

Line Number is 13-bit information representing the line number of a line formed by pixel data stored in the payload.

The Line Valid and Line Number are line information that is information regarding the line.

The Reserved is a 32-bit area for expansion. The total amount of data in the header information is six bytes.

As illustrated in Fig. 25, the Header ECC arranged following the header information includes a Cyclic Redundancy Check (CRC) code, which is a 2-byte error detection code calculated on the basis of the six-byte header information. Furthermore, the Header ECC includes two pieces of the same information as the eight-byte information which is a set of the header information and the CRC code following the CRC code.

That is, the header of one packet includes three sets of the same header information and CRC code. The total amount of data in the entire header is 24 bytes in total combining eight bytes for a first set of header information and CRC code, eight bytes for a second set of header information and CRC code, and eight bytes for a third set of header information and CRC code.

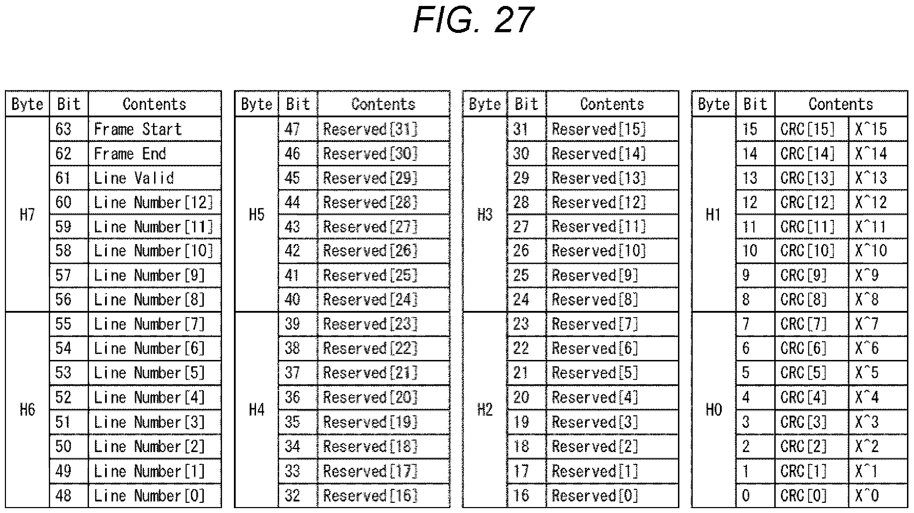

Fig. 27 is a diagram illustrating an example of an eight-byte bit array that constitutes one set of header information and CRC code.

A byte H7, which is a first one byte of the eight bytes constituting the header, includes one bit each of Frame Start, Frame End, and Line Valid, and the first to fifth bits among 13 bits of the Line Number, in order from the first bit. Furthermore, a byte H6, which is a second one byte, includes the sixth to 13th bits among the 13 bits of the Line Number.

From a byte H5, which is a third one byte, to a byte H2, which is a sixth one-byte, are Reserved. A byte H1, which is a seventh one byte, and a byte H0, which is an eighth one byte, include each bit of the CRC code.

Returning to the description of Fig. 24, the header generation unit 72 generates header information according to control by the system control unit 51. For example, the system control unit 51 supplies information indicating a line number of pixel data output by the frame data input unit 52 and information indicating the beginning and end of a frame.

Furthermore, the header generation unit 72 applies the header information to a generation polynomial to calculate the CRC code. The generation polynomial of the CRC code to be added to the header information is expressed by, for example, following equation (1).

[Equation 1]

$$CRC16 = X^{16} + X^{15} + X^2 + 1 \qquad \cdots (1)$$

The header generation unit 72 generates a set of header information and a CRC code by adding the CRC code to the header information, and generates the header by repeatedly arranging three sets of the same header information and CRC code. The header generation unit 72 outputs the generated header to the packet generation unit 64.

The data insertion unit 73 generates data used for stuffing and outputs the data to the Pixel to Byte conversion unit 62 and the lane distribution unit 65. Payload stuffing data, which is the stuffing data supplied to the Pixel to Byte conversion unit 62, is added to pixel data after the Pixel to Byte conversion and is used for adjusting the data amount of pixel data stored in the payload. Furthermore, lane stuffing data, which is stuffing data supplied to the lane distribution unit 65, is added to data after lane assignment and used for adjusting the amount of data between lanes.

The footer generation unit 74 calculates a 32-bit CRC code by appropriately applying payload data to the generation polynomial according to control by the system control unit 51, and outputs the CRC code obtained by calculation as a footer to the packet generation unit 64. The CRC code generation polynomial added as a footer is expressed by, for example, following Equation (2).
[Equation 2]

$$CRC32 = X^{32} + X^{31} + X^4 + X^3 + X + 1 \qquad \cdot \cdot \cdot (2)$$

The Pixel to Byte conversion unit 62 acquires pixel data supplied from the frame data input unit 52, and performs Pixel to Byte conversion that converts the data of each pixel into data in one-byte units. For example, the pixel value (RGB) of each pixel of the image captured by the imaging unit 21 is represented by the bit depth of any one of eight bits, 10 bits, 12 bits, 14 bits, and 16 bits.

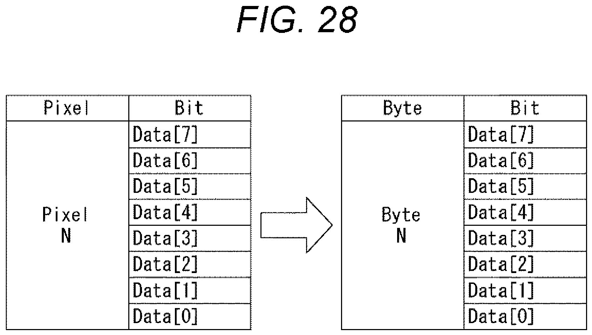

Fig. 28 is a diagram illustrating an example of Pixel to Byte conversion in a case where the pixel value of each pixel is represented by eight bits.

Data[0] represents LSB, and Data[7] with the largest number represents MSB. As illustrated by a white arrow, in this case, eight bits of Data[7] to [0] representing a pixel value of pixel N are converted into a Byte N constituted of Data[7] to [0]. In a case where the pixel value of each pixel is represented by eight bits, the number of pieces of data in byte units after the Pixel to Byte conversion is the same as the number of pixels.

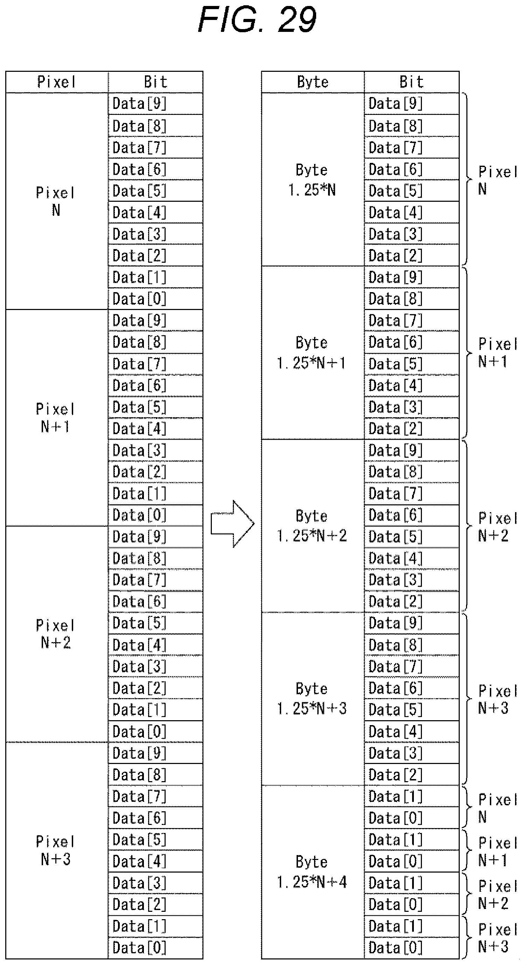

Fig. 29 is a diagram illustrating an example of Pixel to Byte conversion in a case where the pixel value of each pixel is represented by 10 bits.

In this case, 10 bits of Data[9] to [0] representing a pixel value of pixel N are converted into Byte 1.25*N constituted of Data[9] to [2].

For pixels N + 1 to N + 3, similarly, 10 bits of Data[9] to [0] representing respective pixel values are converted into Byte 1.25*N + 1 to Byte 1.25*N + 3 constituted of Data[9] to [2]. Furthermore, Data[1] and Data[0], which are respective lower bits of pixels N to N + 3, are collected and converted into Byte 1.25*N + 4. In a case where the pixel value of each pixel is represented by 10 bits, the number of pieces of data in byte units after the Pixel to Byte conversion is 1.25 times the number of pixels.

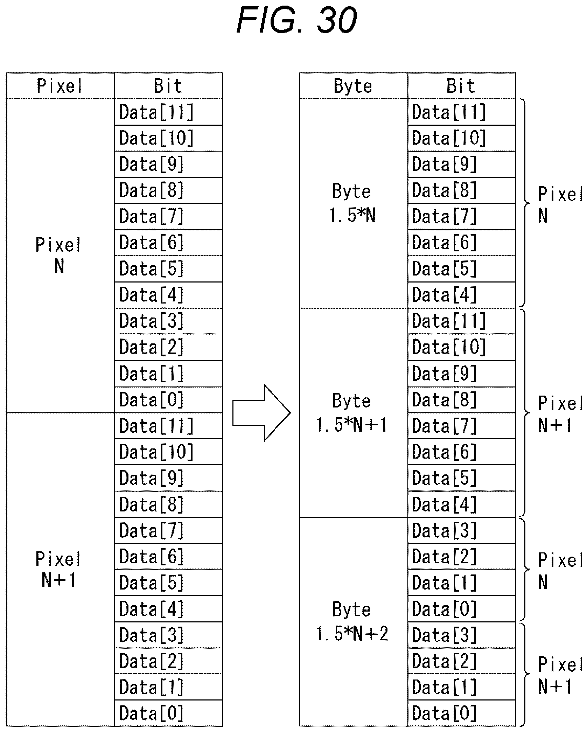

Fig. 30 is a diagram illustrating an example of Pixel to Byte conversion in a case where a pixel value of each pixel is represented by 12 bits.

In this case, 12 bits of Data[11] to [0] representing a pixel value of pixel N are converted into Byte 1.5*N constituted of Data[11] to [4].

For a pixel N + 1, similarly, 12 bits of Data[11] to [0] representing a pixel value of pixel N + 1 are converted into Byte 1.5*N + 1 constituted of Data[11] to [4]. Furthermore, Data[3] to [0], which are respective lower bits of pixel N and pixel N + 1, are collected and converted into Byte 1.5*N + 2. In a case where the pixel value of each pixel is represented by 12 bits, the number of pieces of data in byte units after the Pixel to Byte conversion is 1.5 times the number of pixels.

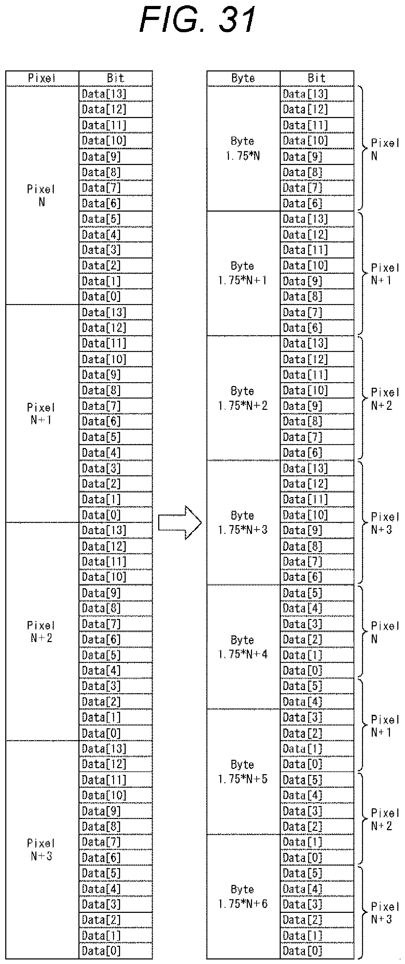

Fig. 31 is a diagram illustrating an example of Pixel to Byte conversion in a case where a pixel value of each pixel is represented by 14 bits.

In this case, 14 bits of Data[13] to [0] representing a pixel value of pixel N are converted into Byte 1.75*N constituted of Data[13] to [6].

For pixels N + 1 to N + 3, similarly, 14 bits of Data[13] to [0] representing respective pixel values are converted into Byte 1.75*N + 1 to Byte 1.75*N + 3 constituted of Data[13] to [6]. Furthermore, the remaining bits of the bits of pixels N to N + 3 are collected in order from the lower bit, for example, Data[5] to [0], which are bits of pixel N, and Data[5] and [4], which are bits of pixel N + 1 are converted into Byte 1.75*N + 4.

Similarly, Data[3] to [0], which are bits of pixel N + 1, and Data[5] to [2], which are bits of pixel N + 2, are converted into Byte 1.75*N + 5, and Data[1] and [0], which are bits of pixel N + 2, and Data[5] to [0], which are bits of pixel N + 3, are converted into Byte 1.75*N + 6. In a case where the pixel value of each pixel is represented by 14 bits, the number of pieces of data in byte units after the Pixel to Byte conversion is 1.75 times the number of pixels.

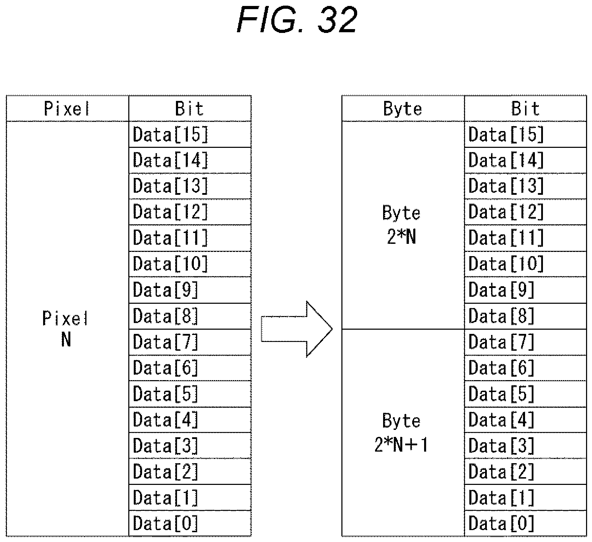

Fig. 32 is a diagram illustrating an example of Pixel to Byte conversion in a case where a pixel value of each pixel is represented by 16 bits.

In this case, 16 bits of Data[15] to [0] representing a pixel value of pixel N are converted into Byte 2*N constituted of Data[15] to [8] and Byte 2*N + 1 constituted of Data[7] to [0]. In a case where the pixel value of each pixel is represented by 16 bits, the number of pieces of data in byte units after the Pixel to Byte conversion is twice the number of pixels.

The Pixel to Byte conversion unit 62 of Fig. 24 performs such Pixel to Byte conversion for each pixel in order from, for example, the leftmost pixel of the line. Furthermore, the Pixel to Byte conversion unit 62 generates payload data by adding the payload stuffing data supplied from the data insertion unit 73 to the pixel data in byte units obtained by the Pixel to Byte conversion, and outputs it to a payload ECC insertion unit 63.

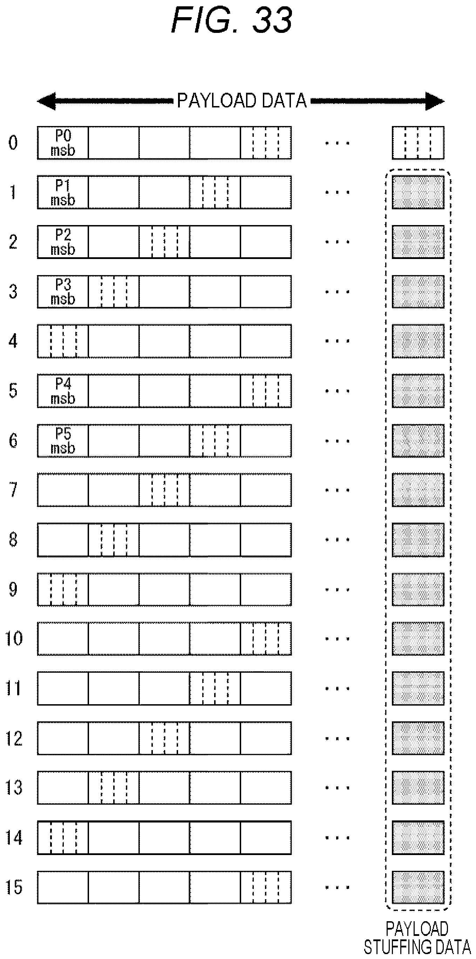

Fig. 33 is a diagram illustrating an example of payload data.

Fig. 33 illustrates payload data including pixel data obtained by the Pixel to Byte conversion in a case where the pixel value of each pixel is represented by 10 bits. One uncolored block represents pixel data in byte units after the Pixel to Byte conversion. Furthermore, one colored block represents the payload stuffing data generated by the data insertion unit 73.

The pixel data after the Pixel to Byte conversion is grouped into a predetermined number of groups in the order obtained by the conversion. In the example of Fig. 33, each pixel data is grouped into 16 groups of groups 0 to 15, pixel data including MSB of pixel P0 is assigned to the group 0, and pixel data including MSB of pixel P1 is assigned to the group 1. Furthermore, pixel data including MSB of pixel P2 is assigned to the group 2, pixel data including MSB of pixel P3 is assigned to the group 3, and pixel data including LSB of pixels P0 to P3 is assigned to the group 4.

Pixel data including MSB of pixel P4 and pixel data thereafter are also assigned to respective groups of the group 5 and thereafter in order. When a certain pixel data is assigned to the group 15, pixel data thereafter is sequentially assigned to respective groups of the group 0 and thereafter. Note that among the blocks representing pixel data, blocks with three dashed lines added inside represent pixel data in byte units generated so as to include LSBs of pixels N to N + 3 during the Pixel to Byte conversion.

In the link layer of the transmission unit 22, after grouping is performed in this manner, processing is performed in parallel for the pixel data at the same position in each group at every interval defined by a clock signal. That is, in a case where pixel data is assigned to 16 groups as illustrated in Fig. 33, processing of pixel data proceeds so that 16 pieces of pixel data arranged in each column are processed within the same period.

As described above, the payload of one packet includes one line of pixel data. The entire pixel data illustrated in Fig. 33 is pixel data constituting one line. Here, the processing of pixel data in the effective pixel area A1 of Fig. 23 is described, but the pixel data in other areas such as the margin area A2 is also processed together with the pixel data in the effective pixel area A1.

After the pixel data for one line is grouped, the payload stuffing data is added so that respective data lengths of the groups are the same. The payload stuffing data is one byte of data.

In the example of Fig. 33, the payload stuffing data is not added to the pixel data of the group 0, and as indicated by enclosing with a dashed line, one payload stuffing data is added at the end of each piece of pixel data of the groups 1 to 15. The data length (Byte) of the payload data constituted of pixel data and stuffing data is expressed by following Equation (3).

[Equation 3]

$$PayloadLength = LineLength \times \frac{BitPix}{8} + PayloadStuffing$$

$$\cdots (3)$$

LineLength in Equation (3) represents the number of pixels of a line, and BitPix represents the bit depth representing the pixel value of one pixel. PayloadStuffing represents the number of pieces of payload stuffing data.

In a case where pixel data is assigned to 16 groups as illustrated in Fig. 33, the number of pieces of payload stuffing data is expressed by following Equation (4). % in Equation (4) represents a remainder.

[Equation 4]

$$PayloadStuffing = 16 - \left( \left( LineLength \times \frac{BitPix}{8} \right) \% 16 \right)$$

$$\cdots (4)$$

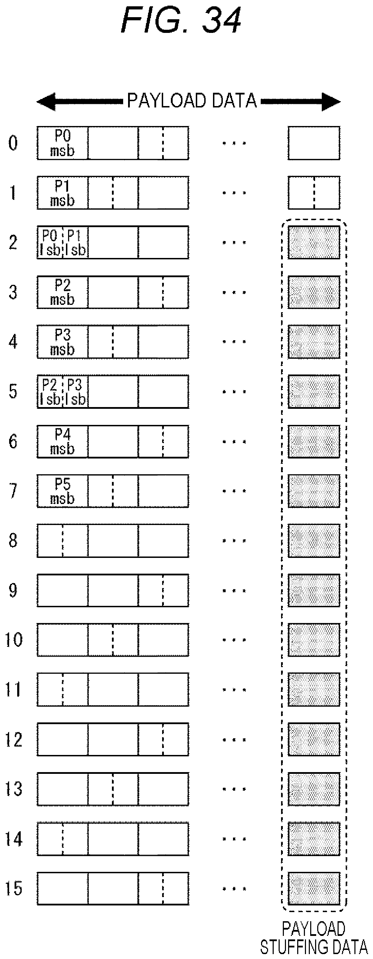

Fig. 34 is a diagram illustrating another example of payload data.

Fig. 34 illustrates payload data including pixel data obtained by the Pixel to Byte conversion in a case where the pixel value of each pixel is represented by 12 bits.

In the example of Fig. 34, pixel data including MSB of pixel P0 is assigned to a group 0, pixel data including MSB of pixel P1 is assigned to a group 1, pixel data including LSBs of pixel P0 and pixel P1 is assigned to a group 2. Pixel data including MSB of pixel P2 and pixel data thereafter are also assigned to respective groups of a group 3 and thereafter in order. Note that among the blocks representing pixel data, blocks with one dashed line added inside represent pixel data in byte units generated so as to include LSBs of pixel N and pixel N + 1 during the Pixel to Byte conversion.

In the example of Fig. 34, payload stuffing data is not added to the pixel data of the group 0 and the group 1, and payload stuffing data is added one by one at the end of each pixel data of groups 2 to 15.

Payload data having such a configuration is supplied from the Pixel to Byte conversion unit 62 to the payload ECC insertion unit 63.

The payload ECC insertion unit 63 calculates an error correction code used for error correction of payload data on the basis of the payload data supplied from the Pixel to Byte conversion unit 62, and a parity that is the error correction code obtained by the calculation is inserted in the payload data. As the error correction code, for example, a Reed-Solomon code is used. Note that the insertion of the error correction code is an option, and for example, it is possible to only perform either of the insertion of the parity by the payload ECC insertion unit 63 and the addition of a footer by the footer generation unit 74.

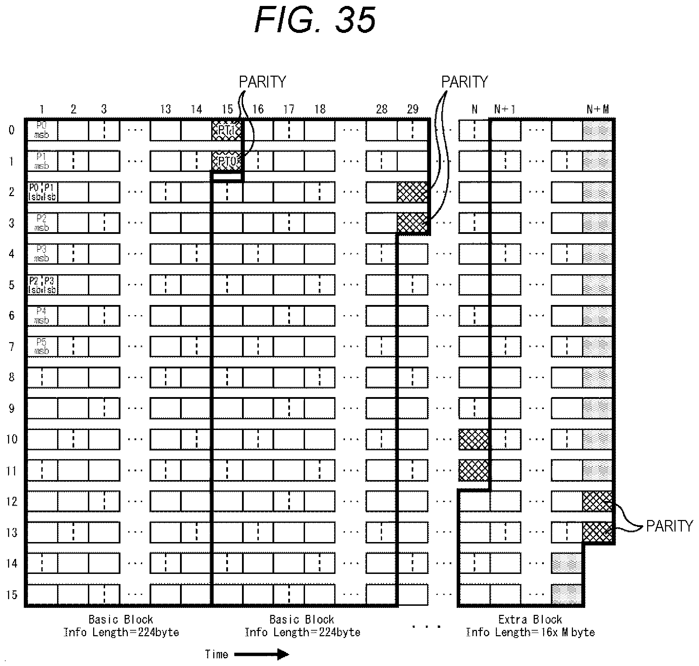

Fig. 35 is a diagram illustrating an example of payload data in which the parity is inserted.

The payload data illustrated in Fig. 35 is the payload data including the pixel data obtained by the Pixel to Byte conversion in a case where the pixel value of each pixel is represented by 12 bits, which is described with reference to Fig. 34. The shaded blocks represent the parity.

In the example of Fig. 35, 14 pixels are selected in order from first pixel data of each group of groups 0 to 15, and a two-byte parity is obtained on the basis of the selected 224 pixels (224 bytes) of pixel data. The two-byte parity is inserted as 15th data in groups 0 and 1 following the 224 pieces of pixel data used in the calculation, and a first Basic Block includes the 224 pieces of pixel data and a two-byte parity.

As described above, in the payload ECC insertion unit 63, basically, the two-byte parity is generated on the basis of the 224 pieces of pixel data, and inserted following the 224 pieces of pixel data.

Furthermore, in the example of Fig. 35, 224 pieces of pixel data following the first Basic Block are selected in order from each group, and a two-byte parity is obtained on the basis of the selected 224 pieces of pixel data. The two-byte parity is inserted as 29th data in the groups 2 and 3 following the 224 pieces of pixel data used in the calculation, and a second Basic Block includes the 224 pieces of pixel data and the two-byte parity.

In a case where 16 × M, which is the number of pieces of pixel data and payload stuffing data following a certain Basic Block, is less than 224, then two bytes of the parity are obtained on the basis of the remaining 16 × M blocks (pixel data and payload stuffing data). Furthermore, the obtained two-byte parity is inserted following the payload stuffing data, and an Extra Block includes 16 × M blocks and the two-byte parity.

The payload ECC insertion unit 63 outputs the payload data with a parity inserted to the packet generation unit 64. In a case where the parity is not inserted, the payload data supplied from the Pixel to Byte conversion unit 62 to the payload ECC insertion unit 63 is output to the packet generation unit 64 as it is.

The packet generation unit 64 generates a packet by adding the header generated by the header generation unit 72 to the payload data supplied from the payload ECC insertion unit 63. In a case where a footer is generated by the footer generation unit 74, the packet generation unit 64 also adds the footer to the payload data.

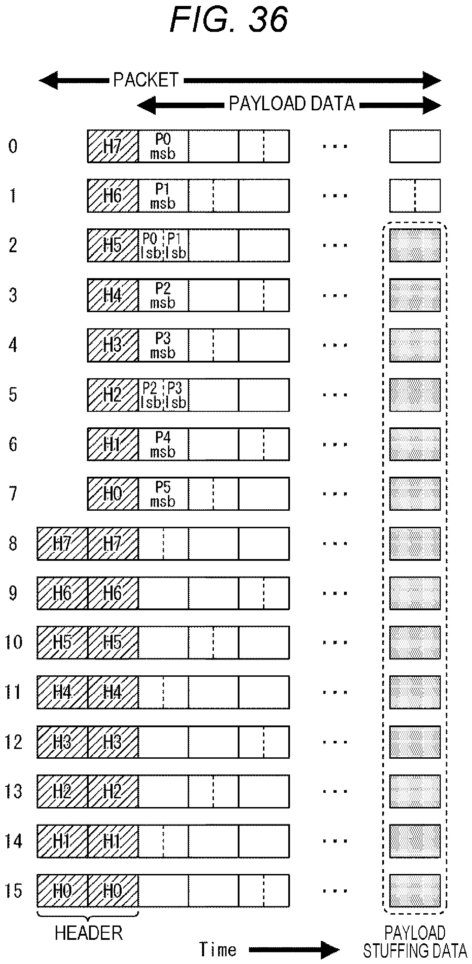

Fig. 36 is a diagram illustrating a state where a header is added to the payload data.

Twenty-four blocks indicated by characters H7 to H0 represent the header information or the header data in byte units, which is the CRC code of the header information. As described with reference to Fig. 25, the header of one packet includes three sets of header information and CRC code.

For example, header data H7 to H2 are header information (six bytes), and header data H1 and HO are CRC codes (two bytes).

In the example of Fig. 36, one piece of header data H7 is added to the payload data of a group 0, and one piece of header data H6 is added to the payload data of group 1. One piece of header data H5 is added to the payload data of group 2, and one piece of header data H4 is added to the payload data of group 3. One piece of header data H3 is added to the payload data of group 4, and one piece of header data H2 is added to the payload data of group 5. One piece of header data H1 is added to the payload data of group 6, and one piece of header data H0 is added to the payload data of group 7.

Furthermore, in the example of Fig. 36, two pieces of header data H7 are added to the payload data of group 8, and two pieces of header data H6 are added to the payload data of group 9. Two pieces of header data H5 are added to the payload data of group 10, and two pieces of header data H4 are added to the payload data of group 11. Two pieces of header data H3 are added to the payload data of group 12, and two pieces of header data H2 are added to the payload data of group 13. Two pieces of header data H1 are added to the payload data of group 14, and two pieces of header data H0 are added to the payload data of group 15.

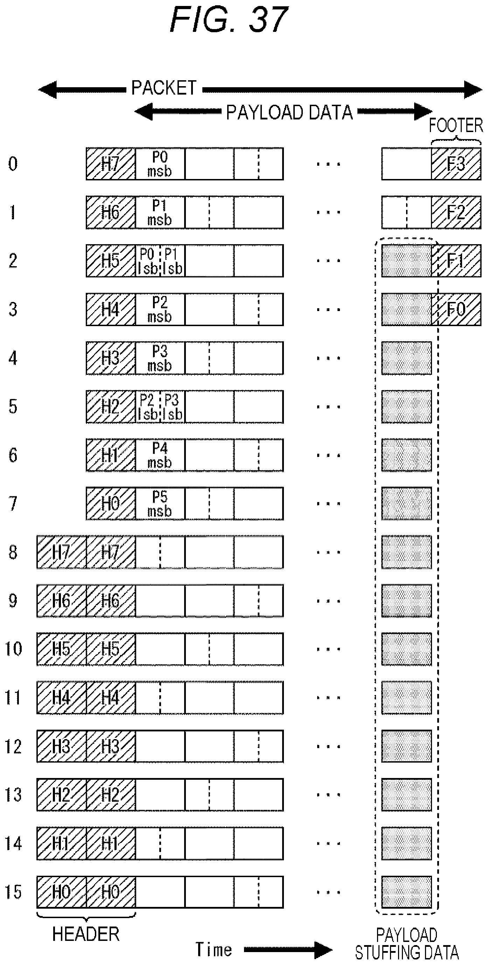

Fig. 37 is a diagram illustrating a state in which a header and a footer are added to the payload data.

Four blocks indicated by letters F3 to F0 represent footer data, which is a four-byte CRC code generated as a footer. In the example of Fig. 37, pieces of footer data F3 to F0 are added to the respective payload data of the groups 0 to 3.

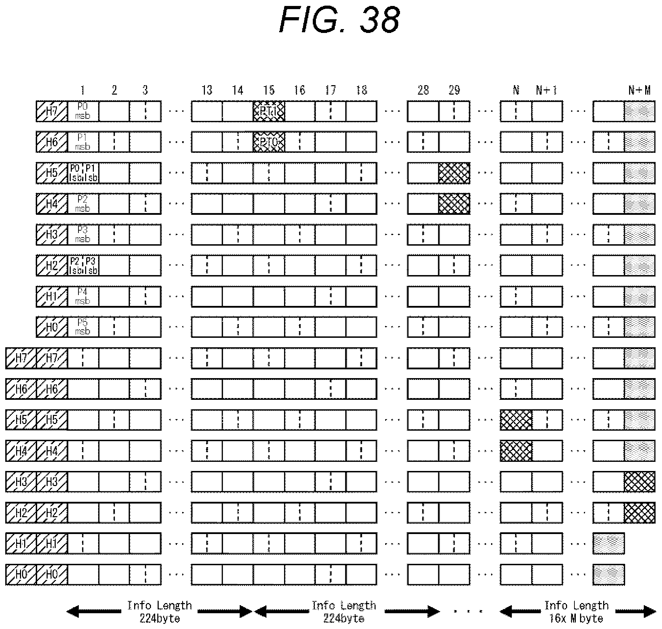

Fig. 38 is a diagram illustrating a state in which a header is added to the payload data in which a parity is inserted.

In the example of Fig. 38, pieces of header data H7 to H0 are added to the payload data of Fig. 35 in which a parity is inserted, as in the cases of Figs. 36 and 37.

The packet generation unit 64 outputs packet data, which is data constituting one packet generated in this manner, to the lane distribution unit 65. The lane distribution unit 65 is supplied with packet data including header data and payload data, packet data constituted of the header data, the payload data, and footer data, or packet data constituted of the header data and the payload data in which a parity is inserted. The packet structure of Fig. 25 is a logical one, and in the link layer and the physical layer, data of a packet having the structure of Fig. 25 is processed in byte units.

The lane distribution unit 65 assigns the packet data supplied from the packet generation unit 64 to each lane used for data transmission in Lanes 0 to 7 in order from the first data.

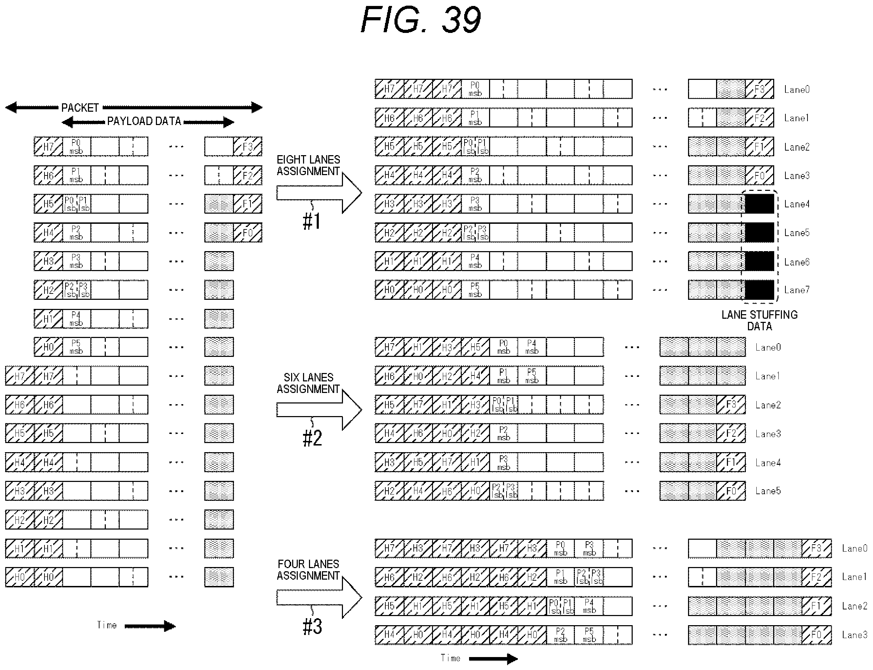

Fig. 39 is a diagram illustrating an example of assignment of the packet data.

Here, an assignment of packet data (Fig. 37) constituted of header data, payload data, and footer data will be described. An example of assignment of packet data in a case where data transmission is performed using eight lanes of Lanes 0 to 7 is illustrated ahead of white arrow #1.

In this case, each piece of header data constituting the header data H7 to H0 repeated three times is assigned to the Lanes 0 to 7 in order from the first header data. When a certain piece of header data is assigned to the Lane 7, header data thereafter is assigned to respective lanes of the Lane 0 and thereafter in order. Three identical pieces of header data will be assigned to each lane of the Lanes 0 to 7.

Furthermore, the payload data is assigned to the Lanes 0 to 7 in order from the first payload data. When a certain piece of payload data is assigned to the Lane 7, payload data thereafter is assigned to respective lanes of the Lane 0 and thereafter in order.

Pieces of footer data F3 to F0 are assigned to each lane in order from the first footer data. In the example of Fig. 39, the last payload stuffing data constituting the payload data is assigned to Lane 7, and the pieces of footer data F3 to F0 are assigned to the Lanes 0 to 3 one by one.

Blocks illustrated in black represent lane stuffing data generated by the data insertion unit 73. The lane stuffing data is assigned to the lane with a small number of pieces of data so that packet data for one packet is assigned to each lane and then a data length assigned to each lane is the same. The lane stuffing data is data of one byte. In the example of Fig. 39, the lane stuffing data is assigned one by one to the Lanes 4 to 7, which are lanes with a small number of data assignments.

The number of pieces of lane stuffing data in a case where the packet data is constituted of header data, payload data, and footer data is represented by following Equation (5).

[Equation 5]

$$LaneStuffing = LaneNum - ((PayloadLength + FooterLength) \% LaneNum) \quad \cdots (5)$$

LaneNum in Equation (5) represents the number of lanes, and PayloadLength represents a payload data length (bytes). Furthermore, FooterLength represents a footer length (bytes).

Furthermore, the number of pieces of lane stuffing data in a case where the packet data includes header data and payload data with a parity inserted is represented by following Equation (6). ParityLength in Equation (6) represents the total number of bytes of the parity included in the payload.

[Equation 6]

$$LaneStuffing = LaneNum - ((PayloadLength + ParityLength) \% LaneNum) \quad \cdots (6)$$

An example of assignment of packet data in a case where data transmission is performed using the six lanes of the Lanes 0 to 5 is illustrated ahead of white arrow #2.

In this case, each piece of header data constituting the header data H7 to H0 repeated three times is assigned to the Lanes 0 to 5 in order from the first header data. When a certain piece of header data is assigned to the Lane 5, header data thereafter is assigned to respective lanes of the Lane 0 and thereafter in order. Four pieces of header data will be assigned to each lane of the Lanes 0 to 5.

Furthermore, the payload data is assigned to the Lanes 0 to 5 in order from the first payload data. When a certain piece of payload data is assigned to the Lane 5, payload data thereafter is assigned to respective lanes of the Lane 0 and thereafter in order.

Pieces of footer data F3 to F0 are assigned to each lane in order from the first footer data. In the example of Fig. 39, the last payload stuffing data constituting the payload data is assigned to the Lane 1, and pieces of footer data F3 to F0 are assigned to the Lanes 2 to 5 one by one. Since the number of pieces of packet data of the Lanes 0 to 5 is the same, the lane stuffing data is not used in this case.

An example of packet data assignment in a case where data transmission is performed using four lanes of the Lanes 0 to 3 is illustrated ahead of white arrow #3.

In this case, each piece of header data constituting the header data H7 to H0 repeated three times is assigned to the Lanes 0 to 3 in order from the first header data. When a certain piece of header data is assigned to the Lane 3, header data thereafter is assigned to respective lanes of the Lane 0 and thereafter in order. Six pieces of header data will be assigned to each lane of the Lanes 0 to 3.

Furthermore, the payload data is assigned to the Lanes 0 to 3 in order from the first payload data. When a certain piece of payload data is assigned to the Lane 3, payload data thereafter is assigned to respective lanes of the Lane 0 and thereafter in order.

Pieces of footer data F3 to F0 are assigned to each lane in order from the first footer data. In the example of Fig. 39, the last payload stuffing data constituting the payload data is assigned to the Lane 3, and pieces of footer data F3 to F0 are assigned to the Lanes 0 to 3 one by one. Since the number of pieces of packet data of the Lanes 0 to 3 is the same, the lane stuffing data is not used in this case.

The lane distribution unit 65 outputs the packet data assigned to each lane in this manner to the physical layer. Hereinafter, a case where data is transmitted using eight lanes of the Lanes 0 to 7 will be mainly described, but similar processing is performed even in a case where the number of lanes used for data transmission is another number.

<Configuration of physical layer of transmission unit 22>

Next, a configuration of the physical layer of the transmission unit 22 (configuration of the Tx-Phy Layer signal processing unit 22B) will be described.

The transmission unit 22 is provided with a PHY-TX state control unit 81, a clock generation unit 82, and signal processing units 83-0 to 83-N as a configuration of the physical layer. The signal processing unit 83-0 includes a control code insertion unit 91, an 8B10B symbol encoder 92, a synchronization unit 93, and a transmission unit 94. Packet data assigned to the Lane 0 output from the lane distribution unit 65 is input to the signal processing unit 83-0, and packet data assigned to the Lane 1 is input to the signal processing unit 83-1. Furthermore, the packet data assigned to the Lane N is input to the signal processing unit 83-N.

In this manner, the physical layer of the transmission unit 22 is provided with the same number of signal processing units 83-0 to 83-N as the number of lanes, and processes of packet data transmitted using respective lanes are performed in parallel in the signal processing units 83-0 to 83-N, respectively. A configuration of the signal processing unit 83-0 will be described, but the signal processing units 83-1 to 83-N also have similar configurations.

The PHY-TX state control unit 81 controls respective units of the signal processing units 83-0 to 83-N. For example, timing of each processing performed by the signal processing units 83-0 to 83-N is controlled by the PHY-TX state control unit 81.

The clock generation unit 82 generates a clock signal and outputs the clock signal to each synchronization unit 93 of the signal processing units 83-0 to 83-N.

The control code insertion unit 91 of the signal processing unit 83-0 adds a control code to packet data supplied from the lane distribution unit 65. The control code is a code represented by one symbol selected from a plurality of types of symbols prepared in advance or by a combination of the plurality of types of symbols. Each symbol inserted by the control code insertion unit 91 is eight-bit data. By performing 8B10B conversion in the circuit in the subsequent stage, one symbol inserted by the control code insertion unit 91 becomes 10-bit data. On the other hand, in the reception unit 31, 10B8B conversion is performed on the received data as described later, but each symbol before the 10B8B conversion included in the received data is 10-bit data, and each symbol after the 10B8B conversion becomes eight-bit data.

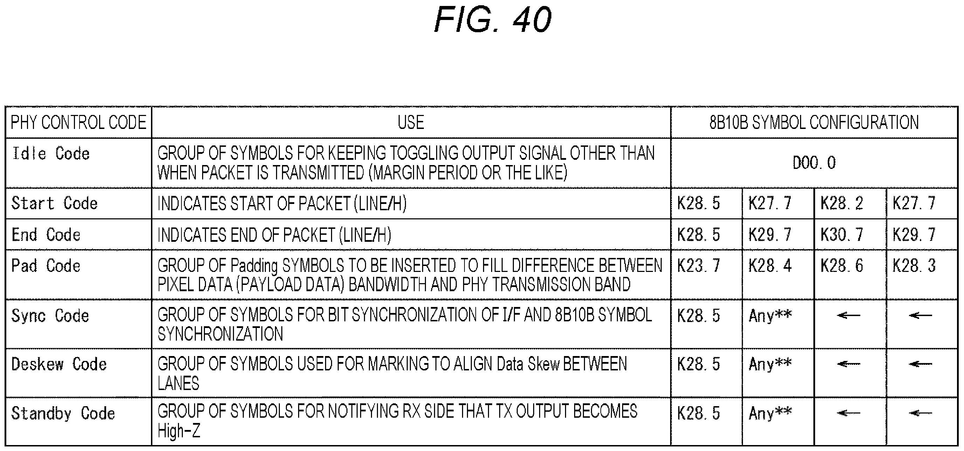

Fig. 40 is a diagram illustrating an example of control codes added by the control code insertion unit 91.

The control codes include Idle Code, Start Code, End Code, Pad Code, Sync Code, Deskew Code, and Standby Code.

The Idle Code is a group of symbols that are repeatedly transmitted during a period other than the time when packet data is transmitted. The Idle Code is represented by D00.0 (00000000) of D Character that is an 8B10B Code.

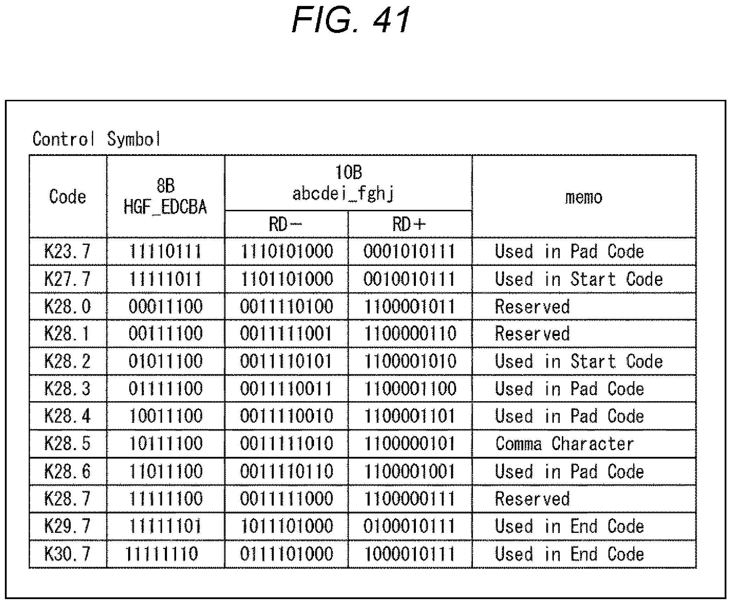

The Start Code is a group of symbols indicating the start of a packet. As described above, the Start Code is added before the packet. The Start Code is represented by four symbols, K28.5, K27.7, K28.2, and K27.7, which are a combination of three types of K Characters. The value of each of K Characters is illustrated in Fig. 41.

The End Code is a group of symbols indicating the end of a packet. As mentioned above, the End Code is added after the packet. The End Code is represented by four symbols, K28.5, K29.7, K30.7, and K29.7, which are a combination of three types of K Characters.

The Pad Code is a group of symbols inserted in payload data to fill the difference between a pixel data band and a PHY transmission band. The pixel data band is a transmission rate of pixel data output from the imaging unit 21 and input to the transmission unit 22, and the PHY transmission band is a transmission rate of pixel data transmitted from the transmission unit 22 and input to the reception unit 31. The Pad Code is represented by four symbols, K23.7, K28.4, K28.6, and K28.3, which are a combination of four types of K Characters.

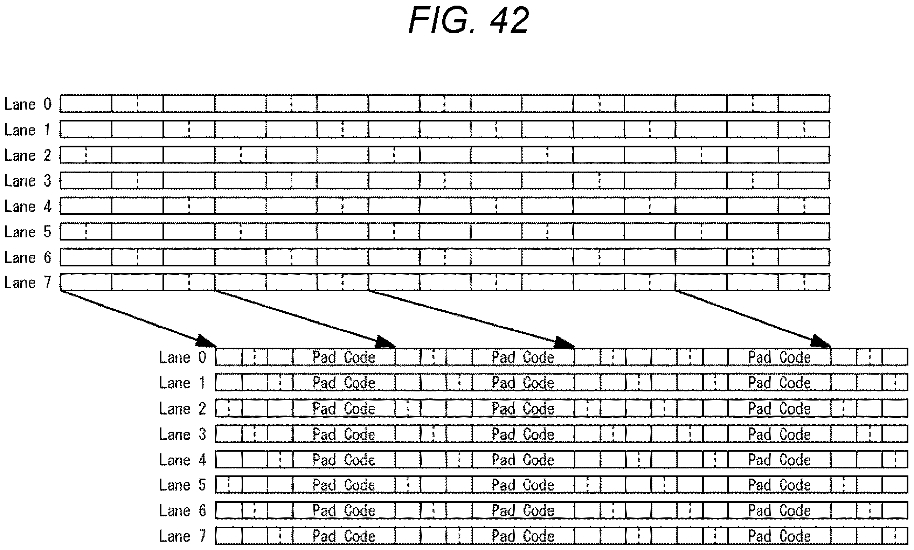

Fig. 42 is a diagram illustrating an example of inserting the Pad Code.

The upper part of Fig. 42 illustrates payload data assigned to each lane before the Pad Code is inserted, and the lower part illustrates the payload data after the Pad Code is inserted. In the example of Fig. 42, the Pad Code is inserted between the third pixel data and the fourth pixel data from the beginning, between the sixth pixel data and the seventh pixel data, and between the twelfth pixel data and the thirteenth pixel data. In this manner, the Pad Code is inserted at the same position in the payload data of each lane of the Lanes 0 to 7.

The Pad Code is inserted into the payload data assigned to the Lane 0 by the control code insertion unit 91 of the signal processing unit 83-0. Similarly, the Pad Code is inserted in the payload data assigned to the other lanes in the signal processing units 83-1 to 83-N at the same timing. The number of Pad Codes is determined on the basis of the difference between the pixel data band and the PHY transmission band, the frequency of the clock signal generated by the clock generation unit 82, and the like.

In this manner, the Pad Code is inserted to adjust the difference between the two bands in a case where the pixel data band is narrow and the PHY transmission band is wide. For example, by inserting the Pad Code, the difference between the pixel data band and the PHY transmission band is adjusted so as to be within a certain range.

Returning to the description of Fig. 40, the Sync Code is a group of symbols used to secure bit synchronization and symbol synchronization between the transmission unit 22 and the reception unit 31. The Sync Code is represented by two symbols, K28.5 and Any **. Any ** indicates that any kind of symbol may be used. The Sync Code is repeatedly transmitted, for example, in the training mode before transmission of packet data is started between the transmission unit 22 and the reception unit 31.

The Deskew Code is a Data Skew between lanes, that is, a group of symbols used for correcting a deviation in reception timing of data received in each lane of the reception unit 31. The Deskew Code is represented by two symbols, K28.5 and Any **. The correction of the Data Skew between lanes using the Deskew Code will be described later.

The Standby Code is a group of symbols used to notify the reception unit 31 that output of the transmission unit 22 is in a state of High-Z (high impedance) or the like and data transmission is no longer performed. That is, the Standby Code is transmitted to the reception unit 31 when transmission of packet data is finished and the Standby state is reached. The Standby Code is represented by two symbols, K28.5 and Any **.

The control code insertion unit 91 outputs packet data to which such a control code is added to the 8B10B symbol encoder 92.

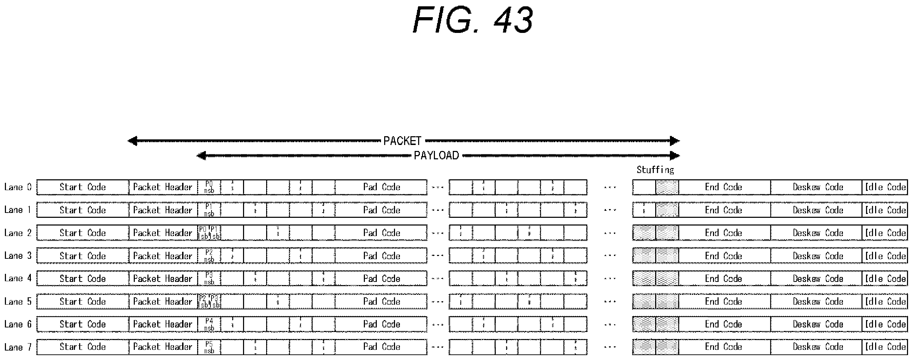

Fig. 43 is a diagram illustrating an example of packet data after the control code is inserted.

As illustrated in Fig. 43, in each of the signal processing units 83-0 to 83-N, the Start Code is added before packet data, and the Pad Code is inserted in the payload data. The End Code is added after the packet data, and the Deskew Code is added after the End Code. In the example of Fig. 43, the Idle Code is added after the Deskew Code.

The 8B10B symbol encoder 92 performs 8B10B conversion on the packet data (packet data to which a control code is added) supplied from the control code insertion unit 91, and outputs the packet data converted into data in 10-bit units to the synchronization unit 93.

The synchronization unit 93 outputs each bit of the packet data supplied from the 8B10B symbol encoder 92 to the transmission unit 94 according to the clock signal generated by the clock generation unit 82. Note that the transmission unit 22 may not be provided with the synchronization unit 93. In this case, the packet data output from the 8B10B symbol encoder 92 is supplied to the transmission unit 94 as it is.

The transmission unit 94 transmits the packet data supplied from the synchronization unit 93 to the reception unit 31 via the transmission line constituting the Lane 0. In a case where data transmission is performed using eight lanes, the packet data is transmitted to the reception unit 31 also using the transmission lines constituting the Lanes 1 to 7.

<Configuration of physical layer of reception unit 31>

Next, a configuration of the physical layer of the reception unit 31 (configuration of the Rx-Phy Layer signal processing unit 31A) will be described.

The reception unit 31 is provided with a PHY-RX state control unit 101 and signal processing units 102-0 to 102-N as a configuration of the physical layer. The signal processing unit 102-0 includes a reception unit 111, a clock generation unit 112, a synchronization unit 113, a symbol synchronization unit 114, a 10B8B symbol decoder 115, a skew correction unit 116, and a control code removal unit 117. The packet data transmitted via the transmission line constituting the Lane 0 is input to the signal processing unit 102-0, and the packet data transmitted via the transmission line constituting the Lane 1 is input to the signal processing unit 102-1. Furthermore, the packet data transmitted via the transmission line constituting Lane N is input to the signal processing unit 102-N.

In this manner, the physical layer of the reception unit 31 is provided with the same number of signal processing units 102-0 to 102-N as the number of lanes, and processes of packet data transmitted using respective lanes are performed in parallel in the signal processing units 102-0 to 102-N, respectively. The configuration of the signal processing unit 102-0 will be described, but the signal processing units 102-1 to 102-N also have similar configurations.

The reception unit 111 receives a signal representing the packet data transmitted from the transmission unit 22 via the transmission line constituting the Lane 0, and outputs the signal to the clock generation unit 112.

The clock generation unit 112 performs bit synchronization by detecting an edge of the signal supplied from the reception unit 111, and generates a clock signal on the basis of detection cycles of edges. The clock generation unit 112 outputs the signal supplied from the reception unit 111 to the synchronization unit 113 together with the clock signal.

The synchronization unit 113 samples signals received by the reception unit 111 according to the clock signal generated by the clock generation unit 112, and outputs packet data obtained by the sampling to the symbol synchronization unit 114. The function of the clock data recovery (CDR) is achieved by the clock generation unit 112 and the synchronization unit 113.

The symbol synchronization unit 114 performs symbol synchronization by detecting a control code included in the packet data or by detecting a part of symbols included in the control code. For example, the symbol synchronization unit 114 detects the K28.5 symbols included in the Start Code, the End Code, and the Deskew Code, and performs symbol synchronization. The symbol synchronization unit 114 outputs packet data in 10-bit units representing each symbol to the 10B8B symbol decoder 115.

Furthermore, the symbol synchronization unit 114 performs symbol synchronization by detecting a boundary of symbols included in the Sync Code repeatedly transmitted from the transmission unit 22 in the training mode before transmission of the packet data is started.

The 10B8B symbol decoder 115 performs the 10B8B conversion on the packet data in 10-bit units supplied from the symbol synchronization unit 114, and outputs the packet data converted into data in eight-bit units to the skew correction unit 116.

The skew correction unit 116 detects the Deskew Code from the packet data supplied from the 10B8B symbol decoder 115. Information of detection timing of the Deskew Code by the skew correction unit 116 is supplied to the PHY-RX state control unit 101.

Furthermore, the skew correction unit 116 corrects the Data Skew between lanes by matching the timing of the Deskew Code with a timing represented by information supplied from the PHY-RX state control unit 101. Information indicating the latest timing among the Deskew Code timings detected in each of the signal processing units 102-0 to 102-N is supplied from the PHY-RX state control unit 101.

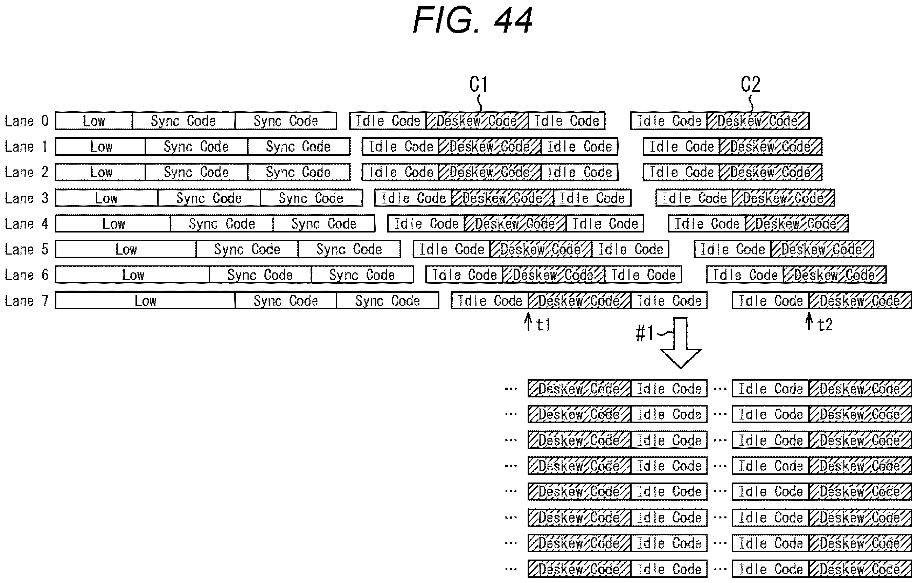

Fig. 44 is a diagram illustrating an example of correction of the Data Skew between lanes using the Deskew Code.

In the example of Fig. 44, Sync Code, Sync Code,..., Idle Code, Deskew Code, Idle Code,..., Idle Code, Deskew Code are transmitted in respective lanes of the Lanes 0 to 7, and respective control codes are received by the reception unit 31. It is a state where reception timing of the same control code is different for every lane, and the Data Skew between lanes is generated.

In this case, the skew correction unit 116 detects the first Deskew Code, Deskew Code C1, and corrects the first timing of the Deskew Code C1 to match time t1 represented by the information supplied from the PHY-RX state control unit 101. The PHY-RX state control unit 101 supplies information of time t1 when the Deskew Code C1 is detected in the Lane 7, which is the latest timing among the timings when the Deskew Code C1 is detected in each lane of the Lanes 0 to 7.

Furthermore, the skew correction unit 116 detects the second Deskew Code, Deskew Code C2, and corrects the first timing of Deskew Code C2 to match time t2 represented by the information supplied from the PHY-RX state control unit 101. The PHY-RX state control unit 101 supplies information on the time t2 when the Deskew Code C2 is detected in the Lane 7, which is the latest timing among the timings when the Deskew Code C2 is detected in each lane of the Lanes 0 to 7.

By performing similar processing in each of the signal processing units 102-1 to 102-N, the Data Skew between lanes is corrected as indicated ahead of arrow #1 in Fig. 44.

The skew correction unit 116 outputs packet data corrected by the Data Skew to the control code removal unit 117.

The control code removal unit 117 removes the control code added to the packet data, and outputs data between the Start Code and the End Code to the link layer as packet data.

The PHY-RX state control unit 101 controls each unit of the signal processing units 102-0 to 102-N to correct the Data Skew between lanes. Furthermore, in a case where the control code is lost due to a transmission error in a predetermined lane, the PHY-RX state control unit 101 adds a control code transmitted in another lane in place of the lost control code, thereby performing error correction for the control code.

<Configuration of link layer of reception unit 31>

Next, a configuration of the link layer of the reception unit 31 (configuration of the Rx-Link Layer signal processing unit 31B) will be described.

The reception unit 31 is provided with a LINK-RX protocol management unit 121, a lane integration unit 122, a packet separation unit 123, a payload error correction unit 124, and a Byte to Pixel conversion unit 125 as the configuration of the link layer. The LINK-RX protocol management unit 121 includes a state control unit 131, a header error correction unit 132, a data removal unit 133, and a footer error detection unit 134.

The lane integration unit 122 integrates packet data supplied from the signal processing units 102-0 to 102-N of the physical layer by rearranging the packet data in a reverse order of the distribution order to each lane by the lane distribution unit 65 of the transmission unit 22.

For example, in a case where the packet data is distributed by the lane distribution unit 65 as indicated ahead of arrow #1 in Fig. 39, the packet data in each lane is integrated to acquire the packet data on the left side in Fig. 39. When the packet data of each lane is integrated, the lane stuffing data is removed by the lane integration unit 122 according to control of the data removal unit 133. The lane integration unit 122 outputs the integrated packet data to the packet separation unit 123.

The packet separation unit 123 separates the packet data for one packet integrated by the lane integration unit 122 into packet data constituting header data and packet data constituting payload data. The packet separation unit 123 outputs the header data to the header error correction unit 132 and outputs the payload data to the payload error correction unit 124.

Furthermore, in a case where the packet includes a footer, the packet separation unit 123 separates the data for one packet into packet data constituting header data, packet data constituting payload data, and packet data constituting footer data. The packet separation unit 123 outputs the header data to the header error correction unit 132 and outputs the payload data to the payload error correction unit 124. Furthermore, the packet separation unit 123 outputs the footer data to the footer error detection unit 134.

In a case where a parity is inserted in the payload data supplied from the packet separation unit 123, the payload error correction unit 124 detects an error in the payload data by performing an error correction operation on the basis of the parity, and corrects the detected error. For example, in a case where the parity is inserted as illustrated in Fig. 35, the payload error correction unit 124 uses the two parities inserted at the end of the first Basic Block and performs error correction for 224 pieces of pixel data located before the parity.

The payload error correction unit 124 outputs the pixel data after error correction obtained by performing error correction for each Basic Block and Extra Block to the Byte to Pixel conversion unit 125. In a case where the parity is not inserted in the payload data supplied from the packet separation unit 123, the payload data supplied from the packet separation unit 123 is output to the Byte to Pixel conversion unit 125 as it is.

The Byte to Pixel conversion unit 125 removes payload stuffing data included in the payload data supplied from the payload error correction unit 124 according to control of the data removal unit 133.

Furthermore, the Byte to Pixel conversion unit 125 performs the Byte to Pixel conversion that converts the data of each pixel in byte units obtained by removing the payload stuffing data into pixel data in eight-bit, 10-bit, 12-bit, 14-bit, or 16-bit units. In the Byte to Pixel conversion unit 125, conversion opposite to the Pixel to Byte conversion by the Pixel to Byte conversion unit 62 of the transmission unit 22 described with reference to Figs. 28 to 32 is performed.

The Byte to Pixel conversion unit 125 outputs pixel data in eight-bit, 10-bit, 12-bit, 14-bit, or 16-bit units obtained by the Byte to Pixel conversion to the frame data output unit 141. In the frame data output unit 141, for example, each line of effective pixels specified by Line Valid of the header information is generated on the basis of the pixel data obtained by the Byte to Pixel conversion unit 125, and each line is arranged according to the Line Number of the header information, thereby generating an image of one frame.

The state control unit 131 of the LINK-RX protocol management unit 121 manages the state of the link layer of the reception unit 31.

The header error correction unit 132 acquires three sets of header information and CRC code on the basis of the header data supplied from the packet separation unit 123. The header error correction unit 132 performs, for each set of the header information and the CRC code, an error detection operation that is an operation for detecting an error in the header information by using the CRC code of the same set as the header information.

Furthermore, the header error correction unit 132 estimates correct header information on the basis of at least one of an error detection result of the header information of each set or a comparison result of data obtained by the error detection calculation, and outputs header information estimated to be correct and a decoding result. The data obtained by the error detection operation is a value obtained by applying a CRC generation polynomial to the header information. Furthermore, the decoding result is information indicating success or failure of decoding.

The three sets of header information and CRC code are set as a set 1, a set 2, and a set 3, respectively. In this case, the header error correction unit 132 acquires whether or not there is an error in the header information of the set 1 (error detection result) by the error detection calculation for the set 1, and data 1 obtained by the error detection calculation. Furthermore, the header error correction unit 132 acquires whether or not there is an error in the header information of the set 2 by the error detection calculation for the set 2, and data 2 obtained by the error detection calculation. The header error correction unit 132 acquires whether or not there is an error in the header information of the set 3 by the error detection calculation for the set 3, and data 3 obtained by the error detection calculation.

Furthermore, the header error correction unit 132 determines whether or not the data 1 and the data 2 match, whether or not the data 2 and the data 3 match, and whether or not the data 3 and the data 1 match.

For example, in a case where no errors are detected by all error detection operations for set 1, set 2, and set 3 and all comparison results of data obtained by the error detection operation match, the header error correction unit 132 selects information indicating successful decoding as a decoding result. Furthermore, the header error correction unit 132 estimates that all the header information is correct, and selects one of the header information of the set 1, the header information of the set 2, and the header information of the set 3 as output information.

On the other hand, in a case where no errors are detected only by the error detection operation for the set 1, the header error correction unit 132 selects information indicating success of decoding as a decoding result and estimates that the header information of the set 1 is correct, and selects the header information of the set 1 as output information.

Furthermore, in a case where no errors are detected only by the error detection operation for the set 2, the header error correction unit 132 selects information indicating success of decoding as a decoding result and estimates that the header information of the set 2 is correct, and selects the header information of the set 2 as output information.

In a case where no errors are detected only by the error detection operation for the set 3, the header error correction unit 132 selects information indicating success of decoding as a decoding result and estimates that the header information of the set 3 is correct, and selects the header information of the set 3 as output information.

The header error correction unit 132 outputs the decoding result and the output information selected as described above to the register 142 to have them stored. In this manner, the error correction of the header information by the header error correction unit 132 is performed by detecting the header information without an error from a plurality of pieces of header information by using the CRC code and outputting the detected header information.

The data removal unit 133 controls the lane integration unit 122 to remove the lane stuffing data, and controls the Byte to Pixel conversion unit 125 to remove the payload stuffing data.

The footer error detection unit 134 acquires a CRC code stored in the footer on the basis of the footer data supplied from the packet separation unit 123. The footer error detection unit 134 performs an error detection operation using the acquired CRC code and detects an error in the payload data. The footer error detection unit 134 outputs an error detection result to have it stored in the register 142.

<Operation of image sensor 11 and DSP12>

Next, a series of processes of the transmission unit 22 and the reception unit 31 having the configurations as above will be described.

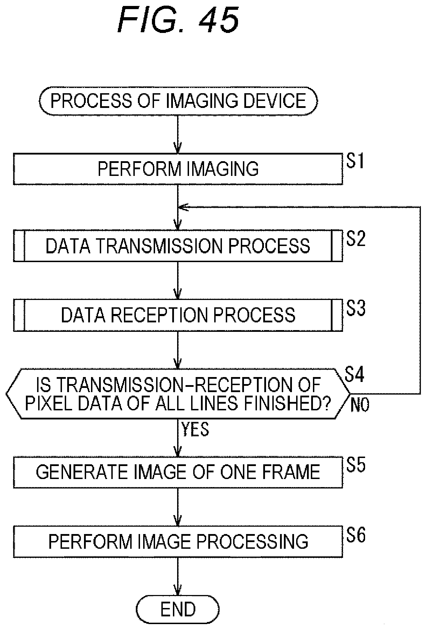

First, operation of an imaging device having the transmission system 1 will be described with reference to a flowchart of Fig. 45. The process of Fig. 45 is started when an instruction to start imaging is given, for example, by pressing a shutter button provided on the imaging device, or the like.

In step S1, the imaging unit 21 of the image sensor 11 performs imaging. The frame data input unit 52 (Fig. 24) of the imaging unit 21 outputs pixel data constituting an image of one frame obtained by image-capturing in order for every piece of data of one pixel.

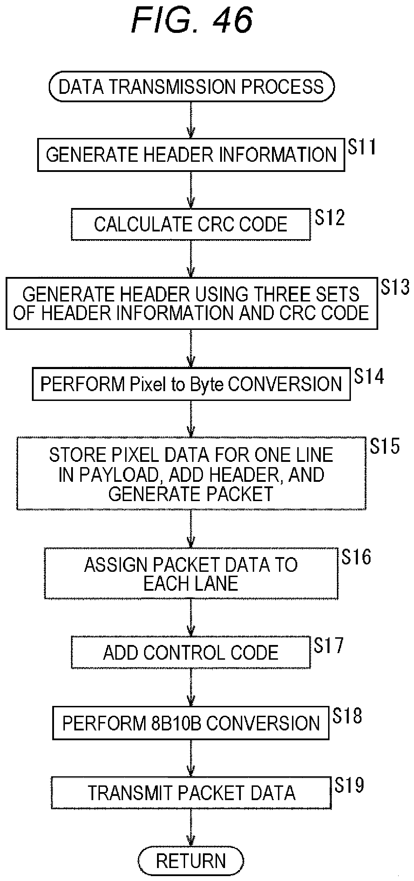

In step S2, a data transmission process is performed by the transmission unit 22. The data transmission process generates a packet in which pixel data for one line is stored in a payload, and packet data constituting the packet is transmitted to the reception unit 31. The data transmission process will be described later with reference to a flowchart of Fig. 46.

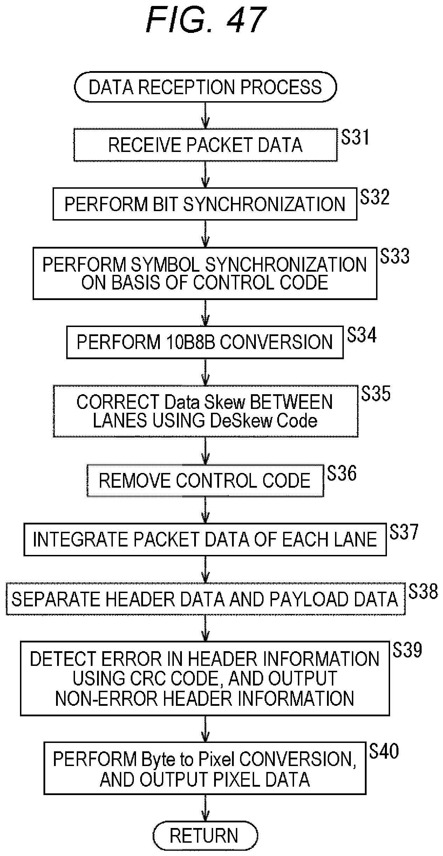

In step S3, a data reception process is performed by the reception unit 31. By the data reception process, the packet data transmitted from the transmission unit 22 is received, and the pixel data stored in the payload is output to the image processing unit 32. The data reception process will be described later with reference to a flowchart of Fig. 47.

The data transmission process performed by the transmission unit 22 in step S2 and the data reception process performed by the reception unit 31 in step S3 are alternately performed for one line of pixel data. That is, when one line of pixel data has been transmitted by the data transmission process, the data reception process is performed, and when one line of pixel data has been received by the data reception process, the data transmission process for the next one line of pixel data is performed. The data transmission process by the transmission unit 22 and the data reception process by the reception unit 31 may be performed temporally in parallel as appropriate. In step S4, the frame data output unit 141 of the image processing unit 32 determines whether or not the transmission-reception of pixel data of all the lines constituting the image of one frame has been finished and, in a case where it is determined that the transmission-reception has not been finished, repeats the processing of step S2 and thereafter.

In a case where it is determined in step S4 that the transmission-reception of pixel data of all lines constituting the image of one frame has been finished, in step S5, the frame data output unit 141 of the image processing unit 32 generates an image of one frame on the basis of the pixel data supplied from the reception unit 31.

In step S6, the image processing unit 32 performs image processing using the image of one frame and finishes the processing.

Next, the data transmission process performed in step S2 of Fig. 45 will be described with reference to a flowchart of Fig. 46.

The processing of steps S11 to S16 is signal processing of the link layer performed by the Tx-Link Layer signal processing unit 22A, and the processing of steps S17 to S19 is signal processing of the physical layer performed by the Tx-Phy Layer signal processing unit 22B.

In step S11, the header generation unit 72 generates header information including Frame Start, Frame End, Line Valid, Line Number, and Reserved.

In step S12, the header generation unit 72 applies the header information to the generation polynomial to calculate the CRC code.

In step S13, the header generation unit 72 generates a set of header information and CRC code by adding a CRC code to the header information, and generates the header by repeatedly arranging three sets of the same header information and CRC code.

In step S14, the Pixel to Byte conversion unit 62 acquires pixel data supplied from the frame data input unit 52 and performs the Pixel to Byte conversion. The Pixel to Byte conversion unit 62 outputs the payload data generated by grouping the pixel data in byte units obtained by the Pixel to Byte conversion, adding the payload stuffing data, and the like. A parity is inserted into the payload data by the payload ECC insertion unit 63 as appropriate.

In step S15, the packet generation unit 64 generates a packet on the basis of the payload data including pixel data for one line and the header generated by the header generation unit 72, and outputs the packet data constituting one packet.

In step S16, the lane distribution unit 65 assigns the packet data supplied from the packet generation unit 64 to a plurality of lanes used for data transmission.

In step S17, the control code insertion unit 91 adds the control code to the packet data supplied from the lane distribution unit 65.

In step S18, the 8B10B symbol encoder 92 performs 8B10B conversion of the packet data to which the control code is added, and outputs the packet data converted into data in 10-bit units.

In step S19, the synchronization unit 93 outputs the packet data supplied from the 8B10B symbol encoder 92 according to the clock signal generated by the clock generation unit 82, and causes the transmission unit 94 to transmit the packet data. The processing of steps S17 to S19 is performed in parallel by the signal processing units 83-0 to 83-N. When the transmission of pixel data for one line is finished, the processing returns to step S2 in Fig. 45 and the processing of step S2 and thereafter is performed.

Next, the data reception process performed in step S3 of Fig. 45 will be described with reference to a flowchart of Fig. 47.

The processing of steps S31 to S36 is signal processing of the physical layer performed by the Rx-Phy Layer signal processing unit 31A, and the processing of steps S37 to S40 is signal processing of the link layer performed by the Rx-Link Layer signal processing unit 31B.

In step S31, the reception unit 111 receives a signal representing the packet data transmitted from the transmission unit 22. The processing of steps S31 to S36 is performed in parallel by the signal processing units 102-0 to 102-N.

In step S32, the clock generation unit 112 performs bit synchronization by detecting an edge of the signal supplied from the reception unit 111. The synchronization unit 113 samples the signal received by the reception unit 111 and outputs packet data to the symbol synchronization unit 114.

In step S33, the symbol synchronization unit 114 performs symbol synchronization by detecting a control code included in the packet data, or the like.

In step S34, the 10B8B symbol decoder 115 performs the 10B8B conversion on the packet data after the symbol synchronization, and outputs packet data converted into data in eight-bit units.

In step S35, the skew correction unit 116 detects the Deskew Code, and as described above, corrects the Data Skew between lanes so as to align the timing of the Deskew Code with a timing represented by information supplied from the PHY-RX state control unit 101.

In step S36, the control code removal unit 117 removes the control code added to the packet data.

In step S37, the lane integration unit 122 integrates the packet data supplied from the signal processing units 102-0 to 102-N.

In step S38, the packet separation unit 123 separates the packet data integrated by the lane integration unit 122 into packet data constituting the header data and packet data constituting the payload data.

In step S39, the header error correction unit 132 performs an error detection operation using the CRC code for each set of the header information and the CRC code included in the header data separated by the packet separation unit 123. Furthermore, the header error correction unit 132 selects and outputs error-free header information on the basis of an error detection result of each set and a comparison result of data obtained by the error detection calculation.

In step S40, the Byte to Pixel conversion unit 125 performs Byte to Pixel conversion of the payload data and outputs pixel data in eight-bit, 10-bit, 12-bit, 14-bit, or 16-bit units. For the payload data to be converted by Byte to Pixel, error correction using a parity is appropriately performed by the payload error correction unit 124.

When the processing of pixel data for one line is finished, the processing returns to step S3 in Fig. 45 and the processing of step S3 and thereafter is performed.

Data transmission between the image sensor 11 and the DSP 12 is performed using a packet format in which one line of one frame corresponds to one packet as described above.

The packet format used for data transmission between the image sensor 11 and the DSP 12 can be said to be a format that minimizes transmission of header information and control codes indicating packet boundaries, such as Start Code and End Code, and makes it possible to prevent decrease in transmission efficiency. If a packet format is employed in which pixel data stored in the payload of one packet is less than one line, it is necessary to transmit more packets in order to transmit pixel data of the entire one frame, and transmission efficiency decreases by increases in the numbers of pieces of header information and control codes to be transmitted.

Furthermore, it is possible to suppress transmission latency by preventing decrease in transmission efficiency, and it is possible to achieve a high pixel/high frame rate interface that needs high-speed transmission of a large amount of image data.

By employing a packet format that is premised on increasing reliability and redundancy of transmission and performing error correction on the reception unit 31 side, it is possible to secure measures against transmission errors in header information. Since transmission of Frame/Line (V/H) synchronization information or the like is performed using header information, if the header information is lost due to a transmission error, it may cause a major problem in the system, but such a problem can be prevented.

Furthermore, it is also possible to suppress increase in mounting cost and power consumption for ensuring measures against transmission errors of header information. That is, the packet format used for data transmission between the image sensor 11 and the DSP 12 has a CRC code added so that the DSP 12 can detect the presence or absence of a transmission error in the header information. Furthermore, by transmitting three sets of header information and CRC code, it is possible to correct the header information to the correct header information in the DSP 12 in a case where a transmission error of the header information occurs.

If the error correction code is used as a measure against transmission errors of header information, it becomes necessary to prepare a circuit for calculating the error correction code in the transmission unit 22, and prepare a circuit for performing the error correction operation in the reception unit 31. Since it is the CRC code, which is an error detection code, that is added to the header information, the circuit scale and power consumption can be reduced as compared with the cases where a circuit for performing an operation related to error correction is prepared. Furthermore, since the reception unit 31 does not request the transmission unit 22 to retransmit the header information in a case where an error in the header information is detected, it is not necessary to prepare a transmission line in the reverse direction for the retransmitting request.

By increasing the redundancy and configuring the control code by combining multiple K Characters of the 8B10B code, the error probability of the control code can be reduced, and thus it becomes possible to secure measures against transmission errors for the control code with a relatively simple circuit.

Specifically, three types of K Characters are used in combination of four symbols for the Start Code, but if at least a symbol other than K28.5 can be detected, the Start Code can be specified by the reception unit 31, and it can be said that the resistance against transmission errors is high. The same applies to the End Code.

Furthermore, although four types of K Characters are used in combination for the Pad Code, by assigning more types of K Characters than other control codes, it is possible to improve error resistance compared to other control codes. That is, if one of the four types of symbols can be detected, the Pad Code can be specified by the reception unit 31. Since the Pad Code has a higher transmission frequency than the Start Code, the End Code, and the like, it is given a structure that can further improve error resistance.

Moreover, by transmitting the same control code to every lane at the same timing, even if a transmission error occurs in one lane and the control code is lost, the control code that has become an error can be reproduced using the control code of another lane.

Furthermore, since the number of K Characters is limited, each of the control codes is configured by combining minimum necessary K Characters. For example, for the Sync Code, the Deskew Code, and the Standby Code, which can relatively tolerate transmission errors by repeatedly transmitting, a data structure that does not require to assign an additional K Character is used.

Since the control code necessary for resynchronization is assigned to every packet (one line), resynchronization can be performed quickly in a case where the bit synchronization is lost due to disturbance such as static electricity or noise. Furthermore, the influence of transmission error due to loss of synchronization can be minimized.

Specifically, the bit synchronization can be performed by detecting a transition or edge of the bit data after the 8B10B conversion in the CDR implemented by the clock generation unit 112 and the synchronization unit 113. If the transmission unit 22 continues to send data, the bit synchronization can be achieved within the period assumed as a CDR lock time.

Furthermore, even in a case where the symbol synchronization is lost, resynchronization can be quickly performed by detecting a specific K Character (K28.5) in the symbol synchronization unit 114. Since K28.5 is used for each of the Start Code, the End Code, and the Deskew Code, it is possible to perform symbol synchronization at three locations during a transmission period of packet data for one packet.

Furthermore, it is also possible to perform synchronization between lanes by making it possible to correct the Data Skew between lanes using the Deskew Code.

In the link layer, by allowing respective pieces of packet data to be processed in parallel in groups such as 16 pieces each (in the case of the example of Fig. 33, in 16-byte units), as compared to a case where packet data is processed one by one in one clock cycle, the circuit scale and the amount of memory can be suppressed. In terms of mounting, between a case of processing the packet data one by one and a case of processing them collectively for every predetermined unit, the latter can reduce the circuit scale and the like. By reducing the circuit scale, it is also possible to reduce power consumption.

Furthermore, upon assigning lanes, error resistance can be improved by assigning continuous packet data to different lanes. Even in a case where an error occurs across a number of consecutive pieces of packet data that exceeds the error correction capability by parity in a certain lane, the position of the packet data in which the error has occurred will be distributed due to lane coupling performed in the reception unit 31, and it may be possible to correct error using the parity. The error correction capability by parity is determined by parity length.

Moreover, the circuit scale of the transmission unit 22 and the reception unit 31 can be reduced by performing ECC processing higher than lane distribution or lane integration with the side closer to the physical layer being the lower level. For example, in the transmission unit 22, in a case where an ECC parity is inserted into the payload after the packet data is assigned to each lane, it is necessary to prepare the payload ECC insertion unit for every lane, and the circuit scale increases but such a thing can be prevented.

In the physical layer, parallel processing of packet data is performed by multiple circuits, but by sharing the PHY-TX state control unit 81 and clock generation unit 82, the circuit can be simplified as compared to cases where those circuits are prepared for every lane. Furthermore, by using a protocol that does not transmit a different control code for every lane, it is possible to simplify the circuit that processes the packet data of each lane.

<Switching number of lanes>

Transmission of the same control code in respective lanes at the same timing is performed not only during normal data transmission but also, for example, in a case of switching the number of lanes. Even in a case of switching the number of lanes, all states of active lanes (lanes used for data transmission) are the same.

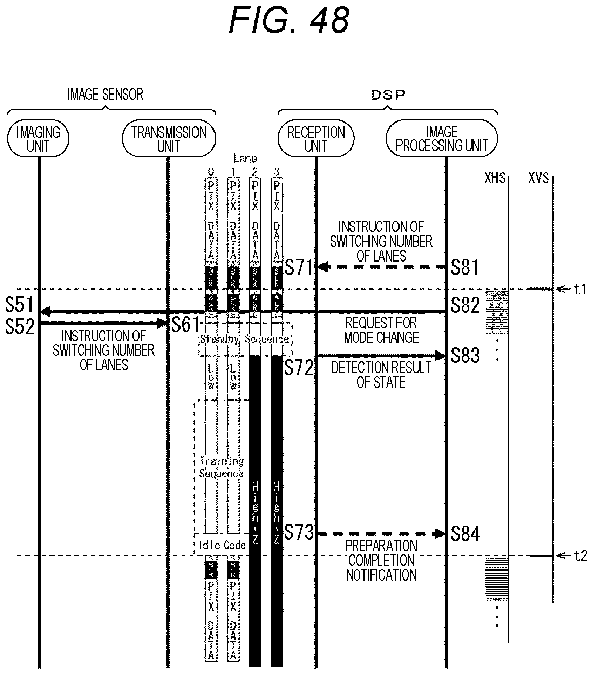

Fig. 48 is a diagram illustrating a control sequence in a case of switching the number of lanes.

Timings of a vertical synchronization signal (XVS) and a horizontal synchronization signal (XHS) are illustrated on the right side of Fig. 48. A case will be described in which the pixel data of each line that constitutes the image of one frame is transmitted according to the horizontal synchronization signal until time t1 when the vertical synchronization signal is detected, and the active lanes are changed from four lanes to two lanes at the timing of time t1. Until time t1, data transmission is performed using four lanes.

The state of each lane is illustrated in a vertical direction in a substantially center of Fig. 48. "PIX DATA" represents that pixel data is being transmitted in the lane to which these characters are attached. "E", "BLK", and "S" following "PIX DATA" represent Frame End, blanking period, and Frame Start, respectively.

In a case where transmission of pixel data of the frame to be transmitted is finished in the one frame period up to the time t1, in step S81, the image processing unit 32 instructs the reception unit 31 to switch the number of lanes from four to two. The instruction by the image processing unit 32 is received by the reception unit 31 in step S71.

When time t1 is reached, in step S82, the image processing unit 32 requests the imaging unit 21 of the image sensor 11 for a mode change. The request for mode change transmitted to the imaging unit 21 also includes information indicating that the number of lanes is switched from four to two. Although not illustrated in Fig. 1 and the like, a transmission line is provided between the imaging unit 21 and the image processing unit 32 for the image processing unit 32 to transmit information on set values related to imaging such as shutter speed and gain to the imaging unit 21. The request for mode change is also transmitted to the imaging unit 21 via this transmission line.

In step S51, the imaging unit 21 receives the request for mode change from the image processing unit 32 and, in step S52, instructs the transmission unit 22 to switch the number of lanes from four to two. The instruction from the imaging unit 21 is received by the transmission unit 22 in step S61.

A Standby Sequence is performed between the transmission unit 22 and the reception unit 31, and the Standby Code is repeatedly transmitted from the transmission unit 22 to the reception unit 31 using the Lanes 0 to 3. When the Standby Sequence is finished, a state detection result is output from the reception unit 31 in step S72, and is received by the image processing unit 32 in step S83. Furthermore, the Lane 0 and Lane 1 that maintain the active state are in a Low state, and the Lane 2 and Lane 3 that finish the data transmission are in a High-Z state.

A Training Sequence is performed between the transmission unit 22 and the reception unit 31, and the Sync Code is repeatedly transmitted from the transmission unit 22 to the reception unit 31 using the Lane 0 and Lane 1. The bit synchronization is ensured in the reception unit 31, and the symbol synchronization is ensured by detecting the Sync Code.

When the training sequence is finished, in step S73, the reception unit 31 notifies the image processing unit 32 that the preparation has been completed. The notification by the reception unit 31 is received by the image processing unit 32 in step S84, and a series of control sequences in a case of switching the number of lanes ends.

In this manner, in the control sequence of switching the number of lanes, the Standby Code is transmitted at a time of Standby Sequence even in the Lanes 2 and 3 that finish the data transmission so that it is in the same state as the Lanes 0 and 1 used for data transmission continuously. For example, for the Lanes 2 and 3, it is conceivable to keep the state in High-Z as it is without transmitting the Standby Code, but the state will be different from the lane that is continuously used for data transmission, and the control will be complicated.

<<Modification example>>

<Example of connection between SLVS-EC standard and other transmission standard>

- Example of combination

As described with reference to Figs. 21 and 22, it is possible to mount the signal processing unit of the SLVS-EC standard in combination with the signal processing unit of another transmission standard. Examples of combinations of standards will be described.

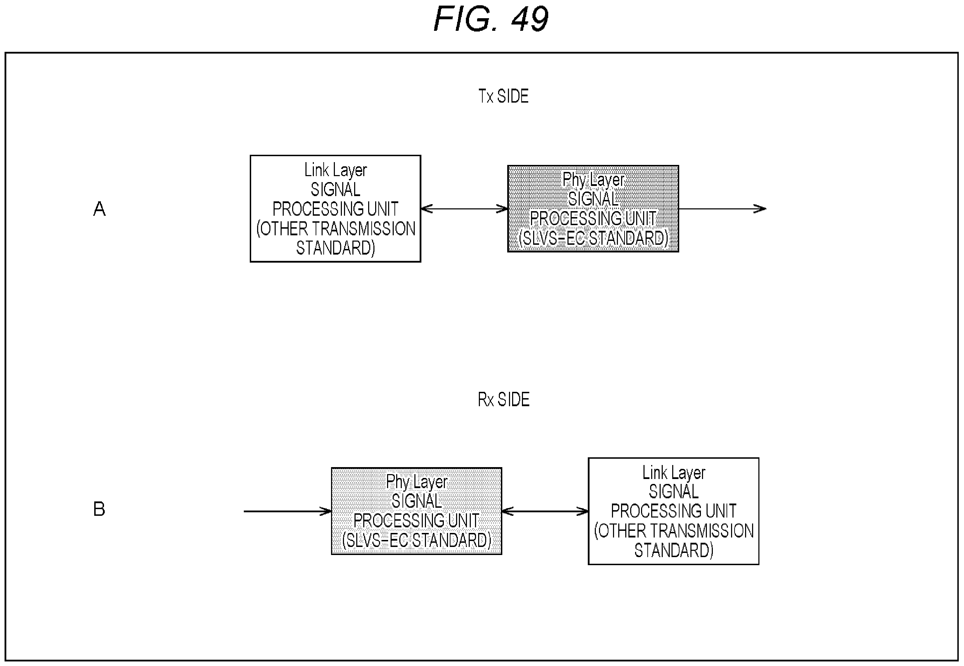

Fig. 49 is a diagram illustrating a first combination.

The first combination illustrated in Fig. 49 represents an example in which a Link Layer signal processing unit of the other transmission standard is used as the signal processing unit that performs signal processing of the link layer, and a Phy Layer signal processing unit of the SLVS-EC standard is used as the signal processing unit that performs signal processing of the physical layer.

That is, the first combination is the same combination as the combination described with reference to Fig. 21. A in Fig. 49 illustrates a configuration on the transmitting side, and B in Fig. 49 illustrates a configuration on the receiving side.

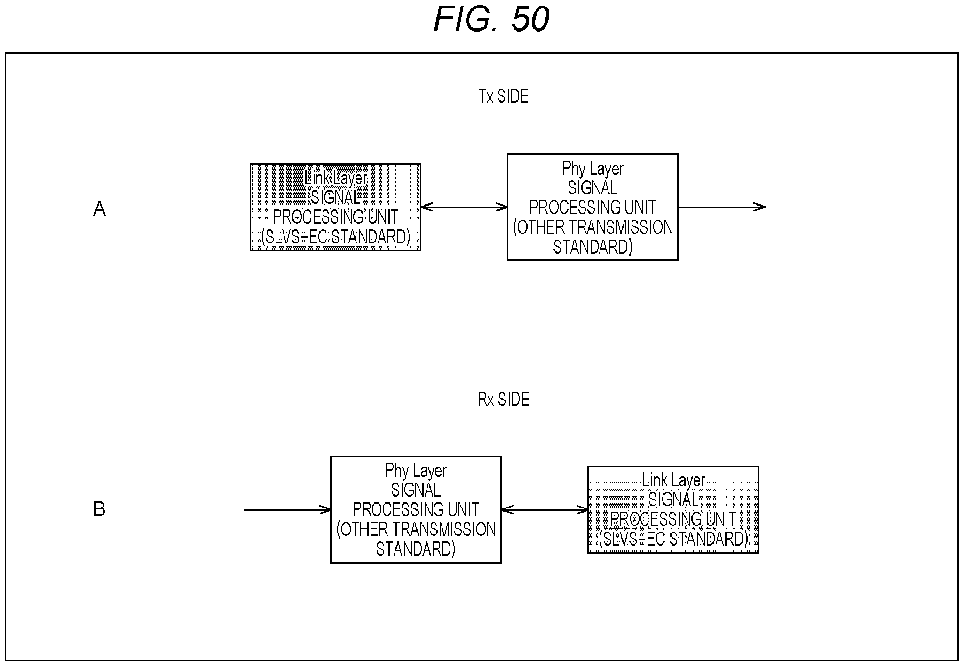

Fig. 50 is a diagram illustrating a second combination.

The second combination illustrated in Fig. 50 represents an example in which a Link Layer signal processing unit of the SLVS-EC standard is used as the signal processing unit that performs signal processing of the link layer, and a Phy Layer signal processing unit of the other transmission standard is used as the signal processing unit that performs signal processing of the physical layer.

That is, the second combination is the same combination as the combination described with reference to Fig. 22. A in Fig. 50 illustrates a configuration on the transmitting side, and B in Fig. 50 illustrates a configuration on the receiving side.

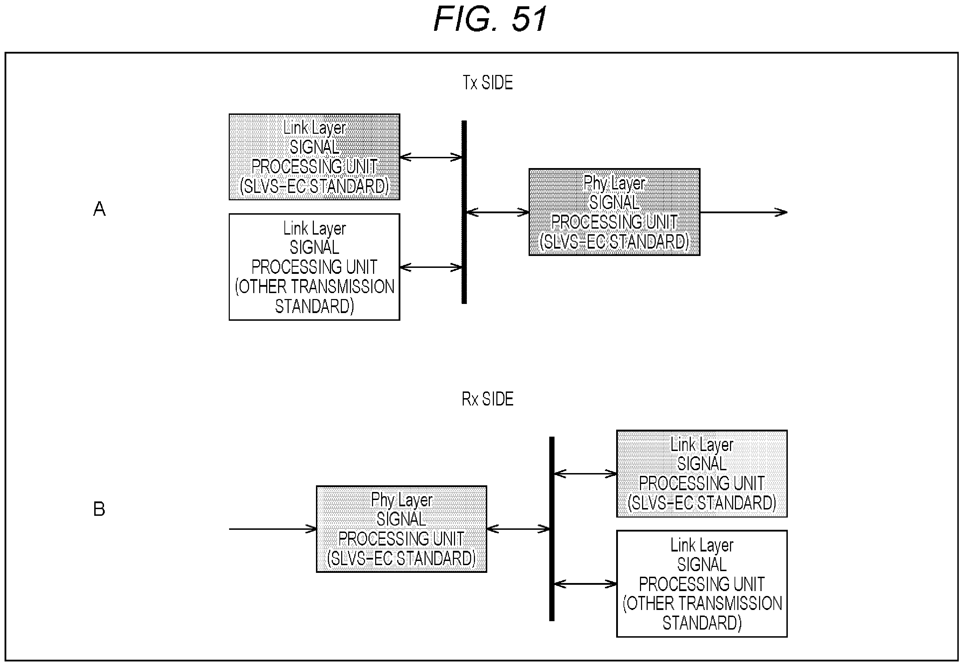

Fig. 51 is a diagram illustrating a third combination.

The third combination illustrated in Fig. 51 represents an example in which a Link Layer signal processing unit of the SLVS-EC standard and a Link Layer signal processing unit of the other transmission standard are used in parallel as the signal processing unit that performs signal processing of the link layer, and a Phy Layer signal processing unit of the SLVS-EC standard is used as a signal processing unit that performs signal processing of the physical layer.

The Link Layer signal processing unit of the SLVS-EC standard and the Link Layer signal processing unit of the other transmission standard are connected to the Phy Layer signal processing unit of the SLVS-EC standard via an MUX (multiplexer). A in Fig. 51 illustrates a configuration on the transmitting side, and B in Fig. 51 illustrates a configuration on the receiving side.

By providing the Link Layer signal processing unit of the SLVS-EC standard and the Link Layer signal processing unit of the other transmission standard in parallel, it is possible for an application of an upper layer on the transmitting side to select one of the transmission standards and to input a signal to the Link Layer signal processing unit.

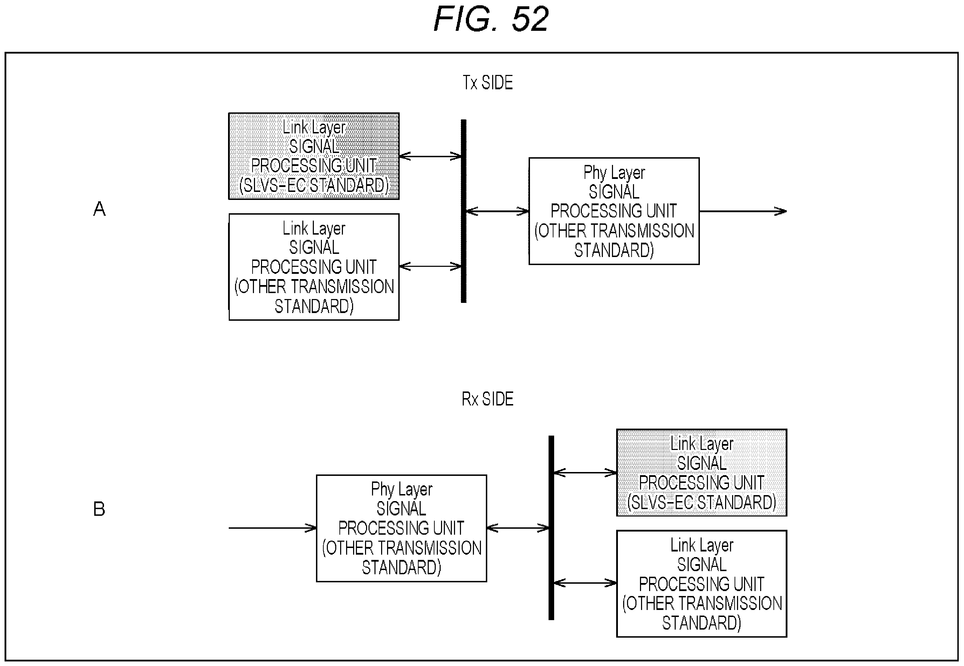

Fig. 52 is a diagram illustrating a fourth combination.

The fourth combination illustrated in Fig. 52 represents an example in which a Link Layer signal processing unit of the SLVS-EC standard and a Link Layer signal processing unit of the other transmission standard are used in parallel as the signal processing unit that performs signal processing of the link layer, and a Phy Layer signal processing unit of the other transmission standard is used as the signal processing unit that performs signal processing of the physical layer.

The Link Layer signal processing unit of the SLVS-EC standard and the Link Layer signal processing unit of the other transmission standard are connected to the Phy Layer signal processing unit of the other transmission standard via an MUX. A in Fig. 52 illustrates a configuration on the transmitting side, and B in Fig. 52 illustrates a configuration on the receiving side.

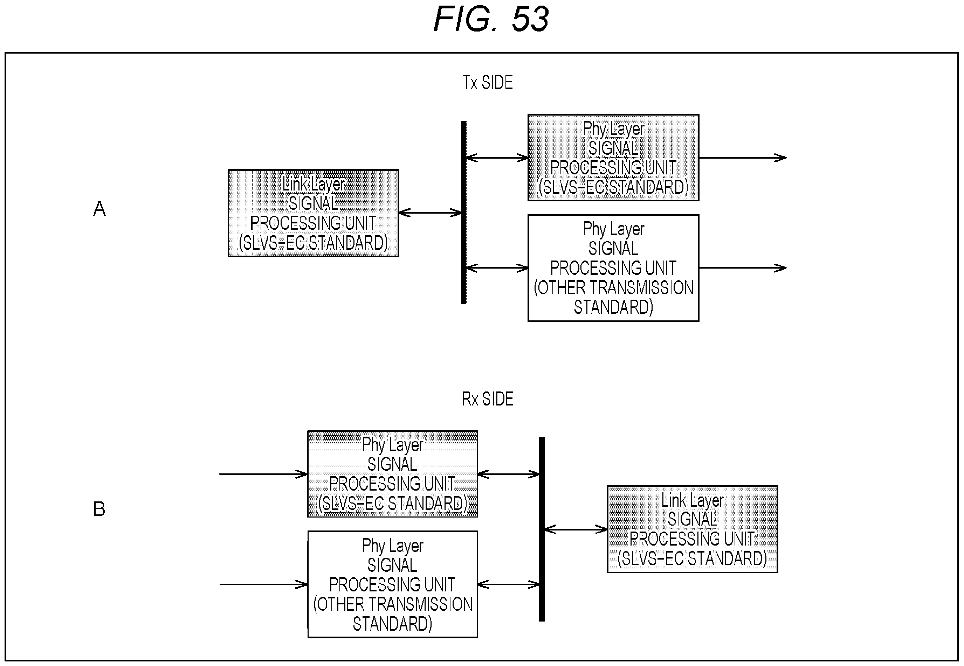

Fig. 53 is a diagram illustrating a fifth combination.

The fifth combination illustrated in Fig. 53 represents an example in which a Link Layer signal processing unit of the SLVS-EC standard is used as the signal processing unit that performs signal processing of the link layer, and a Phy Layer signal processing unit of the SLVS-EC standard and a Phy Layer signal processing unit of the other transmission standard are used in parallel as a signal processing unit that performs signal processing of the physical layer.

The Link Layer signal processing unit of the SLVS-EC standard is connected to the Phy Layer signal processing unit of the SLVS-EC standard and the Phy Layer signal processing unit of the other transmission standard via an MUX. A in Fig. 53 illustrates a configuration on the transmitting side, and B in Fig. 53 illustrates a configuration on the receiving side.

By providing the Phy Layer signal processing unit of the SLVS-EC standard and the Phy Layer signal processing unit of the other transmission standard in parallel, it is possible for the Link Layer signal processing unit on the transmitting side to select one of the transmission standards according to characteristics of the transmission line and the like, and to input a signal to the Phy signal processing unit.

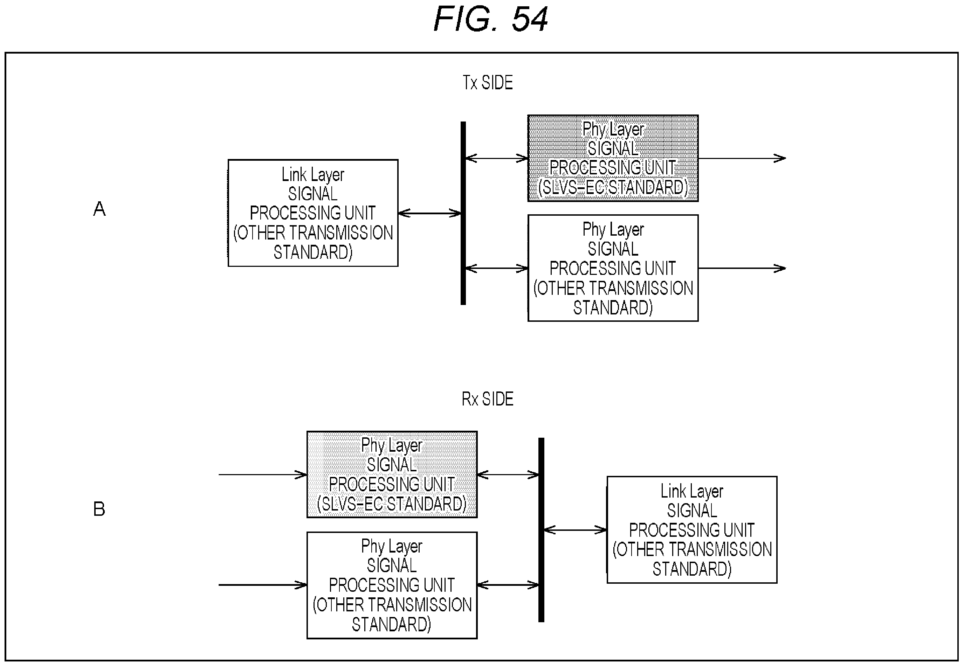

Fig. 54 is a diagram illustrating a sixth combination.

The sixth combination illustrated in Fig. 54 represents an example in which a Link Layer signal processing unit of the other transmission standard is used as the signal processing unit that performs signal processing of the link layer, and a Phy Layer signal processing unit of the SLVS-EC standard and a Phy Layer signal processing unit of the other transmission standard are used in parallel as the signal processing unit that performs signal processing of the physical layer.

The Link Layer signal processing unit of the other transmission standard is connected to the Phy Layer signal processing unit of the SLVS-EC standard and the Phy Layer signal processing unit of the other transmission standard via an MUX. A in Fig. 54 illustrates a configuration on the transmitting side, and B in Fig. 54 illustrates a configuration on the receiving side.

A mounting example of each combination will be described below. Overlapping descriptions for each combination will be omitted as appropriate.

- First combination

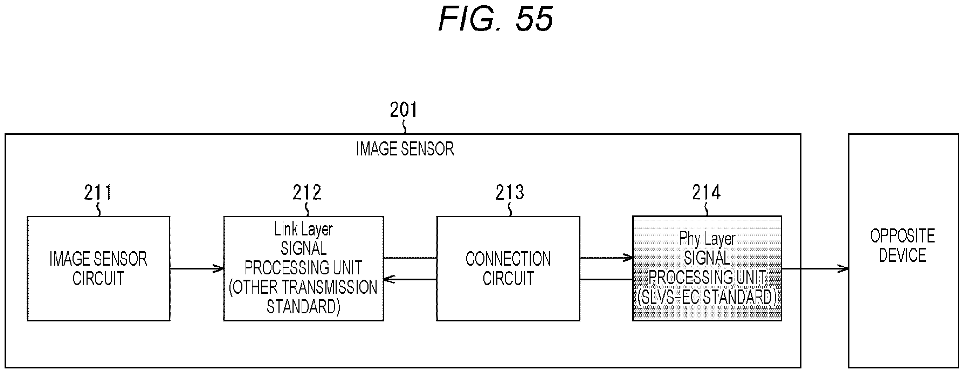

Fig. 55 is a diagram illustrating a configuration example on the transmitting side in the first combination.

As described with reference to Fig. 49, the first combination is a combination using the Link Layer signal processing unit of the other transmission standard and the Phy Layer signal processing unit of the SLVS-EC standard.

Fig. 55 illustrates the image sensor 201 as a configuration on the transmitting side. The image sensor 201 corresponds to the image sensor 11 in Fig. 1.

The image sensor 201 includes an image sensor circuit 211, a Link Layer signal processing unit (other transmission standard) 212, a connection circuit 213, and a Phy Layer signal processing unit (SLVS-EC standard) 214.

The Link Layer signal processing unit and the Phy Layer signal processing unit will be described by giving the names of the transmission standards corresponding to the respective signal processing units. For example, the signal processing unit of the Link Layer of the other transmission standard becomes the Link Layer signal processing unit (other transmission standard), and the signal processing unit of the Phy Layer of the SLVS-EC standard becomes the Phy Layer signal processing unit (SLVS-EC standard).

Note that in Fig. 55, the Phy Layer signal processing unit (SLVS-EC standard) 214, which is the signal processing unit of the SLVS-EC standard, is colored. The same applies to other diagrams.

The image sensor circuit 211 captures an image and outputs pixel data constituting the image of one frame to the Link Layer signal processing unit (other transmission standard) 212 in order for every piece of data of one pixel. The image sensor circuit 211 corresponds to the imaging unit 21 in Fig. 1. The Link Layer signal processing unit (other transmission standard) 212, the connection circuit 213, and the Phy Layer signal processing unit (SLVS-EC standard) 214 constitute the transmission unit 22 of Fig. 1.

The Link Layer signal processing unit (other transmission standard) 212 performs signal processing of the link layer on data supplied from the image sensor circuit 211. In the Link Layer signal processing unit (other transmission standard) 212, signal processing of the link layer of the other transmission standard, which is different from signal processing of the link layer of the SLVS-EC standard, is performed. The Link Layer signal processing unit (other transmission standard) 212 outputs a signal obtained by performing the signal processing of the link layer to the connection circuit 213.

The connection circuit 213 appropriately converts signals transmitted and received between the Link Layer signal processing unit (other transmission standard) 212 and the Phy Layer signal processing unit (SLVS-EC standard) 214. The connection circuit 213 is provided with a conversion unit that converts a signal supplied from one signal processing unit into a signal of a format necessary for the other signal processing unit.

In a case where a signal (referred to as a signal A) necessary for the Phy Layer signal processing unit (SLVS-EC standard) 214 is not supplied from the Link Layer signal processing unit (other transmission standard) 212, the connection circuit 213 generates the signal A by converting a signal supplied from the Link Layer signal processing unit (other transmission standard) 212 by the conversion unit. The connection circuit 213 outputs the generated signal A to the Phy Layer signal processing unit (SLVS-EC standard) 214. The input of the signal A to the Phy Layer signal processing unit (SLVS-EC standard) 214 is performed according to, for example, the specifications related to the interface on the transmitting side described with reference to Fig. 3 and so on.

Similarly, in a case where a signal (referred to as a signal B) necessary for the Link Layer signal processing unit (other transmission standard) 212 is not supplied from the Phy Layer signal processing unit (SLVS-EC standard) 214, the connection circuit 213 generates the signal B by converting a signal supplied from the Phy Layer signal processing unit (SLVS-EC standard) 214 by the conversion unit. The connection circuit 213 outputs the generated signal B to the Link Layer signal processing unit (other transmission standard) 212. The input of the signal B to the Link Layer signal processing unit (other transmission standard) 212 is performed according to the specifications defined as the input of the Link Layer of the other transmission standard.

Furthermore, the connection circuit 213 is provided with a delay unit. The connection circuit 213 changes the input timing for the Phy Layer signal processing unit (SLVS-EC standard) 214 by delaying the signal supplied from the Link Layer signal processing unit (other transmission standard) 212 by the delay unit.

In this manner, in the connection circuit 213, by performing signal processing such as conversion and delay, an input signal of the physical layer of the SLVS-EC standard is generated on the basis of a signal obtained by the signal processing of the link layer of the other transmission standard. The input signal of the physical layer of the SLVS-EC standard is generated so that the original signal becomes a signal representing a similar content to that represented by the other transmission standard.

In a case where the Link Layer signal processing unit (other transmission standard) 212 makes a transition to a stopped state or an UltraLowPower state, the connection circuit 213 may input a Low signal to the port TxEnable of the Phy Layer signal processing unit (SLVS-EC standard) 214 (arrow #31 in Fig. 9), and notify the receiving side that it is in the stopped state or UltraLowPower state.

Furthermore, in a case where the amount of payload data supplied from the Link Layer signal processing unit (other transmission standard) 212 does not match the lane stuffing described with reference to Fig. 39, the connection circuit 213 inserts data with which the receiving side can determine that the lane stuffing data is inserted, and outputs the data to the Phy Layer signal processing unit (SLVS-EC standard) 214.

Moreover, in a case where the amount of payload data output from the Link Layer signal processing unit (other transmission standard) 212 is less than the amount of data output by the Phy Layer signal processing unit (SLVS-EC standard) 214, the connection circuit 213 controls the port TxDataValid and notifies the Phy Layer signal processing unit (SLVS-EC standard) 214 that the amount of data is small. A Pad Code insertion unit may be provided in the connection circuit 213 so that the insertion of the Pad Code described with reference to Fig. 40 is performed in the connection circuit 213.

The Phy Layer signal processing unit (SLVS-EC standard) 214 performs signal processing of the physical layer on a signal supplied from the connection circuit 213. In the Phy Layer signal processing unit (SLVS-EC standard) 214, signal processing of the physical layer of the SLVS-EC standard is performed. The Phy Layer signal processing unit (SLVS-EC standard) 214 transmits a signal of the SLVS-EC standard obtained by performing the signal processing of the physical layer to an opposite device via the transmission line. The opposite device of Fig. 55 is a device such as the DSP 12 of Fig. 1 having the reception unit 31.

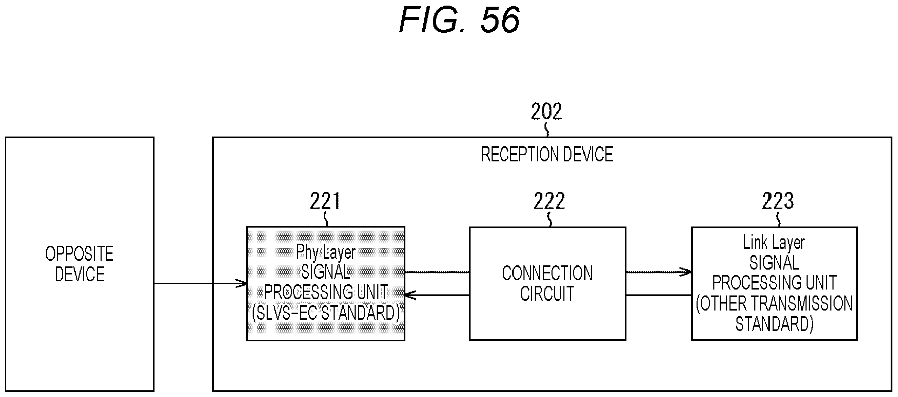

Fig. 56 is a diagram illustrating a configuration example of the receiving side in the first combination.

Fig. 56 illustrates the reception device 202 as a configuration on the receiving side. The reception device 202 corresponds to the DSP 12 in Fig. 1.

The reception device 202 includes a Phy Layer signal processing unit (SLVS-EC standard) 221, a connection circuit 222, and a Link Layer signal processing unit (other transmission standard) 223. The Phy Layer signal processing unit (SLVS-EC standard) 221, the connection circuit 222, and the Link Layer signal processing unit (other transmission standard) 223 constitute the reception unit 31 of Fig. 1. The reception device 202 is provided with a configuration such as the image processing unit 32 in a subsequent stage of the Link Layer signal processing unit (other transmission standard) 223.

The Phy Layer signal processing unit (SLVS-EC standard) 221 receives a signal of the SLVS-EC standard transmitted from the image sensor 201 as an opposite device, and performs signal processing of the physical layer on the received signal. The Phy Layer signal processing unit (SLVS-EC standard) 221 performs signal processing of the physical layer of the SLVS-EC standard. The Phy Layer signal processing unit (SLVS-EC standard) 221 outputs a signal obtained by performing the signal processing of the physical layer to the connection circuit 222. The output of the signal to the connection circuit 222 is performed according to, for example, the specifications regarding the interface on the receiving side described with reference to Fig. 11 and the like.

The connection circuit 222 appropriately converts signals transmitted and received between the Phy Layer signal processing unit (SLVS-EC standard) 221 and the Link Layer signal processing unit (other transmission standard) 223. The connection circuit 222 is provided with a conversion unit that converts a signal supplied from one signal processing unit into a signal of a format necessary for the other signal processing unit.

In a case where a signal (referred to as a signal A) necessary for the Link Layer signal processing unit (other transmission standard) 223 is not supplied from the Phy Layer signal processing unit (SLVS-EC standard) 221, the connection circuit 222 generates the signal A by converting a signal supplied from the Phy Layer signal processing unit (SLVS-EC standard) 221 by the conversion unit. The connection circuit 222 outputs the generated signal A to the Link Layer signal processing unit (other transmission standard) 223. The input of the signal A to the Link Layer signal processing unit (other transmission standard) 223 is performed according to the specifications defined as the input of the Link Layer of the other transmission standard.

Similarly, in a case where a signal (referred to as a signal B) necessary for the Phy Layer signal processing unit (SLVS-EC standard) 221 is not supplied from the Link Layer signal processing unit (other transmission standard) 223, the connection circuit 222 generates the signal B by converting a signal supplied from the Link Layer signal processing unit (other transmission standard) 223 by the conversion unit. The connection circuit 222 outputs the generated signal B to the Phy Layer signal processing unit (SLVS-EC standard) 221.

Furthermore, the connection circuit 222 is provided with a delay unit. The connection circuit 222 changes the input timing for the Link Layer signal processing unit (other transmission standard) 223 by delaying the signal supplied from the Phy Layer signal processing unit (SLVS-EC standard) 221 by the delay unit.

In this manner, in the connection circuit 222, by performing signal processing such as conversion and delay, an input signal of the link layer of the other transmission standard is generated on the basis of a signal obtained by the signal processing of the physical layer of the SLVS-EC standard. The input signal of the link layer of the other transmission standard is generated so that the original signal becomes a signal representing a similar content to that represented by the SLVS-EC standard.

The connection circuit 222 is provided with a removal unit that removes the lane stuffing data inserted in the transmission data. In a case where data with which an insertion of the lane stuffing data can be determined is inserted in data supplied from the Phy Layer signal processing unit (SLVS-EC standard) 221, the connection circuit 222 removes the lane stuffing data by the removal unit. The connection circuit 222 outputs only valid payload data obtained by removing the lane stuffing data to the Link Layer signal processing unit (other transmission standard) 223.

Furthermore, the connection circuit 222 is provided with a buffer unit. In a case where the valid data supplied from the Phy Layer signal processing unit (SLVS-EC standard) 221 is not continuous due to the insertion of Pad Code or the like, the connection circuit 222 may store valid data for one packet in the buffer unit and may perform collective output to the Link Layer signal processing unit (other transmission standard) 223.

The Link Layer signal processing unit (other transmission standard) 223 performs signal processing of the link layer on the data supplied from the connection circuit 222. In the Link Layer signal processing unit (other transmission standard) 223, signal processing of the link layer of the other transmission standard is performed. The Link Layer signal processing unit (other transmission standard) 223 outputs data obtained by performing the signal processing of the link layer to a subsequent stage.

- Second combination

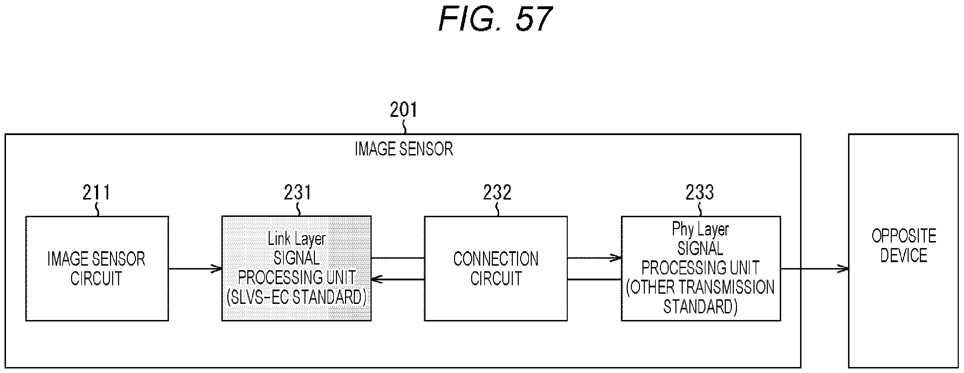

Fig. 57 is a diagram illustrating a configuration example on the transmitting side in the second combination.

As described with reference to Fig. 50, the second combination is a combination using the Link Layer signal processing unit of the SLVS-EC standard and the Phy Layer signal processing unit of the other transmission standard. The same reference numerals are given to the same configurations as those described above.

The image sensor 201, which is a configuration on the transmitting side, includes an image sensor circuit 211, a Link Layer signal processing unit (SLVS-EC standard) 231, a connection circuit 232, and a Phy Layer signal processing unit (other transmission standard) 233.

The Link Layer signal processing unit (SLVS-EC standard) 231 performs the signal processing of the link layer on data to be transmitted supplied from the image sensor circuit 211. The Link Layer signal processing unit (SLVS-EC standard) 231 performs the signal processing of the link layer of the SLVS-EC standard. The Link Layer signal processing unit (SLVS-EC standard) 231 outputs a signal obtained by performing the signal processing of the link layer to the connection circuit 232.

The connection circuit 232 appropriately converts signals transmitted and received between the Link Layer signal processing unit (SLVS-EC standard) 231 and the Phy Layer signal processing unit (other transmission standard) 233. The connection circuit 232 is provided with a conversion unit that converts a signal supplied from one signal processing unit into a signal of a format needed for the other signal processing unit.

In a case where the signal (referred to as signal A) necessary for the Phy Layer signal processing unit (other transmission standard) 233 is not supplied from the Link Layer signal processing unit (SLVS-EC standard) 231, the connection circuit 232 generates the signal A by converting the signal supplied from the Link Layer signal processing unit (SLVS-EC standard) 231 by the conversion unit. The connection circuit 232 outputs the generated signal A to the Phy Layer signal processing unit (other transmission standard) 233. The input of the signal A to the Phy Layer signal processing unit (other transmission standard) 233 is performed according to specifications defined as input of the Phy Layer of the other transmission standard.

Similarly, in a case where the signal (referred to as signal B) needed for the Link Layer signal processing unit (SLVS-EC standard) 231 is not supplied from the Phy Layer signal processing unit (other transmission standard) 233, the connection circuit 232 generates the signal B by converting the signal supplied from the Phy Layer signal processing unit (other transmission standard) 233 by the conversion unit. The connection circuit 232 outputs the generated signal B to the Link Layer signal processing unit (SLVS-EC standard) 231. The input of the signal B to the Link Layer signal processing unit (SLVS-EC standard) 231 is performed according to, for example, specifications related to the interface on the transmitting side described with reference to Fig. 6 and so on.

Furthermore, the connection circuit 232 is provided with a delay unit. The connection circuit 232 changes the input timing for the Phy Layer signal processing unit (other transmission standard) 233 by delaying the signal supplied from the Link Layer signal processing unit (SLVS-EC standard) 231 by the delay unit.

In this manner, in the connection circuit 232, by performing signal processing such as conversion and delay, an input signal of the physical layer of the other transmission standard is generated on the basis of a signal obtained by the signal processing of the link layer of the SLVS-EC standard. The input signal of the physical layer of the other transmission standard is generated so that the original signal becomes a signal representing a similar content to that represented by the SLVS-EC standard.

In a case where the Link Layer signal processing unit (SLVS-EC standard) 231 makes a transition to a stopped state, the connection circuit 232 may notify the receiving side that it is in a stopped state by using a low power notification function or the like of the Phy Layer signal processing unit (other transmission standard) 233.

Furthermore, the connection circuit 232 is provided with a buffer unit. In a case where the valid data supplied from the Link Layer signal processing unit (SLVS-EC standard) 231 is not continuous, the connection circuit 232 may store valid data for one packet in the buffer unit and may perform collective output to the Phy Layer signal processing unit (other transmission standard) 233.

The Phy Layer signal processing unit (other transmission standard) 233 performs the signal processing of the physical layer on the signal supplied from the connection circuit 232. In the Phy Layer signal processing unit (other transmission standard) 233, the signal processing of the physical layer of the other transmission standard is performed. The Phy Layer signal processing unit (other transmission standard) 233 transmits a signal of the other transmission standard obtained by performing the signal processing of the physical layer to the opposite device via the transmission line.

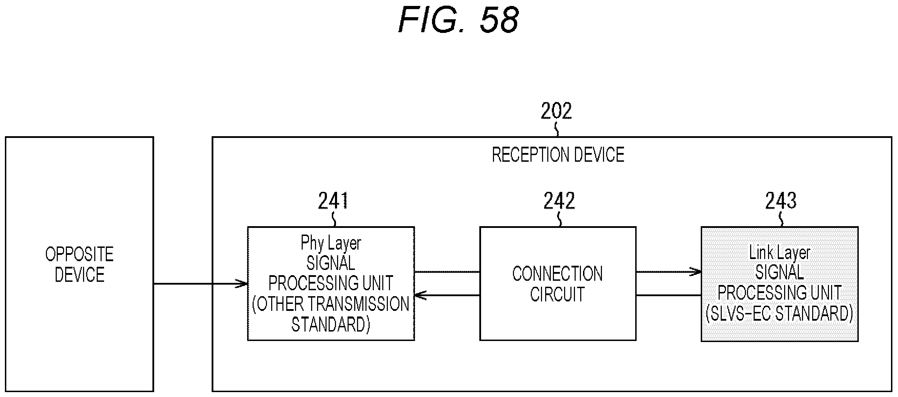

Fig. 58 is a diagram illustrating a configuration example of the receiving side in the second combination.

The reception device 202, which is a configuration on the receiving side, includes a Phy Layer signal processing unit (other transmission standard) 241, a connection circuit 242, and a Link Layer signal processing unit (SLVS-EC standard) 243.

The Phy Layer signal processing unit (other transmission standard) 241 receives a signal of the other transmission standard transmitted from the image sensor 201 as an opposite device, and performs signal processing of the physical layer on the received signal. In the Phy Layer signal processing unit (other transmission standard) 241, the signal processing of the physical layer of the other transmission standard is performed. The Phy Layer signal processing unit (other transmission standard) 241 outputs a signal obtained by performing the signal processing of the physical layer to the connection circuit 242.

The connection circuit 242 appropriately converts signals transmitted and received between the Phy Layer signal processing unit (other transmission standard) 241 and the Link Layer signal processing unit (SLVS-EC standard) 243. The connection circuit 242 is provided with a conversion unit that converts a signal supplied from one signal processing unit into a signal of a format needed for the other signal processing unit.

In a case where a signal (referred to as a signal A) necessary for the Link Layer signal processing unit (SLVS-EC standard) 243 is not supplied from the Phy Layer signal processing unit (other transmission standard) 241, the connection circuit 242 generates the signal A by converting a signal supplied from the Phy Layer signal processing unit (other transmission standard) 241 by the conversion unit. The connection circuit 242 outputs the generated signal A to the Link Layer signal processing unit (SLVS-EC standard) 243. The input of the signal to the Link Layer signal processing unit (SLVS-EC standard) 243 is performed according to, for example, specifications related to the interface on the receiving side described with reference to Fig. 14 and so on.

Similarly, in a case where a signal (referred to as signal B) necessary for the Phy Layer signal processing unit (other transmission standard) 241 is not supplied from the Link Layer signal processing unit (SLVS-EC standard) 243, the connection circuit 242 generates the signal B by converting a signal supplied from the Link Layer signal processing unit (SLVS-EC standard) 243 by the conversion unit. The connection circuit 242 outputs the generated signal B to the Phy Layer signal processing unit (other transmission standard) 241.

In this manner, in the connection circuit 242, by performing signal processing such as conversion and delay, an input signal of the link layer of the SLVS-EC standard is generated on the basis of a signal obtained by the signal processing of the physical layer of the other transmission standard. The input signal of the link layer of the SLVS-EC standard is generated so that the original signal becomes a signal representing a similar content to that represented by the other transmission standard.

Furthermore, the connection circuit 242 is provided with a delay unit. The connection circuit 242 changes the input timing for the Link Layer signal processing unit (SLVS-EC standard) 243 by delaying the signal supplied from the Phy Layer signal processing unit (other transmission standard) 241 by the delay unit.

The Link Layer signal processing unit (SLVS-EC standard) 243 performs the signal processing of the link layer on the data supplied from the connection circuit 242. The Link Layer signal processing unit (SLVS-EC standard) 243 performs the signal processing of the link layer of the SLVS-EC standard. The Link Layer signal processing unit (SLVS-EC standard) 243 outputs the data obtained by performing the signal processing of the link layer to the subsequent stage

- Third combination

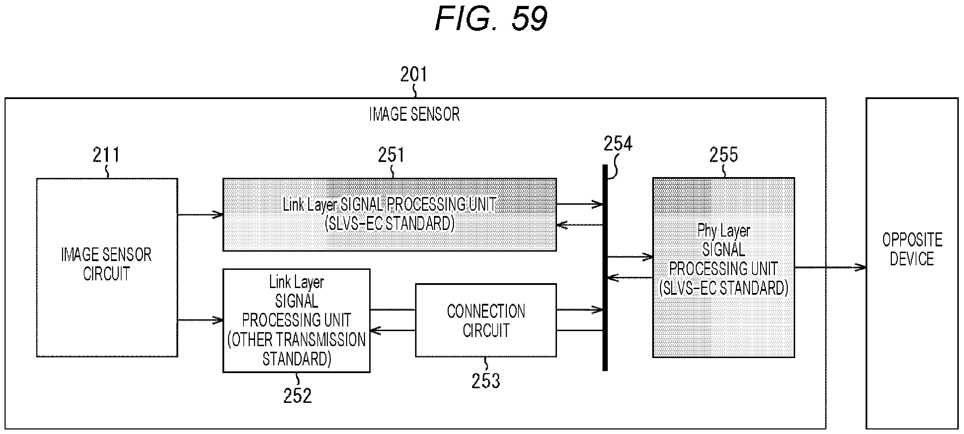

Fig. 59 is a diagram illustrating a configuration example on the transmitting side in the third combination.

As described with reference to Fig. 51, the third combination is a combination using the Link Layer signal processing unit of the SLVS-EC standard and the Link Layer signal processing unit of the other transmission standard in parallel, and also uses the Phy Layer signal processing unit of the SLVS-EC standard.

The image sensor 201 includes an image sensor circuit 211, a Link Layer signal processing unit (SLVS-EC standard) 251, a Link Layer signal processing unit (other transmission standard) 252, a connection circuit 253, an MUX 254, and a Phy Layer signal processing unit (SLVS-EC standard) 255.

Between the image sensor circuit 211 and MUX 254, a path formed by the Link Layer signal processing unit (SLVS-EC standard) 251 and a path formed by connecting the Link Layer signal processing unit (other transmission standard) 252 and the connection circuit 253 are provided. For example, data to be transmitted is input from the image sensor circuit 211 to one of the paths.

The Link Layer signal processing unit (SLVS-EC standard) 251 performs the signal processing of the link layer of the SLVS-EC standard on data to be transmitted supplied from the image sensor circuit 211, and outputs a signal obtained by performing the signal processing of the link layer to the MUX 254.

The Link Layer signal processing unit (other transmission standard) 252 performs signal processing of the link layer of the other transmission standard on data to be transmitted supplied from the image sensor circuit 211, and outputs a signal obtained by performing the signal processing of the link layer to the connection circuit 253.

The connection circuit 253 has a similar function to that of the connection circuit 213 of Fig. 55. The connection circuit 253 appropriately converts signals transmitted and received between the Link Layer signal processing unit (other transmission standard) 252 and the Phy Layer signal processing unit (SLVS-EC standard) 255.

For example, in a case where the signal (referred to as signal A) necessary for the Phy Layer signal processing unit (SLVS-EC standard) 255 is not supplied from the Link Layer signal processing unit (other transmission standard) 252, the connection circuit 253 generates the signal A by converting a signal supplied from the Link Layer signal processing unit (other transmission standard) 252 by the conversion unit. The connection circuit 253 outputs the generated signal A to the MUX 254.

The MUX 254 selects one of the Link Layer signal processing unit (SLVS-EC standard) 251 and the connection circuit 253. In a case where the MUX 254 selects the Link Layer signal processing unit (SLVS-EC standard) 251, the MUX 254 allows transmission and reception of signals between the Link Layer signal processing unit (SLVS-EC standard) 251 and the Phy Layer signal processing unit (SLVS-EC standard) 255. Furthermore, in a case where the MUX 254 selects the connection circuit 253, the MUX 254 allows transmission and reception of signals between the connection circuit 253 and the Phy Layer signal processing unit (SLVS-EC standard) 255.

Selection of the MUX 254 may be switched according to a signal input from an external terminal provided on the image sensor 201, or may be switched according to setting of a register in the image sensor 201. It is also possible to switch selection of the MUX 254 according to a switching signal supplied from an internal circuit such as the image sensor circuit 211 or the DSP (not illustrated).

The Phy Layer signal processing unit (SLVS-EC standard) 255 performs the signal processing of the physical layer of the SLVS-EC standard on signals supplied from the Link Layer signal processing unit (SLVS-EC standard) 251 or the connection circuit 253 via the MUX 254. The Phy Layer signal processing unit (SLVS-EC standard) 255 transmits a signal of the SLVS-EC standard obtained by performing the signal processing of the physical layer to an opposite device via the transmission line.

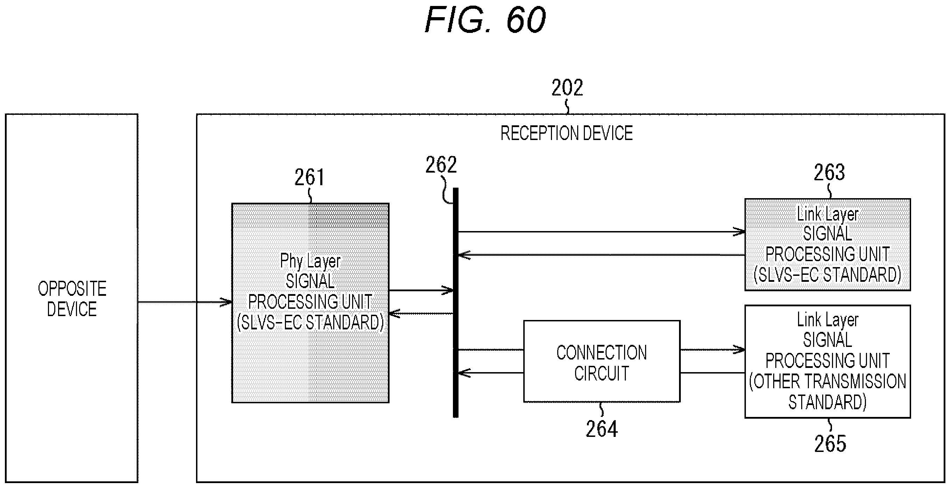

Fig. 60 is a diagram illustrating a configuration example of the receiving side in the third combination.

The reception device 202, which is a configuration on the receiving side, includes a Phy Layer signal processing unit (SLVS-EC standard) 261, an MUX 262, a Link Layer signal processing unit (SLVS-EC standard) 263, a connection circuit 264, and a Link Layer signal processing unit (other transmission standard) 265.

In a subsequent stage of the MUX 262, a path formed by the Link Layer signal processing unit (SLVS-EC standard) 263, and a path formed by connecting the connection circuit 264 and the Link Layer signal processing unit (other transmission standard) 265 are provided in parallel.

The Phy Layer signal processing unit (SLVS-EC standard) 261 receives data of the SLVS-EC standard transmitted from the image sensor 201 as the opposite device, and performs the signal processing of the physical layer of the SLVS-EC standard on the received data. The Phy Layer signal processing unit (SLVS-EC standard) 261 outputs data obtained by performing the signal processing of the physical layer to the MUX 262.

The MUX 262 selects one of the Link Layer signal processing unit (SLVS-EC standard) 263 and the connection circuit 264. In a case where the MUX 262 selects the Link Layer signal processing unit (SLVS-EC standard) 263, the MUX 262 allows transmission and reception of signals between the Phy Layer signal processing unit (SLVS-EC standard) 261 and the Link Layer signal processing unit (SLVS-EC standard) 263. Furthermore, in a case where the MUX 262 selects the connection circuit 264, the MUX 262 allows transmission and reception of signals between the Phy Layer signal processing unit (SLVS-EC standard) 261 and the connection circuit 264.

The Link Layer signal processing unit (SLVS-EC standard) 263 performs the signal processing of the link layer of the SLVS-EC standard on a signal supplied from the Phy Layer signal processing unit (SLVS-EC standard) 261 via the MUX 262. The Link Layer signal processing unit (SLVS-EC standard) 263 outputs data obtained by performing the signal processing of the link layer to the subsequent stage.

The connection circuit 264 has a similar function to that of the connection circuit 222 of Fig. 56. The connection circuit 264 appropriately converts signals transmitted and received between the Phy Layer signal processing unit (SLVS-EC standard) 261 and the Link Layer signal processing unit (other transmission standard) 265.

For example, in a case where a signal (referred to as a signal A) necessary for the Link Layer signal processing unit (other transmission standard) 265 is not supplied from the Phy Layer signal processing unit (SLVS-EC standard) 261, the connection circuit 264 generates the signal A by converting a signal supplied from the Phy Layer signal processing unit (SLVS-EC standard) 261 by the conversion unit. The connection circuit 264 outputs the generated signal A to the Link Layer signal processing unit (other transmission standard) 265.

The Link Layer signal processing unit (other transmission standard) 265 performs the signal processing of the link layer of the other transmission standard on a signal supplied from the connection circuit 264. The Link Layer signal processing unit (other transmission standard) 265 outputs data obtained by performing the signal processing of the link layer to the subsequent stage.

- Fourth combination

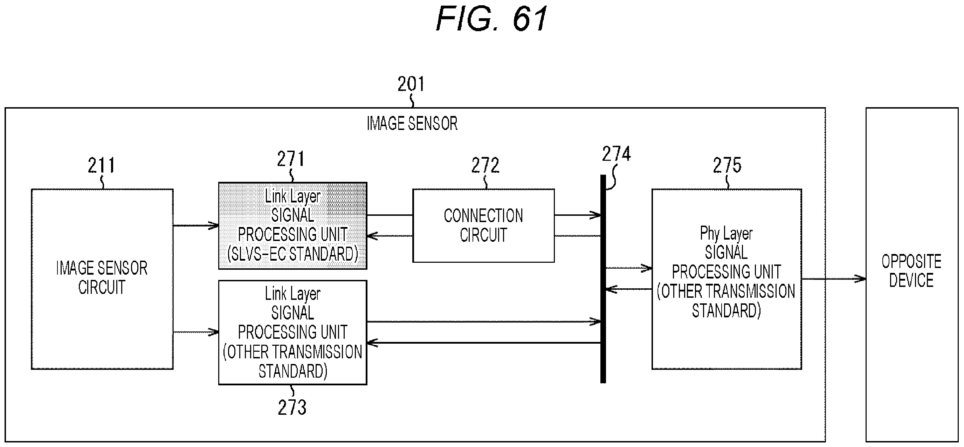

Fig. 61 is a diagram illustrating a configuration example on the transmitting side in the fourth combination.

As described with reference to Fig. 52, the fourth combination is a combination using the Link Layer signal processing unit of the SLVS-EC standard and the Link Layer signal processing unit of the other transmission standard in parallel, and using the Phy Layer signal processing unit of the other transmission standard.

The image sensor 201 includes an image sensor circuit 211, a Link Layer signal processing unit (SLVS-EC standard) 271, a connection circuit 272, a Link Layer signal processing unit (other transmission standard) 273, an MUX 274, and a Phy Layer signal processing unit (other transmission standard) 275.

Between the image sensor circuit 211 and MUX 274, a path formed by connecting the Link Layer signal processing unit (SLVS-EC standard) 271 and the connection circuit 272, and a path formed by the Link Layer signal processing unit (other transmission standard) 273 are provided.

The Link Layer signal processing unit (SLVS-EC standard) 271 performs the signal processing of the link layer of the SLVS-EC standard on data to be transmitted supplied from the image sensor circuit 211, and outputs a signal obtained by performing the signal processing of the link layer to the connection circuit 272.

The connection circuit 272 has a function similar to that of the connection circuit 232 of Fig. 57. The connection circuit 272 appropriately converts signals transmitted and received between the Link Layer signal processing unit (SLVS-EC standard) 271 and the Phy Layer signal processing unit (other transmission standard) 275.

For example, in a case where the signal (referred to as signal A) necessary for the Phy Layer signal processing unit (other transmission standard) 275 is not supplied from the Link Layer signal processing unit (SLVS-EC standard) 271, the connection circuit 272 generates the signal A by converting the signal supplied from the Link Layer signal processing unit (SLVS-EC standard) 271 by the conversion unit. The connection circuit 272 outputs the generated signal A to the MUX 274.

The Link Layer signal processing unit (other transmission standard) 273 performs signal processing of the link layer of the other transmission standard on data to be transmitted supplied from the image sensor circuit 211, and outputs a signal obtained by performing the signal processing of the link layer to MUX 274.

The MUX 274 selects one of the connection circuit 272 and the Link Layer signal processing unit (other transmission standard) 273. In a case where the MUX 274 selects the connection circuit 272, the MUX 274 allows transmission and reception of signals between the connection circuit 272 and the Phy Layer signal processing unit (other transmission standard) 275. Furthermore, in a case where the MUX 274 selects the Link Layer signal processing unit (other transmission standard) 273, the MUX 274 allows transmission and reception of signals between the Link Layer signal processing unit (other transmission standard) 273 and Phy Layer signal processing unit (other transmission standard) 275.

The Phy Layer signal processing unit (other transmission standard) 275 performs the signal processing of the physical layer of the other transmission standard on the signal supplied from the connection circuit 272 or the Link Layer signal processing unit (other transmission standard) 273 via the MUX 274. The Phy Layer signal processing unit (other transmission standard) 275 transmits a signal of the other transmission standard obtained by performing signal processing of the physical layer to the opposite device via the transmission line.

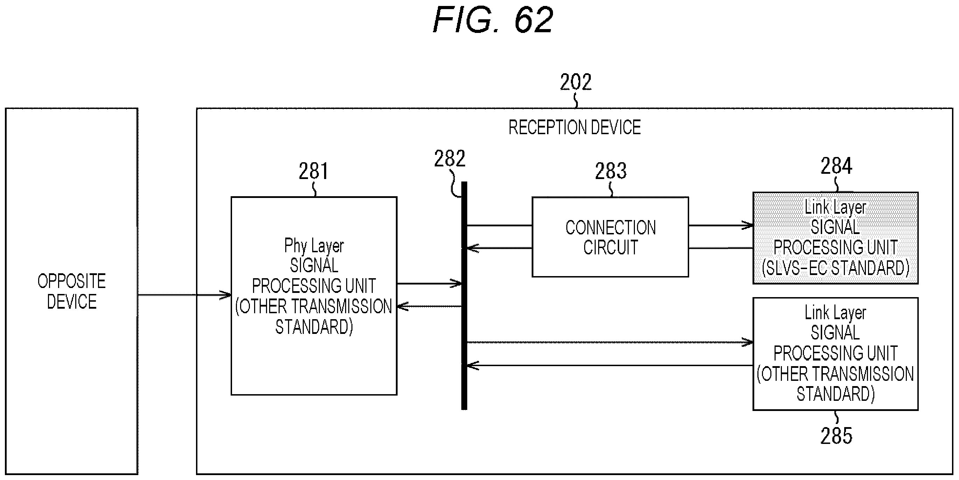

Fig. 62 is a diagram illustrating a configuration example of the receiving side in the fourth combination.

The reception device 202, which is a configuration on the receiving side, includes a Phy Layer signal processing unit (other transmission standard) 281, an MUX 282, a connection circuit 283, a Link Layer signal processing unit (SLVS-EC standard) 284, and a Link Layer signal processing unit (other transmission standard) 285.

In a subsequent stage of the MUX 282, a path formed by connecting the connection circuit 283 and the Link Layer signal processing unit (SLVS-EC standard) 284, and a path formed by the Link Layer signal processing unit (other transmission standard) 285 are provided in parallel.

The Phy Layer signal processing unit (other transmission standard) 281 receives a signal of the other transmission standard transmitted from the image sensor 201 as an opposite device, and performs the signal processing of the physical layer of the other transmission standard on the received signal. The Phy Layer signal processing unit (other transmission standard) 281 outputs a signal obtained by performing the signal processing of the physical layer to the MUX 282.

The MUX 282 selects one of the connection circuit 283 and the Link Layer signal processing unit (other transmission standard) 285. In a case where the MUX 282 selects the connection circuit 283, the MUX 282 allows transmission and reception of signals between the Phy Layer signal processing unit (other transmission standard) 281 and the connection circuit 283. Furthermore, in a case where MUX 282 selects the Link Layer signal processing unit (other transmission standard) 285, the MUX 282 allows transmission and reception of signals between the Phy Layer signal processing unit (other transmission standard) 281 and the Link Layer signal processing unit (other transmission standard) 285.

The connection circuit 283 has a similar function to that of the connection circuit 242 of Fig. 58. The connection circuit 283 appropriately converts signals transmitted and received between the Phy Layer signal processing unit (other transmission standard) 281 and the Link Layer signal processing unit (SLVS-EC standard) 284.

For example, in a case where a signal (referred to as a signal A) necessary for the Link Layer signal processing unit (SLVS-EC standard) 284 is not supplied from the Phy Layer signal processing unit (other transmission standard) 281, the connection circuit 283 generates the signal A by converting a signal supplied from the Phy Layer signal processing unit (other transmission standard) 281 by the conversion unit. The connection circuit 283 outputs the generated signal A to the Link Layer signal processing unit (SLVS-EC standard) 284.

The Link Layer signal processing unit (SLVS-EC standard) 284 performs the signal processing of the link layer of the SLVS-EC standard on the signal supplied from the connection circuit 283. The Link Layer signal processing unit (SLVS-EC standard) 284 outputs data obtained by performing the signal processing of the link layer to the subsequent stage.

The Link Layer signal processing unit (other transmission standard) 285 performs the signal processing of the link layer of the other transmission standard on the signal supplied from the Phy Layer signal processing unit (other transmission standard) 281 via the MUX 282. The Link Layer signal processing unit (other transmission standard) 285 outputs the data obtained by performing the signal processing of the link layer to the subsequent stage.

- Fifth combination

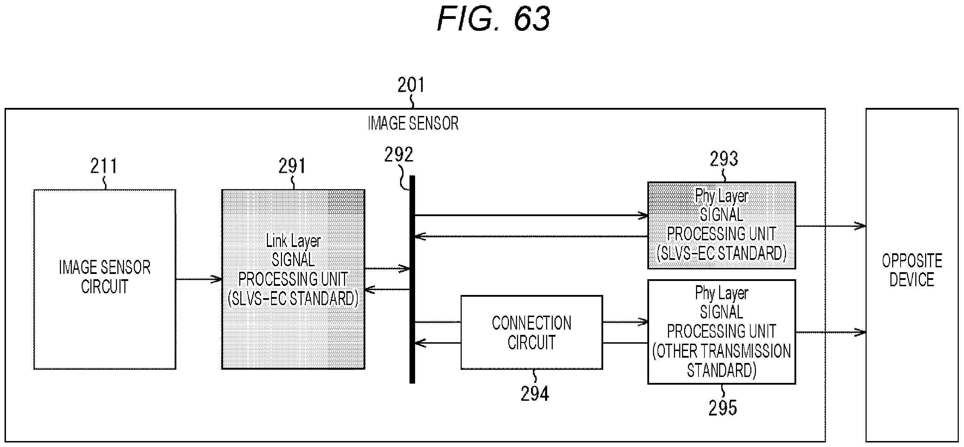

Fig. 63 is a diagram illustrating a configuration example on the transmitting side in the fifth combination.

As described with reference to Fig. 53, the fifth combination is a combination using the Link Layer signal processing unit of the SLVS-EC standard, and using the Phy Layer signal processing unit of the SLVS-EC standard and the Phy Layer signal processing unit of the other transmission standard in parallel.

The image sensor 201 includes an image sensor circuit 211, a Link Layer signal processing unit (SLVS-EC standard) 291, an MUX 292, a Phy Layer signal processing unit (SLVS-EC standard) 293, a connection circuit 294, and a Phy Layer signal processing unit (other transmission standard) 295.

In a subsequent stage of the MUX 292, a path formed by the Phy Layer signal processing unit (SLVS-EC standard) 293, and a path formed by connecting the connection circuit 294 and the Phy Layer signal processing unit (other transmission standard) 295 are provided.

The Link Layer signal processing unit (SLVS-EC standard) 291 performs the signal processing of the link layer of the SLVS-EC standard on data to be transmitted supplied from the image sensor circuit 211, and outputs a signal obtained by performing the signal processing of the link layer to the MUX 292.

The MUX 292 selects one of the Phy Layer signal processing unit (SLVS-EC standard) 293 and the connection circuit 294. In a case where the MUX 292 selects the Phy Layer signal processing unit (SLVS-EC standard) 293, the MUX 292 allows transmission and reception of signals between the Link Layer signal processing unit (SLVS-EC standard) 291 and the Phy Layer signal processing unit (SLVS-EC standard) 293. Furthermore, in a case where the MUX 292 selects the connection circuit 294, the MUX 292 allows transmission and reception of signals between the Link Layer signal processing unit (SLVS-EC standard) 291 and the connection circuit 294.

The Phy Layer signal processing unit (SLVS-EC standard) 293 performs the signal processing of the physical layer of the SLVS-EC standard on a signal supplied from the Link Layer signal processing unit (SLVS-EC standard) 291 via the MUX 292. The Phy Layer signal processing unit (SLVS-EC standard) 293 transmits a signal of the SLVS-EC standard obtained by performing the signal processing of the physical layer to an opposite device via the transmission line.

The connection circuit 294 has a similar function to that of the connection circuit 232 of Fig. 57. The connection circuit 294 appropriately converts signals transmitted and received between the Link Layer signal processing unit (SLVS-EC standard) 291 and the Phy Layer signal processing unit (other transmission standard) 295.

For example, in a case where the signal (referred to as signal A) necessary for the Phy Layer signal processing unit (other transmission standard) 295 is not supplied from the Link Layer signal processing unit (SLVS-EC standard) 291, the connection circuit 294 generates the signal A by converting the signal supplied from the Link Layer signal processing unit (SLVS-EC standard) 291 by the conversion unit. The connection circuit 294 outputs the generated signal A to the Phy Layer signal processing unit (other transmission standard) 295.

The Phy Layer signal processing unit (other transmission standard) 295 performs the signal processing of the physical layer of the other transmission standard on a signal supplied from the connection circuit 294. The Phy Layer signal processing unit (other transmission standard) 295 transmits a signal of the other transmission standard obtained by performing the signal processing of the physical layer to the opposite device via the transmission line.

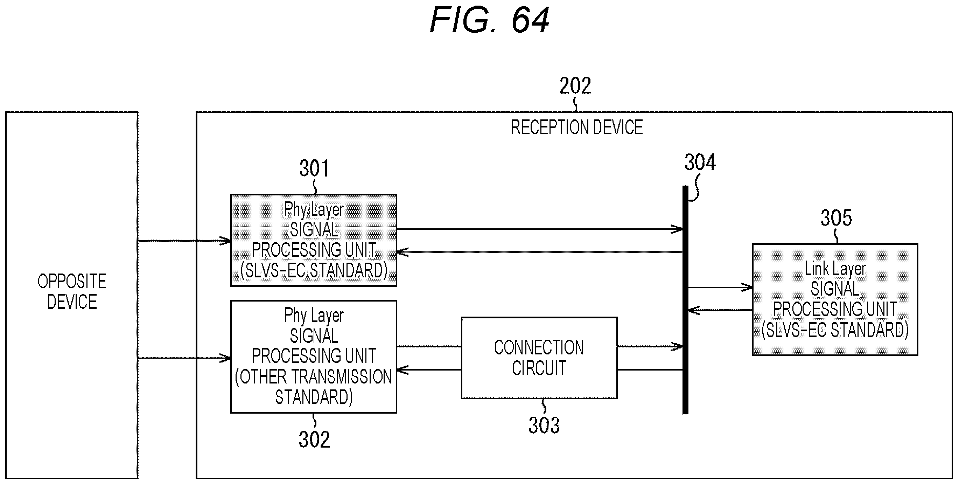

Fig. 64 is a diagram illustrating a configuration example of the receiving side in the fifth combination.

The reception device 202, which is a configuration on the receiving side, includes a Phy Layer signal processing unit (SLVS-EC standard) 301, a Phy Layer signal processing unit (other transmission standard) 302, a connection circuit 303, an MUX 304, and a Link Layer signal processing unit (SLVS-EC standard) 305.

In a front stage of the MUX 304, a path formed by the Phy Layer signal processing unit (SLVS-EC standard) 301, and a path formed by connecting the Phy Layer signal processing unit (other transmission standard) 302 and connection circuit 303 are provided in parallel. A signal of the SLVS-EC standard output from an opposite device is input to the Phy Layer signal processing unit (SLVS-EC standard) 301, and a signal of the other transmission standard is input to the Phy Layer signal processing unit (other transmission standard) 302.

The Phy Layer signal processing unit (SLVS-EC standard) 301 receives a signal of the SLVS-EC standard transmitted from the image sensor 201 as an opposite device, and performs the signal processing of the physical layer of the SLVS-EC standard on the received signal. The Phy Layer signal processing unit (SLVS-EC standard) 301 outputs a signal obtained by performing the signal processing of the physical layer to the MUX 304.

The Phy Layer signal processing unit (other transmission standard) 302 receives a signal of the other transmission standard transmitted from the image sensor 201, and performs the signal processing of the physical layer of the other transmission standard on the received signal. The Phy Layer signal processing unit (other transmission standard) 302 outputs a signal obtained by performing the signal processing of the physical layer to the connection circuit 303.

The connection circuit 303 has a similar function to that of the connection circuit 242 of Fig. 58. The connection circuit 303 appropriately converts signals transmitted and received between the Phy Layer signal processing unit (other transmission standard) 302 and the Link Layer signal processing unit (SLVS-EC standard) 305.

For example, in a case where a signal (referred to as a signal A) necessary for the Link Layer signal processing unit (SLVS-EC standard) 305 is not supplied from the Phy Layer signal processing unit (other transmission standard) 302, the connection circuit 303 generates the signal A by converting a signal supplied from the Phy Layer signal processing unit (other transmission standard) 302 by the conversion unit. The connection circuit 303 outputs the generated signal A to the MUX 304.

The MUX 304 selects one of the Phy Layer signal processing unit (SLVS-EC standard) 301 and the connection circuit 303. In a case where the MUX 304 selects the Phy Layer signal processing unit (SLVS-EC standard) 301, the MUX 304 allows transmission and reception of signals between the Phy Layer signal processing unit (SLVS-EC standard) 301 and the Link Layer signal processing unit (SLVS-EC standard) 305. Furthermore, in a case where the MUX 304 selects the connection circuit 303, the MUX 304 allows transmission and reception of signals between the connection circuit 303 and the Link Layer signal processing unit (SLVS-EC standard) 305.

The Link Layer signal processing unit (SLVS-EC standard) 305 performs the signal processing of the link layer of the SLVS-EC standard on signals supplied from the Phy Layer signal processing unit (SLVS-EC standard) 301 or the connection circuit 303 via the MUX 304. The Link Layer signal processing unit (SLVS-EC standard) 305 outputs data obtained by performing the signal processing of the link layer to the subsequent stage.

- Sixth combination

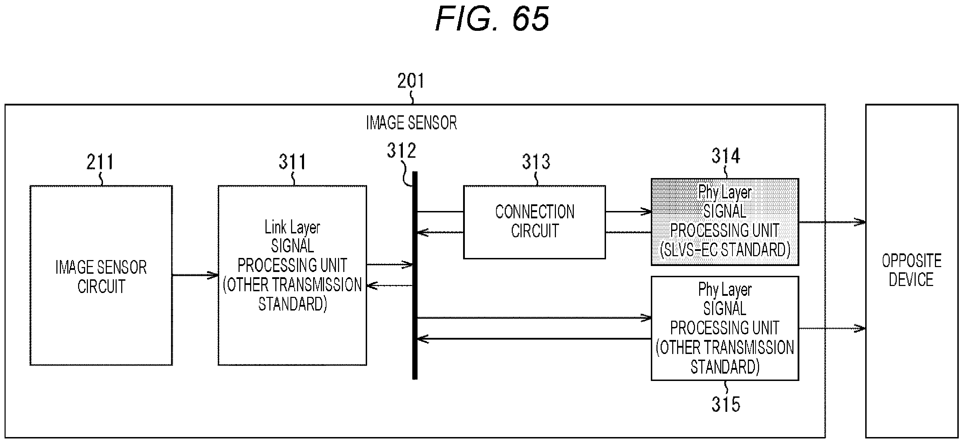

Fig. 65 is a diagram illustrating a configuration example on the transmitting side in the sixth combination.

As described with reference to Fig. 54, the sixth combination is a combination using the Link Layer signal processing unit of the other transmission standard, and using the Phy Layer signal processing unit of the SLVS-EC standard and the Phy Layer signal processing unit of the other transmission standard in parallel.

The image sensor 201 includes an image sensor circuit 211, a Link Layer signal processing unit (other transmission standard) 311, an MUX 312, a connection circuit 313, a Phy Layer signal processing unit (SLVS-EC standard) 314, and a Phy Layer signal processing unit (other transmission standard) 315.

In a subsequent stage of the MUX 312, a path formed by connecting the connection circuit 313 and the Phy Layer signal processing unit (SLVS-EC standard) 314, and a path formed by the Phy Layer signal processing unit (other transmission standard) 315 are provided.

The Link Layer signal processing unit (other transmission standard) 311 performs the signal processing of the link layer of the SLVS-EC standard on data to be transmitted supplied from the image sensor circuit 211, and outputs a signal obtained by performing the signal processing of the link layer to the MUX 312.

The MUX 312 selects one of the connection circuit 313 and the Phy Layer signal processing unit (other transmission standard) 315. In a case where the MUX 312 selects the connection circuit 313, the MUX 312 allows transmission and reception of signals between the Link Layer signal processing unit (other transmission standard) 311 and the connection circuit 313. Furthermore, in a case where the MUX 312 selects the Phy Layer signal processing unit (other transmission standard) 315, the MUX 312 allows transmission and reception of signals between the Link Layer signal processing unit (other transmission standard) 311 and the Phy Layer signal processing unit (other transmission standard) 315.

The connection circuit 313 has a similar function to that of the connection circuit 213 of Fig. 55. The connection circuit 313 appropriately converts signals transmitted and received between the Link Layer signal processing unit (other transmission standard) 311 and the Phy Layer signal processing unit (SLVS-EC standard) 314.

For example, in a case where the signal (referred to as signal A) necessary for the Phy Layer signal processing unit (SLVS-EC standard) 314 is not supplied from the Link Layer signal processing unit (other transmission standard) 311, the connection circuit 313 generates the signal A by converting a signal supplied from the Link Layer signal processing unit (other transmission standard) 311 by the conversion unit. The connection circuit 313 outputs the generated signal A to the Phy Layer signal processing unit (SLVS-EC standard) 314.

The Phy Layer signal processing unit (SLVS-EC standard) 314 performs the signal processing of the physical layer of the SLVS-EC standard on the signal supplied from the connection circuit 313. The Phy Layer signal processing unit (SLVS-EC standard) 314 transmits a signal of the SLVS-EC standard obtained by performing the signal processing of the physical layer to the opposite device via the transmission line.

The Phy Layer signal processing unit (other transmission standard) 315 performs the signal processing of the physical layer of the other transmission standard on the signal supplied from the Link Layer signal processing unit (other transmission standard) 311 via the MUX 312. The Phy Layer signal processing unit (other transmission standard) 315 transmits signals of the other transmission standard obtained by performing the signal processing of the physical layer to the opposite device via the transmission line.

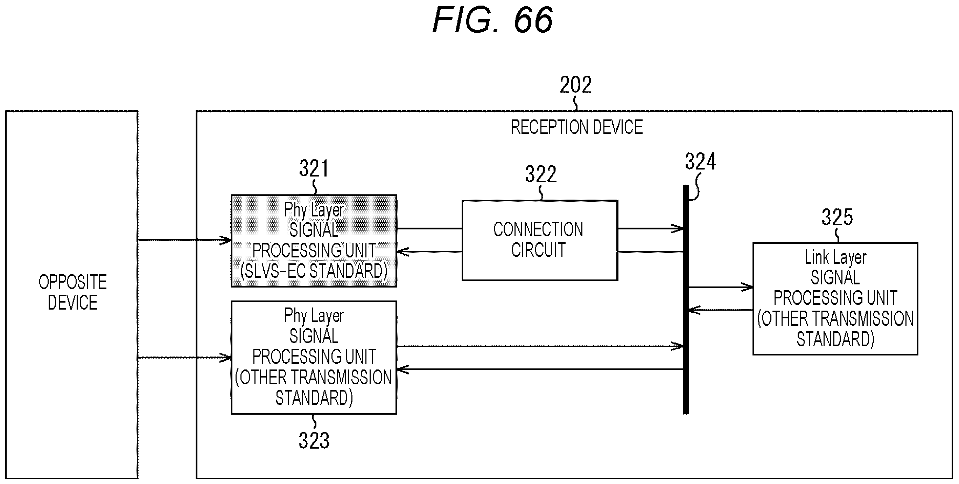

Fig. 66 is a diagram illustrating a configuration example of the receiving side in the sixth combination.

The reception device 202, which is a configuration on the receiving side, includes a Phy Layer signal processing unit (SLVS-EC standard) 321, a connection circuit 322, a Phy Layer signal processing unit (other transmission standard) 323, an MUX 324, and a Link Layer signal processing unit (other transmission standard) 325.

In a front stage of the MUX 324, a path formed by connecting the Phy Layer signal processing unit (SLVS-EC standard) 321 and connection circuit 322, and a path formed by the Phy Layer signal processing unit (other transmission standard) 323 are provided in parallel. A signal of the SLVS-EC standard transmitted from an opposite device is input to the Phy Layer signal processing unit (SLVS-EC standard) 321 and a signal of the other transmission standard is input to the Phy Layer signal processing unit (other transmission standard) 323.

The Phy Layer signal processing unit (SLVS-EC standard) 321 receives a signal of the SLVS-EC standard transmitted from the image sensor 201 as an opposite device, and performs the signal processing of the physical layer of the SLVS-EC standard on the received signal. The Phy Layer signal processing unit (SLVS-EC standard) 321 outputs a signal obtained by performing the signal processing of the physical layer to the connection circuit 322.

The connection circuit 322 has a similar function to that of the connection circuit 222 of Fig. 56. The connection circuit 322 appropriately converts signals transmitted and received between the Phy Layer signal processing unit (SLVS-EC standard) 321 and the Link Layer signal processing unit (other transmission standard) 325.

For example, in a case where a signal (referred to as a signal A) necessary for the Link Layer signal processing unit (other transmission standard) 325 is not supplied from the Phy Layer signal processing unit (SLVS-EC standard) 321, the connection circuit 322 generates the signal A by converting a signal supplied from the Phy Layer signal processing unit (SLVS-EC standard) 321 by the conversion unit. The connection circuit 322 outputs the generated signal A to the MUX 324.

The Phy Layer signal processing unit (other transmission standard) 323 receives a signal of the other transmission standard transmitted from the image sensor 201, and performs the signal processing of the physical layer of the other transmission standard on the received signal. The Phy Layer signal processing unit (other transmission standard) 323 outputs a signal obtained by performing the signal processing of the physical layer to the MUX 324.

The MUX 324 selects one of the connection circuit 322 and the Phy Layer signal processing unit (other transmission standard) 323. In a case where the MUX 324 selects the connection circuit 322, the MUX 324 allows transmission and reception of signals between the connection circuit 322 and the Link Layer signal processing unit (other transmission standard) 325. Furthermore, in a case where the MUX 324 selects the Phy Layer signal processing unit (other transmission standard) 323, the MUX 324 allows transmission and reception of signals between the Phy Layer signal processing unit (other transmission standard) 323 and the Link Layer signal processing unit (other transmission standard) 325.

The Link Layer signal processing unit (other transmission standard) 325 performs the signal processing of the link layer of the other transmission standard on the signal supplied from the connection circuit 322 or the Phy Layer signal processing unit (other transmission standard) 323 via the MUX 324. The Link Layer signal processing unit (other transmission standard) 325 outputs the data obtained by performing the signal processing of the link layer to the subsequent stage.

- Other examples

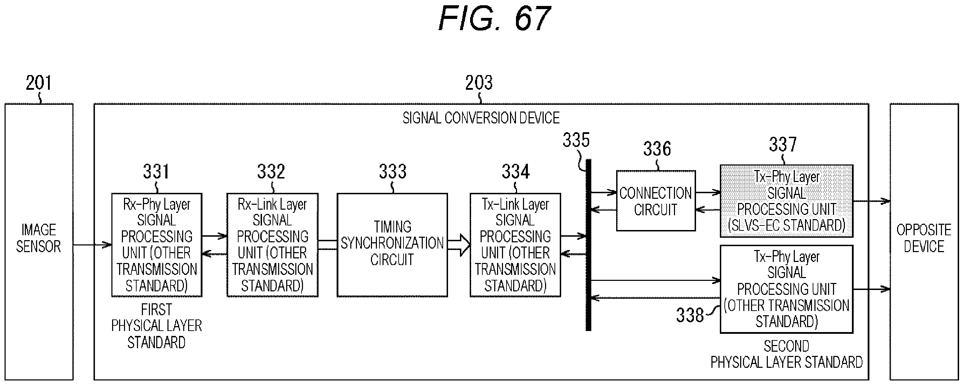

Fig. 67 is a block diagram illustrating a configuration example of a signal conversion device 203.

The standards of the physical layer of MIPI described as another transmission standard include a plurality of standards such as C-PHY and D-PHY. The C-PHY and D-PHY are standards with different specifications such as the number of pins per lane used for transmitting differential signals. Note that the link layer standards corresponding to the C-PHY standard and the D-PHY standard are common standards such as CSI-2.

In the signal conversion device 203 of Fig. 67, for example, a signal of the C-PHY standard input from the outside is output as a signal of the D-PHY standard. The signal conversion device 203 is a device that converts a signal of a standard of a certain physical layer into a signal of a standard of another physical layer in a case where the other transmission standard has a standard of a plurality of physical layers.

As illustrated in Fig. 67, the signal conversion device 203 includes an Rx-Phy Layer signal processing unit (other transmission standard) 331, an Rx-Link Layer signal processing unit (other transmission standard) 332, a timing synchronization circuit 333, a Tx-Link Layer signal processing unit (other transmission standard) 334, an MUX 335, a connection circuit 336, a Tx-Phy Layer signal processing unit (SLVS-EC standard) 337, and a Tx-Phy Layer signal processing unit (other transmission standard) 338.

Inside the signal conversion device 203, the above-described configuration on the receiving side and configuration on the transmitting side are provided. The Rx-Phy Layer signal processing unit (other transmission standard) 331 and the Rx-Link Layer signal processing unit (other transmission standard) 332 are the configuration on the receiving side, and the Tx-Link Layer signal processing unit (other transmission standard) 334, the MUX 335, the connection circuit 336, the Tx-Phy Layer signal processing unit (SLVS-EC standard) 337, and the Tx-Phy Layer signal processing unit (other transmission standard) 338 are the configuration on the transmitting side.

The Rx-Phy Layer signal processing unit (other transmission standard) 331 is a signal processing unit on the receiving side corresponding to the standard of a first physical layer of the other transmission standard. On the other hand, the Tx-Phy Layer signal processing unit (other transmission standard) 338 is a signal processing unit on the transmitting side corresponding to the standard of a second physical layer of the other transmission standard. For example, the standard of the first physical layer to which the Rx-Phy Layer signal processing unit (other transmission standard) 331 corresponds is C-PHY, and the standard of the second physical layer to which the Tx-Phy Layer signal processing unit (other transmission standard) 338 corresponds is D-PHY.

The Rx-Phy Layer signal processing unit (other transmission standard) 331 receives a signal of the standard of the first physical layer of the other transmission standard transmitted from the image sensor 201, and performs signal processing of the physical layer on the received signal. In the Rx-Phy Layer signal processing unit (other transmission standard) 331, signal processing according to the standard of the first physical layer of the other transmission standard is performed. The Rx-Phy Layer signal processing unit (other transmission standard) 331 outputs a signal obtained by performing the signal processing of the physical layer to the Rx-Link Layer signal processing unit (other transmission standard) 332.

The Rx-Link Layer signal processing unit (other transmission standard) 332 performs signal processing of the link layer on a signal supplied from the Rx-Phy Layer signal processing unit (other transmission standard) 331. In the Rx-Link Layer signal processing unit (other transmission standard) 332, the signal processing of the link layer of the other transmission standard is performed. The Rx-Link Layer signal processing unit (other transmission standard) 332 outputs data obtained by performing the signal processing of the link layer to the timing synchronization circuit 333.

The timing synchronization circuit 333 synchronizes a signal supplied from the Rx-Link Layer signal processing unit (other transmission standard) 332 with a timing on the transmitting side and outputs the signal to the Tx-Link Layer signal processing unit (other transmission standard) 334.

The configuration of the transmitting side including the Tx-Link Layer signal processing unit (other transmission standard) 334, MUX 335, connection circuit 336, Tx-Phy Layer signal processing unit (SLVS-EC standard) 337, and Tx-Phy Layer signal processing unit (other transmission standard) 338 is basically the same as the configuration described with reference to Fig. 65.

The Tx-Link Layer signal processing unit (other transmission standard) 334 performs the signal processing of the link layer on a signal supplied from the timing synchronization circuit 333. In the Tx-Link Layer signal processing unit (other transmission standard) 334, signal processing of the link layer of the other transmission standard is performed. The Tx-Link Layer signal processing unit (other transmission standard) 334 outputs a signal obtained by performing the signal processing of the link layer to the MUX 335.

The MUX 335 selects one of the connection circuit 336 and the Tx-Phy Layer signal processing unit (other transmission standard) 338. In a case where the connection circuit 336 is selected, the MUX 335 allows transmission and reception of signals between the Tx-Link Layer signal processing unit (other transmission standard) 334 and the connection circuit 336. Furthermore, in a case where the Tx-Phy Layer signal processing unit (other transmission standard) 338 is selected, the MUX 335 allows transmission and reception of signals between the Tx-Link Layer signal processing unit (other transmission standard) 334 and the Tx-Phy Layer signal processing unit (other transmission standard) 338.

The connection circuit 336 appropriately converts signals transmitted and received between the Tx-Link Layer signal processing unit (other transmission standard) 334 and the Tx-Phy Layer signal processing unit (SLVS-EC standard) 337.

For example, in a case where a signal (referred to as a signal A) necessary for the Tx-Phy Layer signal processing unit (SLVS-EC standard) 337 is not supplied from the Tx-Link Layer signal processing unit (other transmission standard) 334, the connection circuit 336 generates the signal A by converting a signal supplied from the Tx-Link Layer signal processing unit (other transmission standard) 334 by the conversion unit. The connection circuit 336 outputs the generated signal A to the Tx-Phy Layer signal processing unit (SLVS-EC standard) 337.

The Tx-Phy Layer signal processing unit (SLVS-EC standard) 337 performs the signal processing of the physical layer of the SLVS-EC standard on the signal supplied from the connection circuit 336. The Tx-Phy Layer signal processing unit (SLVS-EC standard) 337 transmits a signal of the SLVS-EC standard obtained by performing the signal processing of the physical layer to the opposite device via the transmission line.

The Tx-Phy Layer signal processing unit (other transmission standard) 338 performs signal processing of the physical layer of the other transmission standard on the signal supplied from the Tx-Link Layer signal processing unit (other transmission standard) 334 via the MUX 335. The Tx-Phy Layer signal processing unit (other transmission standard) 338 transmits a signal of the other transmission standard obtained by performing the signal processing of the physical layer to the opposite device via the transmission line.

By providing the signal conversion device 203 between the image sensor 201 and the opposite device, it is possible to convert the signal of the standard of the first physical layer of the other transmission standard that is difficult to receive at high speed into a signal of the standard of the second physical layer of the same other transmission standard or a signal of the SLVS-EC standard and output the signal. For example, long-distance transmission is possible by converting the signal into the signal of the SLVS-EC standard and outputting the signal.

Furthermore, in a case where the opposite device on the receiving side does not correspond to reception of the signal of the other transmission standard, by outputting the signal of the SLVS-EC standard, the signal conversion device 203 makes it possible for such an opposite device to receive the signal.

By using a standard such as MIPI as it is for the standard of the link layer, it is possible to suppress changes in the opposite device on the receiving side, for example.

The specifications of the interface between the signal processing units of the SLVS-EC standard have been mainly described, but the specifications described with reference to Figs. 3 to 8 are applicable to input and output between the signal processing units on the transmitting side of the other standard. Furthermore, the specifications described with reference to Figs. 11 to 16 are applicable to input and output between the signal processing units on the receiving side of the other standards.

<Configuration example of computer>

The series of processes described above can be executed by hardware or can be executed by software. In a case where the series of processes is executed by software, a program constituting the software is installed on a computer built into dedicated hardware or a general-purpose personal computer from a program recording medium, or the like.

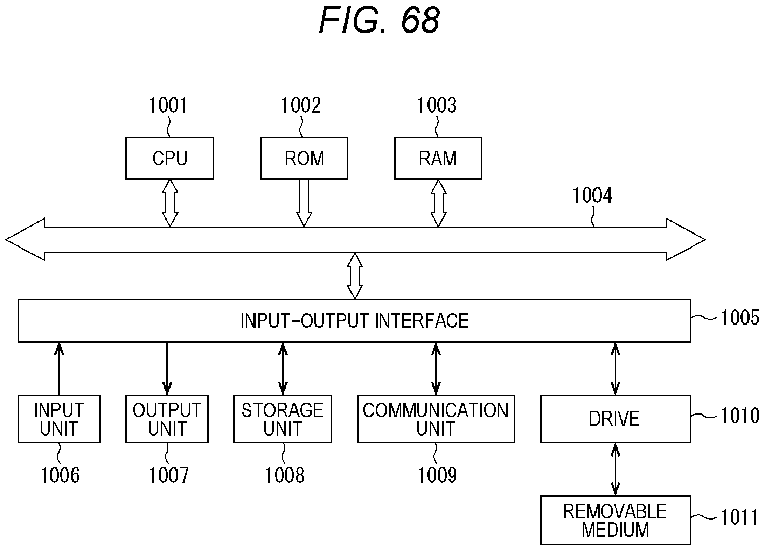

Fig. 68 is a block diagram illustrating a configuration example of hardware of a computer that executes the above-described series of processes by a program.

A central processing unit (CPU) 1001, a read only memory (ROM) 1002, and a random access memory (RAM) 1003 are interconnected via a bus 1004.

An input-output interface 1005 is further connected to the bus 1004. An input unit 1006 including a keyboard, a mouse, and the like, and an output unit 1007 including a display, a speaker, and the like are connected to the input-output interface 1005. Furthermore, the input-output interface 1005 is connected to a storage unit 1008 including a hard disk and a non-volatile memory and the like, a communication unit 1009 including a network interface and the like, and a drive 1010 that drives a removable medium 1011.

In the computer configured as described above, for example, the CPU 1001 loads a program stored in the storage unit 1008 into the RAM 1003 via the input-output interface 1005 and the bus 1004 and executes the program, to thereby perform the above-described series of processes.

For example, the program to be executed by the CPU 1001 is recorded on the removable medium 1011 or provided via a wired or wireless transmission medium such as a local area network, the Internet, or a digital broadcast, and installed in the storage unit 1008.

Note that the program executed by the computer may be a program for processing in time series in the order described in the present description, or a program for processing in parallel or at a necessary timing such as when a call is made.

The effects described herein are merely examples and are not limited, and other effects may be provided.

The embodiments of the present technology are not limited to the above-described embodiments, and various modifications are possible without departing from the gist of the present technology.

For example, the present technology can employ a configuration of cloud computing in which one function is shared by a plurality of devices via a network and processed jointly.

Furthermore, each step described in the above-described flowcharts can be executed by one device, or can be executed in a shared manner by a plurality of devices.

Moreover, in a case where a plurality of processes is included in one step, the plurality of processes included in the one step can be executed in a shared manner by a plurality of devices in addition to being executed by one device.

<Example of combinations of configurations>

The present technology can also employ the following configurations.
(1) A transmission device including:

a first signal processing unit that performs, as processing of a first layer, processing of generating a packet that stores data to be transmitted and distributing the packet that has been generated to a plurality of lanes; and
a second signal processing unit that performs, as processing of a second layer, processing including insertion of control information in parallel on the packet of each of the lanes output from the first signal processing unit, and processing of outputting a data stream obtained by performing the processing onto a transmission line to a reception device,
in which the first signal processing unit and the second signal processing unit are configured to input and output signals according to specifications of input and output defined on the basis of the first layer and specifications of input and output defined on the basis of the second layer.

(2) The transmission device according to (1) above,
in which the first signal processing unit outputs a signal requesting a start of a sequence to the second signal processing unit.
(3) The transmission device according to (1) or (2) above,
in which the second signal processing unit outputs a signal providing notification of a state of the second layer to the first signal processing unit.
(4) The transmission device according to any one of (1) to (3) above,
in which the first signal processing unit and the second signal processing unit are provided respectively on different integrated circuit chips.

(5) A transmission method for a transmission device including:

a first signal processing unit that performs, as processing of a first layer, processing of generating a packet that stores data to be transmitted and distributing the packet that has been generated to a plurality of lanes; and
a second signal processing unit that performs, as processing of a second layer, processing including insertion of control information in parallel on the packet of each of the lanes output from the first signal processing unit, and processing of outputting a data stream obtained by performing the processing onto a transmission line to a reception device,
the transmission method including, by the transmission device,
inputting and outputting signals, between the first signal processing unit and the second signal processing unit, according to specifications of input and output defined on the basis of the first layer and specifications of input and output defined on the basis of the second layer.

(6) A reception device including:

a first signal processing unit that receives a data stream output from a transmission device in parallel as data of a plurality of lanes onto a transmission line and performs, as processing of a first layer, processing including a synchronization processing and removal of control information; and
a second signal processing unit that performs, as processing of a second layer, processing of integrating the data stream of each of the lanes output from the first signal processing unit into one series of data and acquiring a packet constituting the data stream,
in which the first signal processing unit and the second signal processing unit are configured to input and output signals according to specifications of input and output defined on the basis of the first layer and specifications of input and output defined on the basis of the second layer.

(7) The reception device according to (6) above,
in which the second signal processing unit outputs a signal requesting a start of a sequence to the first signal processing unit.
(8) The reception device according to (6) or (7) above,
in which the first signal processing unit outputs a signal providing notification of a state of the first layer to the second signal processing unit.
(9) The reception device according to any one of (6) to (8) above,
in which the first signal processing unit and the second signal processing unit are provided respectively on different integrated circuit chips.
(10) A reception method for a reception device including:

a first signal processing unit that receives a data stream output from a transmission device in parallel as data of a plurality of lanes onto a transmission line and performs, as processing of a first layer, processing including a synchronization processing and removal of control information; and
a second signal processing unit that performs, as processing of a second layer, processing of integrating the data stream of each of the lanes output from the first signal processing unit into one series of data and acquiring a packet constituting the data stream,
the reception method including, by the reception device,
inputting and outputting signals, between the first signal processing unit and the second signal processing unit, according to specifications of input and output defined on the basis of the first layer and specifications of input and output defined on the basis of the second layer.

(11) A transmission-reception device including:

a transmission device that includes

a first signal processing unit that performs, as processing of a first layer, processing of generating a packet that stores data to be transmitted and distributing the packet that has been generated to a plurality of lanes, and
a second signal processing unit that performs, as processing of a second layer, processing including insertion of control information in parallel on the packet of each of the lanes output from the first signal processing unit, and processing of outputting a data stream obtained by performing the processing onto a transmission line to a reception device,
in which the first signal processing unit and the second signal processing unit are configured to input and output signals according to specifications of input and output defined on the basis of the first layer and specifications of input and output defined on the basis of the second layer; and

the reception device that includes

a third signal processing unit that receives the data stream output from the transmission device in parallel as data of a plurality of the lanes onto a transmission line and performs, as processing of the second layer, processing including a synchronization processing and removal of control information, and
a fourth signal processing unit that performs, as processing of the first layer, processing of integrating the data stream of each of the lanes output from the third signal processing unit into one series of data and acquiring the packet constituting the data stream,
in which the third signal processing unit and the fourth signal processing unit are configured to input and output signals according to specifications of input and output defined on the basis of the first layer and specifications of input and output defined on the basis of the second layer.

REFERENCE SIGNS LIST

| | |
|---|---|
| 1 | Transmission system |
| 11 | Image sensor |
| 12 | DSP |
| 21 | Imaging unit |
| 22 | Transmission unit |
| 22A | Tx-Link Layer signal processing unit |
| 22B | Tx-Phy Layer signal processing unit |
| 31 | Reception unit |
| 31A | Tx-Phy Link Layer signal processing unit |
| 31B | Tx-Link Layer signal processing unit |
| 32 | Image processing unit |
| 62 | Pixel to Byte conversion unit |
| 63 | Payload ECC insertion unit |
| 64 | Packet generation unit |
| 65 | Lane distribution unit |
| 72 | Header generation unit |
| 83-0 to 83-N | Signal processing unit |
| 91 | Control code insertion unit |
| 92 | 8B10B symbol encoder |
| 93 | Synchronization unit |
| 94 | Transmission unit |
| 102-0 to 102-N | Signal processing unit |
| 111 | Reception unit |
| 112 | Clock generation unit |
| 113 | Synchronization unit |
| 114 | Symbol synchronization unit |
| 115 | 10B8B symbol decoder |
| 116 | Skew correction unit |
| 117 | Control code removal unit |
| 122 | Lane integration unit |
| 123 | Packet separation unit |
| 124 | Payload error correction unit |
| 125 | Byte to Pixel conversion unit |
| 132 | Header error correction unit |

**Claims**

1. A transmission device (22) comprising:

   a first signal processing unit (22A) that is configured to perform, as processing of a first layer, processing of generating a packet that stores data to be transmitted and distributing the packet that has been generated to a plurality of lanes; and
   a second signal processing unit (22B) that is configured to perform, as processing of a second layer, processing including insertion of control information in parallel on the packet of each of the lanes output from the first signal processing unit (22B), and processing of outputting a data stream obtained by performing the processing onto a transmission line to a reception device (31),
   wherein the first signal processing unit (22A) and the second signal processing unit (22B) are configured to input and output signals according to specifications of input and output defined on a basis of the first layer and specifications of input and output defined on a basis of the second layer, wherein
   the first signal processing unit (22A) and the second signal processing unit (22B) are provided respectively on different integrated circuit chips, the transmission device being **characterized in that** :

   the first signal processing unit (22A) is configured to perform processing of the first layer according to one of a scalable low voltage signaling-embedded clock standard or another transmission standard, while
   the second signal processing unit (22B) is configured to perform processing of the second layer according to the other one of the scalable low voltage signaling-embedded clock standard or the other transmission standard.

2. The transmission device (22) according to claim 1,
   wherein the first signal processing unit (22A) is configured to output a signal requesting a start of a sequence to the second signal processing unit (22B).

3. The transmission device (22) according to claim 1 or 2,
   wherein the second signal processing unit (22B) is configured to output a signal providing notification of a state of the second layer to the first signal processing unit (22A).

4. A transmission method for a transmission device (22) including:

   a first signal processing unit (22A) that performs, as processing of a first layer, processing of generating a packet that stores data to be transmitted and distributing the packet that has been generated to a plurality of lanes; and
   a second signal processing unit (22B) that performs, as processing of a second layer, processing including insertion of control information in parallel on the packet of each of the lanes output from the first signal processing unit (22A), and processing of outputting a data stream obtained by performing the processing onto a transmission line to a reception device (31),
   the transmission method comprising, by the transmission device (22),
   inputting and outputting signals, between the first signal processing unit (22A) and the second signal processing unit (22B), according to specifications of input and output defined on a basis of the first layer and specifications of input and output defined on a basis of the second layer, wherein
   the first signal processing unit (22A) and the second signal processing (22B) unit are provided respectively on different integrated circuit chips, the transmission method being **characterized in that** :

   the first signal processing unit (22A) performs processing of the first layer according to one of a scalable low voltage signaling-embedded clock standard or another transmission standard, while
   the second signal processing unit (22B) performs processing of the second layer according to the other one of the scalable low voltage signaling-embedded clock standard or the other transmission standard.

5. A reception device (31) comprising:

   a first signal processing unit (31A) that is configured to receive a data stream output from a transmission device (22) in parallel as data of a plurality of lanes onto a transmission line and perform, as processing of a first layer, processing including a synchronization processing and removal of control information; and
   a second signal processing unit (31B) that is configured to perform, as processing of a second layer, processing of integrating the data stream of each of the lanes output from the first signal processing unit (31A) into one series of data and acquiring a packet constituting the data stream,
wherein the first signal processing unit (31A) and the second signal processing unit (31B) are configured to input and output signals according to specifications of input and output defined on a basis of the first layer and specifications of input and output defined on a basis of the second layer, wherein
the first signal processing unit (31A) and the second signal processing unit (31B) are provided respectively on different integrated circuit chips, the reception device being **characterized in that** :

the first signal processing unit (31A) is configured to perform processing of the first layer according to one of a scalable low voltage signaling-embedded clock standard or another transmission standard, while
the second signal processing unit (31B) is configured to perform processing of the second layer according to the other one of the scalable low voltage signaling-embedded clock standard or the other transmission standard.

6.  The reception device (31) according to claim 5,
    wherein the second signal processing unit (31B) is configured to output a signal requesting a start of a sequence to the first signal processing unit (31A).

7.  The reception device according to claim 5 or 6,
    wherein the first signal processing unit (31A) is configured to output a signal providing notification of a state of the first layer to the second signal processing unit (31B).

8.  A reception method for a reception device (31) including:

    a first signal processing unit (31A) that receives a data stream output from a transmission device (22) in parallel as data of a plurality of lanes onto a transmission line and perform, as processing of a first layer, processing including a synchronization processing and removal of control information; and
    a second signal processing unit (31B) that performs as processing of a second layer, processing of integrating the data stream of each of the lanes output from the first signal processing unit (31A) into one series of data and acquiring a packet constituting the data stream,
    the reception method comprising, by the reception device (31),
    inputting and outputting signals, between the first signal processing unit (31A) and the second signal processing unit (31B), according to specifications of input and output defined on a basis of the first layer and specifications of input and output defined on a basis of the second layer, wherein
    the first signal processing unit (31A) and the second signal processing unit (31B) are provided respectively on different integrated circuit chips, the reception method being **characterized in that** :

    the first signal processing unit (31A) performs processing of the first layer according to one of a scalable low voltage signaling-embedded clock standard or another transmission standard, while
    the second signal processing unit (31B) performs processing of the second layer according to the other one of the scalable low voltage signaling-embedded clock standard or the other transmission standard.

9.  A transmission-reception device (1) comprising:

    a transmission device (22) that includes

    a first signal processing unit (22A) that is configured to perform, as processing of a first layer, processing of generating a packet that stores data to be transmitted and distributing the packet that has been generated to a plurality of lanes, and
    a second signal processing unit (22B) that is configured to perform, as processing of a second layer, processing including insertion of control information in parallel on the packet of each of the lanes output from the first signal processing unit (22A), and processing of outputting a data stream obtained by performing the processing onto a transmission line to a reception device (31),
    wherein the first signal processing unit (22A) and the second signal processing unit (22B) are configured to input and output signals according to specifications of input and output defined on a basis of the first layer and specifications of input and output defined on a basis of the second layer, wherein

    the first signal processing unit (22A) and the second signal processing unit (22B) are provided respectively on different integrated circuit chips,

the first signal processing unit (22A) is configured to perform processing of the first layer according to one of a scalable low voltage signaling-embedded clock standard or another transmission standard, while the second signal processing unit (22B) is configured to perform processing of the second layer according to the other one of the scalable low voltage signaling-embedded clock standard or the other transmission standard; and

the reception device that includes

a third signal processing unit (31A) that is configured to receive the data stream output from the transmission device (22) in parallel as data of a plurality of the lanes onto a transmission line and perform, as processing of the second layer, processing including a synchronization processing and removal of control information, and

a fourth signal processing unit (31B) that is configured to perform, as processing of the first layer, processing of integrating the data stream of each of the lanes output from the third signal processing unit (31A) into one series of data and acquiring the packet constituting the data stream, wherein the third signal processing unit (31A) and the fourth signal processing unit (31B) are configured to input and output signals according to specifications of input and output defined on a basis of the first layer and specifications of input and output defined on a basis of the second layer, wherein

the third signal processing unit (31A) and the fourth signal processing unit (31B) are provided respectively on different integrated circuit chips,

the third signal processing unit (31A) is configured to perform processing of the second layer according to one of a scalable low voltage signaling-embedded clock standard or another transmission standard, while the fourth signal processing unit (31B) is configured to perform processing of the first layer according to the other one of the scalable low voltage signaling-embedded clock standard or the other transmission standard.

## Patentansprüche

1. Sendevorrichtung (22), umfassend:

   eine erste Signalverarbeitungseinheit (22A), die dazu ausgebildet ist, als Verarbeitung einer ersten Schicht Verarbeitung zum Erzeugen eines Pakets, das zu sendende Daten speichert, und Verteilen des erzeugten Pakets an eine Mehrzahl von Lanes durchzuführen; und
   eine zweite Signalverarbeitungseinheit (22B), die dazu ausgebildet ist, als Verarbeitung einer zweiten Schicht Verarbeitung, die parallele Einfügung von Steuerinformationen in das von der ersten Signalverarbeitungseinheit (22B) ausgegebene Paket jeder der Lanes aufweist, und Verarbeitung zum Ausgeben eines Datenstroms, der durch Durchführen der Verarbeitung erhalten wird, auf eine Übertragungsleitung zu einer Empfangsvorrichtung (31) durchzuführen,
   wobei die erste Signalverarbeitungseinheit (22A) und die zweite Signalverarbeitungseinheit (22B) dazu ausgebildet sind, Signale gemäß Eingabe- und Ausgabespezifikationen, die auf einer Basis der ersten Schicht definiert sind, und Eingabe- und Ausgabespezifikationen, die auf einer Basis der zweiten Schicht definiert sind, einzugeben und auszugeben, wobei
   die erste Signalverarbeitungseinheit (22A) und die zweite Signalverarbeitungseinheit (22B) jeweils auf verschiedenen IC-Chips vorgesehen sind, wobei die Sendevorrichtung **dadurch gekennzeichnet ist, dass**:

   die erste Signalverarbeitungseinheit (22A) dazu ausgebildet ist, Verarbeitung der ersten Schicht gemäß einem von einem Scalable Low Voltage Signaling-Embedded Clock-Standard oder einem anderen Übertragungsstandard durchzuführen, während
   die zweite Signalverarbeitungseinheit (22A) dazu ausgebildet ist, Verarbeitung der zweiten Schicht gemäß dem anderen von dem Scalable Low Voltage Signaling-Embedded Clock-Standard oder dem anderen Übertragungsstandard durchzuführen.

2. Sendevorrichtung (22) nach Anspruch 1,
   wobei die erste Signalverarbeitungseinheit (22A) dazu ausgebildet ist, ein Signal, das einen Start einer Sequenz anfordert, an die zweite Signalverarbeitungseinheit (22B) auszugeben.

3. Sendevorrichtung (22) nach Anspruch 1 oder 2,
   wobei die zweite Signalverarbeitungseinheit (22B) dazu ausgebildet ist, ein Signal, das Meldung eines Zustands der zweiten Schicht bereitstellt, an die erste Signalverarbeitungseinheit (22B) auszugeben.

4. Sendeverfahren für eine Sendevorrichtung (22), die aufweist:

eine erste Signalverarbeitungseinheit (22A), die als Verarbeitung einer ersten Schicht Verarbeitung zum Erzeugen eines Pakets, das zu sendende Daten speichert, und Verteilen des erzeugten Pakets an eine Mehrzahl von Lanes durchführt; und
eine zweite Signalverarbeitungseinheit (22B), die als Verarbeitung einer zweiten Schicht Verarbeitung, die parallele Einfügung von Steuerinformationen in das von der ersten Signalverarbeitungseinheit (22A) ausgegebene Paket jeder der Lanes aufweist, und Verarbeitung zum Ausgeben eines Datenstroms, der durch Durchführen der Verarbeitung erhalten wird, auf eine Übertragungsleitung zu einer Empfangsvorrichtung (31) durchführt,
wobei das Sendeverfahren durch die Sendevorrichtung (22) umfasst:

Eingeben und Ausgeben von Signalen zwischen der ersten Signalverarbeitungseinheit (22A) und der zweiten Signalverarbeitungseinheit (22B) gemäß Eingabe- und Ausgabespezifikationen, die auf einer Basis der ersten Schicht definiert sind, und Eingabe- und Ausgabespezifikationen, die auf einer Basis der zweiten Schicht definiert sind, wobei
die erste Signalverarbeitungseinheit (22A) und die zweite Signalverarbeitungseinheit (22B) jeweils auf verschiedenen IC-Chips vorgesehen sind, wobei das Sendeverfahren **dadurch gekennzeichnet ist, dass**:

die erste Signalverarbeitungseinheit (22A) Verarbeitung der ersten Schicht gemäß einem von einem Scalable Low Voltage Signaling-Embedded Clock-Standard oder einem anderen Übertragungsstandard durchführt, während
die zweite Signalverarbeitungseinheit (22A) Verarbeitung der zweiten Schicht gemäß dem anderen von dem Scalable Low Voltage Signaling-Embedded Clock-Standard oder dem anderen Übertragungsstandard durchführt.

5. Empfangsvorrichtung (31), umfassend:

eine erste Signalverarbeitungseinheit (31A), die dazu ausgebildet ist, einen von einer Sendevorrichtung (22) ausgegebenen Datenstrom parallel als Daten einer Mehrzahl von Lanes auf einer Übertragungsleitung zu empfangen und als Verarbeitung einer ersten Schicht Verarbeitung durchzuführen, die eine Synchronisationsverarbeitung und Entfernung von Steuerinformationen aufweist; und
eine zweite Signalverarbeitungseinheit (31B), die dazu ausgebildet ist, als Verarbeitung einer zweiten Schicht Verarbeitung zum Integrieren des von der ersten Signalverarbeitungseinheit (31A) ausgegebenen Datenstroms jeder der Lanes in eine Datenreihe und zum Erfassen eines den Datenstrom bildenden Pakets durchzuführen,
wobei die erste Signalverarbeitungseinheit (31A) und die zweite Signalverarbeitungseinheit (31B) dazu ausgebildet sind, Signale gemäß Eingabe- und Ausgabespezifikationen, die auf einer Basis der ersten Schicht definiert sind, und Eingabe- und Ausgabespezifikationen, die auf einer Basis der zweiten Schicht definiert sind, einzugeben und auszugeben, wobei
die erste Signalverarbeitungseinheit (31A) und die zweite Signalverarbeitungseinheit (31B) jeweils auf verschiedenen IC-Chips vorgesehen sind, wobei die Empfangsvorrichtung **dadurch gekennzeichnet ist, dass**:

die erste Signalverarbeitungseinheit (31A) dazu ausgebildet ist, Verarbeitung der ersten Schicht gemäß einem von einem Scalable Low Voltage Signaling-Embedded Clock-Standard oder einem anderen Übertragungsstandard durchzuführen, während
die zweite Signalverarbeitungseinheit (31B) dazu ausgebildet ist, Verarbeitung der zweiten Schicht gemäß dem anderen von dem Scalable Low Voltage Signaling-Embedded Clock-Standard oder dem anderen Übertragungsstandard durchzuführen.

6. Empfangsvorrichtung (31) nach Anspruch 5,
wobei die zweite Signalverarbeitungseinheit (31B) dazu ausgebildet ist, ein Signal, das einen Start einer Sequenz anfordert, an die erste Signalverarbeitungseinheit (31A) auszugeben.

7. Empfangsvorrichtung nach Anspruch 5 oder 6,
wobei die erste Signalverarbeitungseinheit (31A) dazu ausgebildet ist, ein Signal, das Meldung eines Zustands der ersten Schicht bereitstellt, an die zweite Signalverarbeitungseinheit (31B) auszugeben.

8. Empfangsverfahren für eine Empfangsvorrichtung (31), die aufweist:

eine erste Signalverarbeitungseinheit (31A), die einen von einer Sendevorrichtung (22) ausgegebenen Datenstrom parallel als Daten einer Mehrzahl von Lanes auf einer Übertragungsleitung empfängt und als Verarbeitung einer ersten Schicht Verarbeitung durchführt, die eine Synchronisationsverarbeitung und Entfernung von Steuerinformationen aufweist; und
eine zweite Signalverarbeitungseinheit (31B), die als Verarbeitung einer zweiten Schicht Verarbeitung zum Integrieren des von der ersten Signalverarbeitungseinheit (31A) ausgegebenen Datenstroms jeder der Lanes in eine Datenreihe und zum Erfassen eines den Datenstrom bildenden Pakets durchführt,
wobei das Empfangsverfahren durch die Empfangsvorrichtung (31) umfasst:

Eingeben und Ausgeben von Signalen zwischen der ersten Signalverarbeitungseinheit (31A) und der zweiten Signalverarbeitungseinheit (31B) gemäß Eingabe- und Ausgabespezifikationen, die auf einer Basis der ersten Schicht definiert sind, und Eingabe- und Ausgabespezifikationen, die auf einer Basis der zweiten Schicht definiert sind, wobei
die erste Signalverarbeitungseinheit (31A) und die zweite Signalverarbeitungseinheit (31B) jeweils auf verschiedenen IC-Chips vorgesehen sind, wobei das Empfangsverfahren **dadurch gekennzeichnet ist, dass**:

die erste Signalverarbeitungseinheit (31A) Verarbeitung der ersten Schicht gemäß einem von einem Scalable Low Voltage Signaling-Embedded Clock-Standard oder einem anderen Übertragungsstandard durchführt, während
die zweite Signalverarbeitungseinheit (31B) Verarbeitung der zweiten Schicht gemäß dem anderen von dem Scalable Low Voltage Signaling-Embedded Clock-Standard oder dem anderen Übertragungsstandard durchführt.

9. Sendeempfangsvorrichtung (1), umfassend:
eine Sendevorrichtung (22), die aufweist:

eine erste Signalverarbeitungseinheit (22A), die dazu ausgebildet ist, als Verarbeitung einer ersten Schicht Verarbeitung zum Erzeugen eines Pakets, das zu sendende Daten speichert, und Verteilen des erzeugten Pakets an eine Mehrzahl von Lanes durchzuführen; und
eine zweite Signalverarbeitungseinheit (22B), die dazu ausgebildet ist, als Verarbeitung einer zweiten Schicht Verarbeitung, die parallele Einfügung von Steuerinformationen in das von der ersten Signalverarbeitungseinheit (22A) ausgegebene Paket jeder der Lanes aufweist, und Verarbeitung zum Ausgeben eines Datenstroms, der durch Durchführen der Verarbeitung erhalten wird, auf eine Übertragungsleitung zu einer Empfangsvorrichtung (31) durchzuführen,
wobei die erste Signalverarbeitungseinheit (22A) und die zweite Signalverarbeitungseinheit (22B) dazu ausgebildet sind, Signale gemäß Eingabe- und Ausgabespezifikationen, die auf einer Basis der ersten Schicht definiert sind, und Eingabe- und Ausgabespezifikationen, die auf einer Basis der zweiten Schicht definiert sind, einzugeben und auszugeben, wobei
die erste Signalverarbeitungseinheit (22A) und die zweite Signalverarbeitungseinheit (22B) jeweils auf verschiedenen IC-Chips vorgesehen sind,
die erste Signalverarbeitungseinheit (22A) dazu ausgebildet ist, Verarbeitung der ersten Schicht gemäß einem von einem Scalable Low Voltage Signaling-Embedded Clock-Standard oder einem anderen Übertragungsstandard durchzuführen, während
die zweite Signalverarbeitungseinheit (22B) dazu ausgebildet ist, Verarbeitung der zweiten Schicht gemäß dem anderen von dem Scalable Low Voltage Signaling-Embedded Clock-Standard oder dem anderen Übertragungsstandard durchzuführen; und
die Empfangsvorrichtung, die aufweist:

eine dritte Signalverarbeitungseinheit (31A), die dazu ausgebildet ist, den von der Sendevorrichtung (22) ausgegebenen Datenstrom parallel als Daten einer Mehrzahl der Lanes auf einer Übertragungsleitung zu empfangen und als Verarbeitung einer zweiten Schicht Verarbeitung durchzuführen, die eine Synchronisationsverarbeitung und Entfernung von Steuerinformationen aufweist; und
eine vierte Signalverarbeitungseinheit (31B), die dazu ausgelegt ist, als Verarbeitung der ersten Schicht Verarbeitung zum Integrieren des von der dritten Signalverarbeitungseinheit (31A) ausgegebenen Datenstroms jeder der Lanes in eine Datenreihe und zum Erfassen eines den Datenstrom bildenden Pakets durchzuführen,

wobei die dritte Signalverarbeitungseinheit (31A) und die vierte Signalverarbeitungseinheit (31B) dazu ausgebildet sind, Signale gemäß Eingabe- und Ausgabespezifikationen, die auf einer Basis der ersten Schicht definiert sind, und Eingabe- und Ausgabespezifikationen, die auf einer Basis der zweiten Schicht definiert sind, einzugeben und auszugeben, wobei die dritte Signalverarbeitungseinheit (31A) und die vierte Signalverarbeitungseinheit (31B) jeweils auf verschiedenen IC-Chips vorgesehen sind,

die dritte Signalverarbeitungseinheit (31A) dazu ausgebildet ist, Verarbeitung der zweiten Schicht gemäß einem von einem Scalable Low Voltage Signaling-Embedded Clock-Standard oder einem anderen Übertragungsstandard durchzuführen, während

die vierte Signalverarbeitungseinheit (31B) dazu ausgebildet ist, Verarbeitung der ersten Schicht gemäß dem anderen von dem Scalable Low Voltage Signaling-Embedded Clock-Standard oder dem anderen Übertragungsstandard durchzuführen.

## Revendications

1. Dispositif d'émission (22) comprenant :

une première unité de traitement de signal (22A) qui est configurée pour réaliser, en tant que traitement d'une première couche, un traitement de génération d'un paquet qui stocke des données à émettre et de distribution du paquet qui a été généré sur une pluralité de voies ; et

une seconde unité de traitement de signal (22B) qui est configurée pour réaliser, en tant que traitement d'une seconde couche, un traitement incluant l'insertion d'une information de commande en parallèle sur le paquet de chacune des voies en sortie de la première unité de traitement de signal (22B), et un traitement d'émission en sortie d'un flux de données obtenu en réalisant le traitement sur une ligne d'émission jusqu'à un dispositif de réception (31),

dans lequel la première unité de traitement de signal (22A) et la seconde unité de traitement de signal (22B) sont configurées pour entrer et émettre en sortie des signaux conformément à des spécifications d'entrée et d'émission en sortie définies sur une base de la première couche et conformément à des spécifications d'entrée et d'émission en sortie définies sur une base de la seconde couche, dans lequel

la première unité de traitement de signal (22A) et la seconde unité de traitement de signal (22B) sont respectivement prévues sur des puces de circuit intégré différentes, le dispositif d'émission étant **caractérisé en ce que** :

la première unité de traitement de signal (22A) est configurée pour réaliser le traitement de la première couche conformément à un standard parmi un standard à horloge intégrée dans la signalisation basse tension adaptable et un autre standard d'émission,

tandis que

la seconde unité de traitement de signal (22B) est configurée pour réaliser le traitement de la seconde couche conformément à l'autre standard parmi le standard à horloge intégrée dans la signalisation basse tension adaptable et l'autre standard d'émission.

2. Dispositif d'émission (22) selon la revendication 1,
dans lequel la première unité de traitement de signal (22A) est configurée pour émettre en sortie un signal demandant un début d'une séquence sur la seconde unité de traitement de signal (22B).

3. Dispositif d'émission (22) selon la revendication 1 ou 2,
dans lequel la seconde unité de traitement de signal (22B) est configurée pour émettre en sortie un signal fournissant une notification d'un état de la seconde couche sur la première unité de traitement de signal (22A) .

4. Procédé d'émission pour un dispositif d'émission (22) incluant :

une première unité de traitement de signal (22A) qui réalise, en tant que traitement d'une première couche, un traitement de génération d'un paquet qui stocke des données à émettre et de distribution du paquet qui a été généré sur une pluralité de voies ; et

une seconde unité de traitement de signal (22B) qui réalise, en tant que traitement d'une seconde couche, un traitement incluant l'insertion d'une information de commande en parallèle sur le paquet de chacune des voies en sortie de la première unité de traitement de signal (22A), et un traitement d'émission en sortie d'un flux de données obtenu en réalisant le traitement sur une ligne d'émission jusqu'à un dispositif de réception (31),

le procédé d'émission comprenant, par le dispositif d'émission (22),

l'entrée et l'émission en sortie de signaux, entre la première unité de traitement de signal (22A) et la seconde unité de traitement de signal (22B), conformément à des spécifications d'entrée et d'émission en sortie définies sur une base de la première couche et conformément à des spécifications d'entrée et d'émission en sortie définies sur une base de la seconde couche, dans lequel

la première unité de traitement de signal (22A) et la seconde unité de traitement de signal (22B) sont respectivement prévues sur des puces de circuit intégré différentes, le procédé d'émission étant **caractérisé en ce que** :

la première unité de traitement de signal (22A) réalise le traitement de la première couche conformément à un standard parmi un standard à horloge intégrée dans la signalisation basse tension adaptable et un autre standard d'émission,

tandis que

la seconde unité de traitement de signal (22B) réalise le traitement de la seconde couche conformément à l'autre standard parmi le standard à horloge intégrée dans la signalisation basse tension adaptable et l'autre standard d'émission.

5. Dispositif de réception (31) comprenant :

une première unité de traitement de signal (31A) qui est configurée pour recevoir un flux de données émis en sortie depuis un dispositif d'émission (22) en parallèle en tant que données d'une pluralité de voies sur une ligne d'émission et pour réaliser, en tant que traitement d'une première couche, un traitement incluant un traitement de synchronisation et l'enlèvement d'une information de commande ; et

une seconde unité de traitement de signal (31B) qui est configurée pour réaliser, en tant que traitement d'une seconde couche, un traitement d'intégration du flux de données de chacune des voies en sortie de la première unité de traitement de signal (31A) selon une série de données et d'acquisition d'un paquet constituant le flux de données,

dans lequel la première unité de traitement de signal (31A) et la seconde unité de traitement de signal (31B) sont configurées pour entrer et émettre en sortie des signaux conformément à des spécifications d'entrée et d'émission en sortie définies sur une base de la première couche et conformément à des spécifications d'entrée et d'émission en sortie définies sur une base de la seconde couche, dans lequel

la première unité de traitement de signal (31A) et la seconde unité de traitement de signal (31B) sont respectivement prévues sur des puces de circuit intégré différentes, le dispositif de réception étant **caractérisé en ce que** :

la première unité de traitement de signal (31A) est configurée pour réaliser le traitement de la première couche conformément à un standard parmi un standard à horloge intégrée dans la signalisation basse tension adaptable et un autre standard d'émission,

tandis que

la seconde unité de traitement de signal (31B) est configurée pour réaliser le traitement de la seconde couche conformément à l'autre standard parmi le standard à horloge intégrée dans la signalisation basse tension adaptable et l'autre standard d'émission.

6. Dispositif de réception (31) selon la revendication 5,
dans lequel la seconde unité de traitement de signal (31B) est configurée pour émettre en sortie un signal demandant un début d'une séquence sur la première unité de traitement de signal (31A).

7. Dispositif de réception selon la revendication 5 ou 6,
dans lequel la première unité de traitement de signal (31A) est configurée pour émettre en sortie un signal fournissant une notification d'un état de la première couche sur la seconde unité de traitement de signal (31B).

8. Procédé de réception pour un dispositif de réception (31) incluant :

une première unité de traitement de signal (31A) qui reçoit un flux de données émis en sortie depuis un dispositif d'émission (22) en parallèle en tant que données d'une pluralité de voies sur une ligne d'émission et qui réalise, en tant que traitement d'une première couche, un traitement incluant un traitement de synchronisation et l'enlèvement d'une information de commande ; et

une seconde unité de traitement de signal (31B) qui réalise, en tant que traitement d'une seconde couche, un traitement d'intégration du flux de données de chacune des voies en sortie de la première unité de traitement de signal (31A) selon une série de données et d'acquisition d'un paquet constituant le flux de données,

le procédé de réception comprenant, par le dispositif de réception (31),

l'entrée et l'émission en sortie de signaux, entre la première unité de traitement de signal (31A) et la seconde unité de traitement de signal (31B), conformément à des spécifications d'entrée et d'émission en sortie définies sur une base de la première couche et conformément à des spécifications d'entrée et d'émission en sortie définies sur une base de la seconde couche, dans lequel

la première unité de traitement de signal (31A) et la seconde unité de traitement de signal (31B) sont respectivement prévues sur des puces de circuit intégré différentes, le procédé de réception étant **caractérisé en ce que** :

la première unité de traitement de signal (31A) réalise le traitement de la première couche conformément à un standard parmi un standard à horloge intégrée dans la signalisation basse tension adaptable et un autre standard d'émission,

tandis que

la seconde unité de traitement de signal (31B) réalise le traitement de la seconde couche conformément à l'autre standard parmi le standard à horloge intégrée dans la signalisation basse tension adaptable et l'autre standard d'émission.

9. Dispositif d'émission-de réception (1) comprenant :

un dispositif d'émission (22) qui inclut

une première unité de traitement de signal (22A) qui est configurée pour réaliser, en tant que traitement d'une première couche, un traitement de génération d'un paquet qui stocke des données à émettre et de distribution du paquet qui a été généré sur une pluralité de voies ; et

une seconde unité de traitement de signal (22B) qui est configurée pour réaliser, en tant que traitement d'une seconde couche, un traitement incluant l'insertion d'une information de commande en parallèle sur le paquet de chacune des voies en sortie de la première unité de traitement de signal (22A), et un traitement d'émission en sortie d'un flux de données obtenu en réalisant le traitement sur une ligne d'émission jusqu'à un dispositif de réception (31),

dans lequel la première unité de traitement de signal (22A) et la seconde unité de traitement de signal (22B) sont configurées pour entrer et émettre en sortie des signaux conformément à des spécifications d'entrée et d'émission en sortie définies sur une base de la première couche et conformément à des spécifications d'entrée et d'émission en sortie définies sur une base de la seconde couche, dans lequel

la première unité de traitement de signal (22A) et la seconde unité de traitement de signal (22B) sont respectivement prévues sur des puces de circuit intégré différentes,

la première unité de traitement de signal (22A) est configurée pour réaliser le traitement de la première couche conformément à un standard parmi un standard à horloge intégrée dans la signalisation basse tension adaptable et un autre standard d'émission,

tandis que

la seconde unité de traitement de signal (22B) est configurée pour réaliser le traitement de la seconde couche conformément à l'autre standard parmi le standard à horloge intégrée dans la signalisation basse tension adaptable et l'autre standard d'émission ; et

le dispositif de réception qui inclut

une troisième unité de traitement de signal (31A) qui est configurée pour recevoir le flux de données émis en sortie depuis le dispositif d'émission (22) en parallèle en tant que données d'une pluralité des voies sur une ligne d'émission et pour réaliser, en tant que traitement de la seconde couche, un traitement incluant un traitement de synchronisation et l'enlèvement d'une information de commande ; et

une quatrième unité de traitement de signal (31B) qui est configurée pour réaliser, en tant que traitement de la première couche, un traitement d'intégration du flux de données de chacune des voies en sortie de la troisième unité de traitement de signal (31A) selon une série de données et d'acquisition du paquet constituant le flux de données,

dans lequel la troisième unité de traitement de signal (31A) et la quatrième unité de traitement de signal (31B) sont configurées pour entrer et émettre en sortie des signaux conformément à des spécifications d'entrée et d'émission en sortie définies sur une base de la première couche et conformément à des spécifications d'entrée et d'émission en sortie définies sur une base de la seconde couche, dans lequel

la troisième unité de traitement de signal (31A) et la quatrième unité de traitement de signal (31B) sont respectivement prévues sur des puces de circuit intégré différentes,
la troisième unité de traitement de signal (31A) est configurée pour réaliser le traitement de la seconde couche conformément à un standard parmi un standard à horloge intégrée dans la signalisation basse tension adaptable et un autre standard d'émission,
tandis que
la quatrième unité de traitement de signal (31B) est configurée pour réaliser le traitement de la première couche conformément à l'autre standard parmi le standard à horloge intégrée dans la signalisation basse tension adaptable et l'autre standard d'émission.

# FIG. 1

# FIG. 2

EP 3 920 498 B1

## FIG. 3

TRANSMISSION UNIT 22

PLL 22C

RefClk

TxHighSpeedClk

Tx-Phy Layer SIGNAL PROCESSING UNIT 22B

TxWordClk
TxLineValid
TxLineReady
TxDataValid[3/1/0:0]
TxDataReady
TxData_L*[31/15/7:0]
TxEnable
TxReady

Tx-Link Layer SIGNAL PROCESSING UNIT 22A

## FIG. 4

| Port name | I/O | OUTLINE |
|---|---|---|
| CLOCK | | |
| TxHighSpeedClk | I | HIGH-SPEED CLOCK FOR Data TRANSFER |
| TxWordClk | O | Word CLOCK FOR TRANSFER |
| START AND STOP SEQUENCE CONTROL | | |
| TxReady | O | Phy STATE NOTIFICATION<br>IN CASE WHERE THIS SIGNAL IS High, IT INDICATES THAT ACTIVATION REQUEST OR STOP REQUEST (TxEnable) FOR Phy LAYER CAN BE RECEIVED.<br>IN CASE WHERE THIS SIGNAL IS Low, IT INDICATES THAT Training Sequence OR Standby Sequence IS BEING EXECUTED. |
| TxEnable | I | START REQUEST FOR Phy LAYER<br>IF THIS SIGNAL IS SET TO High, Training Sequence STARTS.<br>IF THIS SIGNAL IS SET TO Low, Standby Sequence STARTS. |

EP 3 920 498 B1

## FIG. 5

| Port name | I/O | OUTLINE |
|---|---|---|
| DATA OUTPUT CONTROL | | |
| TxLineReady | O | Packet Data Transfer STATE NOTIFICATION<br>IN CASE WHERE THIS SIGNAL IS High, IT INDICATES THAT Packet Data Transfer REQUEST (TxLineValid) CAN BE RECEIVED. |
| TxLineValid | I | Packet Data Transfer REQUEST<br>IF THIS SIGNAL IS SET TO High, Packet Data Transfer Sequence IS STARTED. AFTER OUTPUT OF StartCode TO TRANSMISSION LINE, Packet Data IS RECEIVED. THAT IS, TxDataReady MAKES TRANSITION TO High.<br>IF THIS SIGNAL IS SET TO Low, Packet Data Transfer Sequence IS FINISHED. AFTER OUTPUT OF EndCode AND DeskewCode TO TRANSMISSION LINE, IT RETURNS TO Blanking STATE (STATE OF OUTPUTTING IdleCode). |
| TxDataReady | O | Packet Data OUTPUT STATE NOTIFICATION<br>IN CASE WHERE THIS SIGNAL IS High, IT INDICATES THAT Packet Data Valid (TxDataValid) CAN BE RECEIVED. |
| TxDataValid | I | Packet Data Valid<br>IN CASE WHERE THIS SIGNAL IS High, IT INDICATES THAT Packet Data IS VALID.<br>IN CASE WHERE TxData IS LARGER THAN 8 bits, IT IS NECESSARY TO INDICATE THAT IT IS VALID IN 8-bit UNITS.<br>RELATIONSHIP BETWEEN bit WIDTH OF TxData AND bit WIDTH OF TxDataValid IS DESCRIBED AS FOLLOWS.<br>IN CASE WHERE TxData HAS 8-bit width, 1 bit OF TxDataValid[0] IS USED.<br>IN CASE WHERE TxData HAS 16-bit width, 2 bits OF TxDataValid[1:0] IS USED.<br>IN CASE WHERE TxData HAS 32-bit width, 4 bits OF TxDataValid[3:0] IS USED.<br>IN CASE WHERE TxData HAS 64-bit width, 8 bits OF TxDataValid[7:0] IS USED.<br><br>RELATIONSHIP BETWEEN bit WIDTH OF TxData AND EACH bit OF TxDataValid IS DESCRIBED BELOW.<br>TxDataValid[0] INDICATES THAT TxData[7:0] IS VALID DATA.<br>TxDataValid[1] INDICATES THAT TxData[15:8] IS VALID DATA.<br>TxDataValid[2] INDICATES THAT TxData[23:16] IS VALID DATA.<br>TxDataValid[3] INDICATES THAT TxData[31:24] IS VALID DATA.<br>TxDataValid[4] INDICATES THAT TxData[39:32] IS VALID DATA.<br>TxDataValid[5] INDICATES THAT TxData[47:40] IS VALID DATA.<br>TxDataValid[6] INDICATES THAT TxData[55:48] IS VALID DATA.<br>TxDataValid[7] INDICATES THAT TxData[63:56] IS VALID DATA. |
| TxData_L0 | I | Lane0 Packet Data<br>RELATIONSHIP BETWEEN bit WIDTH OF TxData AND bit USED AS TxData IS DESCRIBED BELOW.<br>  8-bit width—TxData_L0[7:0]      32-bit width—TxData_L0[31:0]<br>16-bit width—TxData_L0[15:0]      64-bit width—TxData_L0[63:0] |
| TxData_L1 | I | Lane1 Packet Data<br>same as Lane0 |
| ... | | ... |
| TxData_L7 | I | Lane7 Packet Data<br>same as Lane0 |

EP 3 920 498 B1

# FIG. 6

TRANSMISSION UNIT 22

22C

RefClk → PLL

TxHighSpeedClk

Tx-Link Layer SIGNAL PROCESSING UNIT 22A

TxWordClk
TxLineValid
TxLineReady
TxDataValid[3/1/0:0]
TxDataReady
TxData_L*[31/15/7:0]
TxEnable
TxReady

Tx-Phy Layer SIGNAL PROCESSING UNIT 22B

EP 3 920 498 B1

## FIG. 7

| Port name | I/O | OUTLINE |
|---|---|---|
| CLOCK | | |
| TxWordClk | I | Word CLOCK FOR TRANSFER |
| START AND STOP SEQUENCE CONTROL | | |
| TxReady | I | Phy STATE NOTIFICATION<br>IN CASE WHERE THIS SIGNAL IS High, IT INDICATES THAT ACTIVATION REQUEST OR STOP REQUEST (TxEnable) FOR Phy LAYER CAN BE RECEIVED.<br>IN CASE WHERE THIS SIGNAL IS Low, IT INDICATES THAT Training Sequence OR Standby Sequence IS BEING EXECUTED. |
| TxEnable | O | START REQUEST FOR Phy LAYER<br>IF THIS SIGNAL IS SET TO High, Training Sequence STARTS.<br>IF THIS SIGNAL IS SET TO Low, Standby Sequence STARTS. |

# FIG. 8

| Port name | I/O | OUTLINE |
|---|---|---|
| DATA OUTPUT CONTROL | | |
| TxLineReady | I | Packet Data Transfer STATE NOTIFICATION<br>IN CASE WHERE THIS SIGNAL IS High, IT INDICATES THAT Packet Data Transfer REQUEST (TxLineValid) CAN BE RECEIVED. |
| TxLineValid | O | Packet Data Transfer REQUEST<br>IF THIS SIGNAL IS SET TO High, Packet Data Transfer Sequence IS STARTED. AFTER OUTPUT OF StartCode TO TRANSMISSION LINE, Packet Data IS RECEIVED. THAT IS, TxDataReady MAKES TRANSITION TO High.<br>IF THIS SIGNAL IS SET TO Low, Packet Data Transfer Sequence IS FINISHED. AFTER OUTPUT OF EndCode AND DeskewCode TO TRANSMISSION LINE, IT RETURNS TO Blanking STATE (STATE OF OUTPUTTING IdleCode). |
| TxDataReady | I | Packet Data OUTPUT STATE NOTIFICATION<br>IN CASE WHERE THIS SIGNAL IS High, IT INDICATES THAT Packet Data Valid (TxDataValid) CAN BE RECEIVED. |
| TxDataValid | O | Packet Data Valid<br>IN CASE WHERE THIS SIGNAL IS High, IT INDICATES THAT Packet Data IS VALID.<br>IN CASE WHERE TxData IS LARGER THAN 8 bits, IT IS NECESSARY TO INDICATE THAT IT IS VALID IN 8-bit UNITS.<br>RELATIONSHIP BETWEEN bit WIDTH OF TxData AND bit WIDTH OF TxDataValid IS DESCRIBED AS FOLLOWS.<br>IN CASE WHERE TxData HAS 8-bit width, 1 bit OF TxDataValid[0] IS USED.<br>IN CASE WHERE TxData HAS 16-bit width, 2 bits OF TxDataValid[1:0] IS USED.<br>IN CASE WHERE TxData HAS 32-bit width, 4 bits OF TxDataValid[3:0] IS USED.<br>IN CASE WHERE TxData HAS 64-bit width, 8 bits OF TxDataValid[7:0] IS USED.<br><br>RELATIONSHIP BETWEEN bit WIDTH OF TxData AND EACH bit OF TxDataValid IS DESCRIBED BELOW.<br>TxDataValid[0] INDICATES THAT TxData[7:0] IS VALID DATA.<br>TxDataValid[1] INDICATES THAT TxData[15:8] IS VALID DATA.<br>TxDataValid[2] INDICATES THAT TxData[23:16] IS VALID DATA.<br>TxDataValid[3] INDICATES THAT TxData[31:24] IS VALID DATA.<br>TxDataValid[4] INDICATES THAT TxData[39:32] IS VALID DATA.<br>TxDataValid[5] INDICATES THAT TxData[47:40] IS VALID DATA.<br>TxDataValid[6] INDICATES THAT TxData[55:48] IS VALID DATA.<br>TxDataValid[7] INDICATES THAT TxData[63:56] IS VALID DATA. |
| TxData_L0 | O | Lane0 Packet Data<br>RELATIONSHIP BETWEEN bit WIDTH OF TxData AND bit USED AS TxData IS DESCRIBED BELOW.<br> 8-bit width—TxData_L0[7:0]    32-bit width—TxData_L0[31:0]<br>16-bit width—TxData_L0[15:0]    64-bit width—TxData_L0[63:0] |
| TxData_L1 | O | Lane1 Packet Data<br>same as Lane0 |
| ... | | ... |
| TxData_L7 | O | Lane7 Packet Data<br>same as Lane0 |

EP 3 920 498 B1

## FIG. 9

FSM for TX PHY Layer Protocol

EP 3 920 498 B1

FIG. 10

EP 3 920 498 B1

## FIG. 11

RECEPTION UNIT

31

RxRefClk

Rx-Phy Layer
SIGNAL PROCESSING UNIT

31A

RxWordClk

RxLineValid
RxDataValid[3/1/0:0]
RxData_L*[31/15/7:0]

RxEnable
RxCDRLock
RxSymbolAlign
RxLaneDeskew
RxStandbyDetect
RxDecodeError

Rx-Link Layer
SIGNAL PROCESSING UNIT

31B

EP 3 920 498 B1

## FIG. 12

| Port name | I/O | OUTLINE |
|---|---|---|
| CLOCK | | |
| RxRefClk | I | REFERENCE CLOCK |
| RxWordClk | O | Word CLOCK FOR TRANSFER |
| START AND STOP SEQUENCE CONTROL | | |
| RxEnable | I | START REQUEST FOR Phy LAYER<br>IF THIS SIGNAL IS SET TO High, RECEPTION OF SIGNAL IS ENABLED. |
| RxCDRLock | O | CDR Lock COMPLETION<br>IN CASE WHERE THIS SIGNAL IS High, IT INDICATES THAT Clock Data Recovery HAS BEEN COMPLETED. |
| RxSymbolAlign | O | Symbol Alignment COMPLETION<br>IN CASE WHERE THIS SIGNAL IS High, IT INDICATES THAT Symbol Alignment FOR VALID LANE HAS BEEN COMPLETED. |
| RxSkewAlign | O | INTER-Lane Skew Alignment COMPLETION<br>IN CASE WHERE THIS SIGNAL IS High, IT INDICATES THAT Skew BETWEEN VALID LANES IS REMOVED BY RECEIVING Training Sequence. |
| RxStandbyDetect | O | Standby Sequence Detect<br>IN CASE WHERE THIS SIGNAL IS High, IT INDICATES THAT Standby Sequence HAS BEEN RECEIVED. |
| RxDecodeError | O | 10B8B DECODE ERROR DETECTION<br>IN CASE WHERE THIS SIGNAL IS High, IT INDICATES THAT Code THAT DOES NOT EXIST IN 10B8B CONVERSION TABLE IS DETECTED. |

# FIG. 13

| Port name | I/O | OUTLINE |
|---|---|---|
| DATA OUTPUT CONTROL | | |
| RxLineValid | O | Packet Data Transfer Sequence RECEPTION FLAG<br>IN CASE WHERE THIS SIGNAL IS High, IT INDICATES Packet Data Transfer Sequence PERIOD. |
| RxDataValid | O | Packet data Valid<br>IN CASE WHERE THIS SIGNAL IS High, IT INDICATES THAT Packet Data IS VALID.<br>IN CASE WHERE RxData IS LARGER THAN 8 bits, IT IS NECESSARY TO INDICATE THAT IT IS VALID IN 8-bit UNITS.<br>RELATIONSHIP BETWEEN bit WIDTH OF RxData AND bit WIDTH OF RxDataValid IS DESCRIBED AS FOLLOWS.<br>   IN CASE WHERE RxData HAS 8-bit width, 1 bit OF RxDataValid[0] IS USED.<br>   IN CASE WHERE RxData HAS 16-bit width, 2 bits OF RxDataValid[1:0] IS USED.<br>   IN CASE WHERE RxData HAS 32-bit width, 4 bits OF RxDataValid[3:0] IS USED.<br>   IN CASE WHERE RxData HAS 64-bit width, 8 bits OF RxDataValid[7:0] IS USED.<br><br>RELATIONSHIP BETWEEN bit WIDTH OF RxData AND EACH bit OF RxDataValid IS DESCRIBED BELOW.<br>   RxDataValid[0] INDICATES WHETHER RxData[7:0] IS VALID DATA.<br>   RxDataValid[1] INDICATES WHETHER RxData[15:8] IS VALID DATA.<br>   RxDataValid[2] INDICATES WHETHER RxData[23:16] IS VALID DATA.<br>   RxDataValid[3] INDICATES WHETHER RxData[31:24] IS VALID DATA.<br>   RxDataValid[4] INDICATES WHETHER RxData[39:32] IS VALID DATA.<br>   RxDataValid[5] INDICATES WHETHER RxData[47:40] IS VALID DATA.<br>   RxDataValid[6] INDICATES WHETHER RxData[55:48] IS VALID DATA.<br>   RxDataValid[7] INDICATES WHETHER RxData[63:56] IS VALID DATA. |
| RxData_L0 | O | Lane0 Packet Data<br>RELATIONSHIP BETWEEN bit WIDTH OF RxData AND bit USED AS RxData IS DESCRIBED BELOW.<br> 8-bit width - RxData_L0[7:0]    32-bit width - RxData_L0[31:0]<br>16-bit width - RxData_L0[15:0]   64-bit width - RxData_L0[63:0] |
| RxData_L1 | O | Lane1 Packet Data<br>same as Lane0 |
| ... | | ... |
| RxData_L7 | O | Lane7 Packet Data<br>same as Lane0 |

EP 3 920 498 B1

*FIG. 14*

EP 3 920 498 B1

# FIG. 15

| Port name | I/O | OUTLINE |
|---|---|---|
| CLOCK | | |
| RxWordClk | I | Word CLOCK FOR TRANSFER |
| START AND STOP SEQUENCE CONTROL | | |
| RxEnable | O | START REQUEST FOR Phy LAYER<br>IF THIS SIGNAL IS SET TO High, RECEPTION OF SIGNAL IS ENABLED. |
| RxCDRLock | I | CDR Lock COMPLETION<br>IN CASE WHERE THIS SIGNAL IS High, IT INDICATES THAT Clock Data Recovery HAS BEEN COMPLETED. |
| RxSymbolAlign | I | Symbol Alignment COMPLETION<br>IN CASE WHERE THIS SIGNAL IS High, IT INDICATES THAT Symbol Alignment FOR VALID LANE HAS BEEN COMPLETED. |
| RxSkewAlign | I | INTER-Lane Skew Alignment COMPLETION<br>IN CASE WHERE THIS SIGNAL IS High, IT INDICATES THAT Skew BETWEEN VALID LANES IS REMOVED BY RECEIVING Training Sequence. |
| RxStandbyDetect | I | Standby Sequence Detect<br>IN CASE WHERE THIS SIGNAL IS High, IT INDICATES THAT Standby Sequence HAS BEEN RECEIVED. |
| RxDecodeError | I | 10B8B DECODE ERROR DETECTION<br>IN CASE WHERE THIS SIGNAL IS High, IT INDICATES THAT Code THAT DOES NOT EXIST IN 10B8B CONVERSION TABLE IS DETECTED. |

EP 3 920 498 B1

# FIG. 16

| Port name | I/O | OUTLINE |
|---|---|---|
| DATA OUTPUT CONTROL | | |
| RxLineValid | I | Packet Data Transfer Sequence RECEPTION FLAG<br>IN CASE WHERE THIS SIGNAL IS High, IT INDICATES Packet Data Transfer Sequence PERIOD. |
| RxDataValid | I | Packet data Valid<br>IN CASE WHERE THIS SIGNAL IS High, IT INDICATES THAT Packet Data IS VALID.<br>IN CASE WHERE RxData IS LARGER THAN 8 bits, IT IS NECESSARY TO INDICATE THAT IT IS VALID IN 8-bit UNITS.<br>RELATIONSHIP BETWEEN bit WIDTH OF RxData AND bit WIDTH OF RxDataValid IS DESCRIBED AS FOLLOWS.<br>   IN CASE WHERE RxData HAS 8-bit width, 1 bit OF RxDataValid[0] IS USED.<br>   IN CASE WHERE RxData HAS 16-bit width, 2 bits OF RxDataValid[1:0] IS USED.<br>   IN CASE WHERE RxData HAS 32-bit width, 4 bits OF RxDataValid[3:0] IS USED.<br>   IN CASE WHERE RxData HAS 64-bit width, 8 bits OF RxDataValid[7:0] IS USED.<br><br>RELATIONSHIP BETWEEN bit WIDTH OF RxData AND EACH bit OF RxDataValid IS DESCRIBED BELOW.<br>   RxDataValid[0] INDICATES WHETHER RxData[7:0] IS VALID DATA.<br>   RxDataValid[1] INDICATES WHETHER RxData[15:8] IS VALID DATA.<br>   RxDataValid[2] INDICATES WHETHER RxData[23:16] IS VALID DATA.<br>   RxDataValid[3] INDICATES WHETHER RxData[31:24] IS VALID DATA.<br>   RxDataValid[4] INDICATES WHETHER RxData[39:32] IS VALID DATA.<br>   RxDataValid[5] INDICATES WHETHER RxData[47:40] IS VALID DATA.<br>   RxDataValid[6] INDICATES WHETHER RxData[55:48] IS VALID DATA.<br>   RxDataValid[7] INDICATES WHETHER RxData[63:56] IS VALID DATA. |
| RxData_L0 | I | Lane0 Packet Data<br>RELATIONSHIP BETWEEN bit WIDTH OF RxData AND bit USED AS RxData IS DESCRIBED BELOW.<br> 8-bit width - RxData_L0[7:0]    32-bit width - RxData_L0[31:0]<br>16-bit width - RxData_L0[15:0]    64-bit width - RxData_L0[63:0] |
| RxData_L1 | I | Lane1 Packet Data<br>same as Lane0 |
| ... | | ... |
| RxData_L7 | I | Lane7 Packet Data<br>same as Lane0 |

## FIG. 17

FSM for RX PHY Layer Protocol

# FIG. 18

## FIG. 19

**A**

IC CHIP

| Tx-Link Layer SIGNAL PROCESSING UNIT | ↔ | Tx-Phy Layer SIGNAL PROCESSING UNIT |

22A

22B

**B**

IC CHIP

| Rx-Phy Layer SIGNAL PROCESSING UNIT | ↔ | Rx-Link Layer SIGNAL PROCESSING UNIT |

31A

31B

EP 3 920 498 B1

# FIG. 20

EP 3 920 498 B1

## FIG. 21

| | | |
|---|---|---|
| Link Layer<br>SIGNAL<br>PROCESSING UNIT<br>(OTHER TRANSMISSION<br>STANDARD) | ⟷ | Phy Layer<br>SIGNAL<br>PROCESSING UNIT<br>(SLVS-EC STANDARD) |

## FIG. 22

| | | |
|---|---|---|
| Link Layer<br>SIGNAL<br>PROCESSING UNIT<br>(SLVS-EC STANDARD) | ⟷ | Phy Layer<br>SIGNAL<br>PROCESSING UNIT<br>(OTHER TRANSMISSION<br>STANDARD) |

# FIG. 23

| Start Code | HEADER | PIXEL DATA FOR ONE LINE | FOOTER (CRC) | End Code |
|---|---|---|---|---|

FRONT DUMMY AREA A3

Embedded Data

| 1 | 0 | 0 | 1 | reserve | ECC |
| 0 | 0 | 0 | 2 | reserve | ECC |
| | | | : | | |
| 0 | 0 | 1 | N | reserve | ECC |
| 0 | 0 | 1 | N+1 | reserve | ECC |

Start Code

MARGIN AREA A2

EFFECTIVE PIXEL AREA A1

CRC (OPTION)

End Code

| 0 | 0 | 1 | M | reserve | ECC |
| 0 | 1 | 0 | M+1 | reserve | ECC |
| | | | : | | |
| 0 | 0 | 0 | Final Line | reserve | ECC |

REAR DUMMY AREA A4

| Frame Start | Frame End | Line Valid | Line Number | Reserved | ECC |
|---|---|---|---|---|---|

IMAGE DATA AREA A11

EP 3 920 498 B1

# FIG. 24

## FIG. 25

## FIG. 26

| LARGE ITEM | SMALL ITEM | AMOUNT OF INFORMATION | CONTENT |
|---|---|---|---|
| FRAME INFORMATION | Frame Start | 1bit | INDICATES BEGINNING OF FRAME (EXAMPLE: FIRST LINE) |
| | Frame End | 1bit | INDICATES END OF FRAME (EXAMPLE: AFTER DUMMY BEFORE LINE) |
| LINE INFORMATION | Line Valid | 1bit | INDICATES VALID OR INVALID OF LINE |
| | Line Number | 13bit | INDICATES LINE NUMBER |
| OTHERS | Reserved | 32bit | RESERVED FOR FUTURE EXPANSION |
| | Header ECC | 18byte | ECC FOR HEADER INFORMATION |

EP 3 920 498 B1

## FIG. 27

| Byte | Bit | Contents | |
|---|---|---|---|
| H7 | 63 | Frame Start | |
| | 62 | Frame End | |
| | 61 | Line Valid | |
| | 60 | Line Number [12] | |
| | 59 | Line Number [11] | |
| | 58 | Line Number [10] | |
| | 57 | Line Number [9] | |
| | 56 | Line Number [8] | |
| H6 | 55 | Line Number [7] | |
| | 54 | Line Number [6] | |
| | 53 | Line Number [5] | |
| | 52 | Line Number [4] | |
| | 51 | Line Number [3] | |
| | 50 | Line Number [2] | |
| | 49 | Line Number [1] | |
| | 48 | Line Number [0] | |

| Byte | Bit | Contents | |
|---|---|---|---|
| H5 | 47 | Reserved [31] | |
| | 46 | Reserved [30] | |
| | 45 | Reserved [29] | |
| | 44 | Reserved [28] | |
| | 43 | Reserved [27] | |
| | 42 | Reserved [26] | |
| | 41 | Reserved [25] | |
| | 40 | Reserved [24] | |
| H4 | 39 | Reserved [23] | |
| | 38 | Reserved [22] | |
| | 37 | Reserved [21] | |
| | 36 | Reserved [20] | |
| | 35 | Reserved [19] | |
| | 34 | Reserved [18] | |
| | 33 | Reserved [17] | |
| | 32 | Reserved [16] | |

| Byte | Bit | Contents | |
|---|---|---|---|
| H3 | 31 | Reserved [15] | |
| | 30 | Reserved [14] | |
| | 29 | Reserved [13] | |
| | 28 | Reserved [12] | |
| | 27 | Reserved [11] | |
| | 26 | Reserved [10] | |
| | 25 | Reserved [9] | |
| | 24 | Reserved [8] | |
| H2 | 23 | Reserved [7] | |
| | 22 | Reserved [6] | |
| | 21 | Reserved [5] | |
| | 20 | Reserved [4] | |
| | 19 | Reserved [3] | |
| | 18 | Reserved [2] | |
| | 17 | Reserved [1] | |
| | 16 | Reserved [0] | |

| Byte | Bit | Contents | |
|---|---|---|---|
| H1 | 15 | CRC [15] | $X^{15}$ |
| | 14 | CRC [14] | $X^{14}$ |
| | 13 | CRC [13] | $X^{13}$ |
| | 12 | CRC [12] | $X^{12}$ |
| | 11 | CRC [11] | $X^{11}$ |
| | 10 | CRC [10] | $X^{10}$ |
| | 9 | CRC [9] | $X^{9}$ |
| | 8 | CRC [8] | $X^{8}$ |
| H0 | 7 | CRC [7] | $X^{7}$ |
| | 6 | CRC [6] | $X^{6}$ |
| | 5 | CRC [5] | $X^{5}$ |
| | 4 | CRC [4] | $X^{4}$ |
| | 3 | CRC [3] | $X^{3}$ |
| | 2 | CRC [2] | $X^{2}$ |
| | 1 | CRC [1] | $X^{1}$ |
| | 0 | CRC [0] | $X^{0}$ |

EP 3 920 498 B1

# FIG. 28

| Pixel | Bit |
|-------|-----|
| | Data[7] |
| | Data[6] |
| | Data[5] |
| Pixel | Data[4] |
| N | Data[3] |
| | Data[2] |
| | Data[1] |
| | Data[0] |

| Byte | Bit |
|------|-----|
| | Data[7] |
| | Data[6] |
| | Data[5] |
| Byte | Data[4] |
| N | Data[3] |
| | Data[2] |
| | Data[1] |
| | Data[0] |

## FIG. 29

| Pixel | Bit |
|---|---|
| Pixel N | Data[9] |
| | Data[8] |
| | Data[7] |
| | Data[6] |
| | Data[5] |
| | Data[4] |
| | Data[3] |
| | Data[2] |
| | Data[1] |
| | Data[0] |
| Pixel N+1 | Data[9] |
| | Data[8] |
| | Data[7] |
| | Data[6] |
| | Data[5] |
| | Data[4] |
| | Data[3] |
| | Data[2] |
| | Data[1] |
| | Data[0] |
| Pixel N+2 | Data[9] |
| | Data[8] |
| | Data[7] |
| | Data[6] |
| | Data[5] |
| | Data[4] |
| | Data[3] |
| | Data[2] |
| | Data[1] |
| | Data[0] |
| Pixel N+3 | Data[9] |
| | Data[8] |
| | Data[7] |
| | Data[6] |
| | Data[5] |
| | Data[4] |
| | Data[3] |
| | Data[2] |
| | Data[1] |
| | Data[0] |

| Byte | Bit | |
|---|---|---|
| Byte 1.25*N | Data[9] | Pixel N |
| | Data[8] | |
| | Data[7] | |
| | Data[6] | |
| | Data[5] | |
| | Data[4] | |
| | Data[3] | |
| | Data[2] | |
| Byte 1.25*N+1 | Data[9] | Pixel N+1 |
| | Data[8] | |
| | Data[7] | |
| | Data[6] | |
| | Data[5] | |
| | Data[4] | |
| | Data[3] | |
| | Data[2] | |
| Byte 1.25*N+2 | Data[9] | Pixel N+2 |
| | Data[8] | |
| | Data[7] | |
| | Data[6] | |
| | Data[5] | |
| | Data[4] | |
| | Data[3] | |
| | Data[2] | |
| Byte 1.25*N+3 | Data[9] | Pixel N+3 |
| | Data[8] | |
| | Data[7] | |
| | Data[6] | |
| | Data[5] | |
| | Data[4] | |
| | Data[3] | |
| | Data[2] | |
| Byte 1.25*N+4 | Data[1] | Pixel N |
| | Data[0] | |
| | Data[1] | Pixel N+1 |
| | Data[0] | |
| | Data[1] | Pixel N+2 |
| | Data[0] | |
| | Data[1] | Pixel N+3 |
| | Data[0] | |

# FIG. 30

| Pixel | Bit |
|---|---|
| | Data[11] |
| | Data[10] |
| | Data[9] |
| | Data[8] |
| | Data[7] |
| Pixel N | Data[6] |
| | Data[5] |
| | Data[4] |
| | Data[3] |
| | Data[2] |
| | Data[1] |
| | Data[0] |
| | Data[11] |
| | Data[10] |
| | Data[9] |
| | Data[8] |
| | Data[7] |
| Pixel N+1 | Data[6] |
| | Data[5] |
| | Data[4] |
| | Data[3] |
| | Data[2] |
| | Data[1] |
| | Data[0] |

⇒

| Byte | Bit | |
|---|---|---|
| | Data[11] | |
| | Data[10] | |
| | Data[9] | |
| Byte 1.5*N | Data[8] | Pixel N |
| | Data[7] | |
| | Data[6] | |
| | Data[5] | |
| | Data[4] | |
| | Data[11] | |
| | Data[10] | |
| | Data[9] | |
| Byte 1.5*N+1 | Data[8] | Pixel N+1 |
| | Data[7] | |
| | Data[6] | |
| | Data[5] | |
| | Data[4] | |
| | Data[3] | |
| | Data[2] | Pixel N |
| | Data[1] | |
| Byte 1.5*N+2 | Data[0] | |
| | Data[3] | |
| | Data[2] | Pixel N+1 |
| | Data[1] | |
| | Data[0] | |

# FIG. 31

| Pixel | Bit |
|---|---|
| | Data[13] |
| | Data[12] |
| | Data[11] |
| | Data[10] |
| | Data[9] |
| | Data[8] |
| Pixel N | Data[7] |
| | Data[6] |
| | Data[5] |
| | Data[4] |
| | Data[3] |
| | Data[2] |
| | Data[1] |
| | Data[0] |
| | Data[13] |
| | Data[12] |
| | Data[11] |
| | Data[10] |
| | Data[9] |
| | Data[8] |
| Pixel N+1 | Data[7] |
| | Data[6] |
| | Data[5] |
| | Data[4] |
| | Data[3] |
| | Data[2] |
| | Data[1] |
| | Data[0] |
| | Data[13] |
| | Data[12] |
| | Data[11] |
| | Data[10] |
| | Data[9] |
| | Data[8] |
| Pixel N+2 | Data[7] |
| | Data[6] |
| | Data[5] |
| | Data[4] |
| | Data[3] |
| | Data[2] |
| | Data[1] |
| | Data[0] |
| | Data[13] |
| | Data[12] |
| | Data[11] |
| | Data[10] |
| | Data[9] |
| | Data[8] |
| Pixel N+3 | Data[7] |
| | Data[6] |
| | Data[5] |
| | Data[4] |
| | Data[3] |
| | Data[2] |
| | Data[1] |
| | Data[0] |

| Byte | Bit | |
|---|---|---|
| | Data[13] | |
| | Data[12] | |
| | Data[11] | |
| Byte 1.75*N | Data[10] | Pixel N |
| | Data[9] | |
| | Data[8] | |
| | Data[7] | |
| | Data[6] | |
| | Data[13] | |
| | Data[12] | |
| | Data[11] | |
| Byte 1.75*N+1 | Data[10] | Pixel N+1 |
| | Data[9] | |
| | Data[8] | |
| | Data[7] | |
| | Data[6] | |
| | Data[13] | |
| | Data[12] | |
| | Data[11] | |
| Byte 1.75*N+2 | Data[10] | Pixel N+2 |
| | Data[9] | |
| | Data[8] | |
| | Data[7] | |
| | Data[6] | |
| | Data[13] | |
| | Data[12] | |
| | Data[11] | |
| Byte 1.75*N+3 | Data[10] | Pixel N+3 |
| | Data[9] | |
| | Data[8] | |
| | Data[7] | |
| | Data[6] | |
| | Data[5] | |
| | Data[4] | |
| | Data[3] | |
| Byte 1.75*N+4 | Data[2] | Pixel N |
| | Data[1] | |
| | Data[0] | |
| | Data[5] | |
| | Data[4] | |
| | Data[3] | Pixel N+1 |
| Byte 1.75*N+5 | Data[2] | |
| | Data[1] | |
| | Data[0] | |
| | Data[5] | |
| | Data[4] | |
| | Data[3] | Pixel N+2 |
| | Data[2] | |
| | Data[1] | |
| | Data[0] | |
| | Data[5] | |
| Byte 1.75*N+6 | Data[4] | |
| | Data[3] | Pixel N+3 |
| | Data[2] | |
| | Data[1] | |
| | Data[0] | |

# FIG. 32

| Pixel | Bit |
|---|---|
| | Data[15] |
| | Data[14] |
| | Data[13] |
| | Data[12] |
| | Data[11] |
| | Data[10] |
| | Data[9] |
| Pixel N | Data[8] |
| | Data[7] |
| | Data[6] |
| | Data[5] |
| | Data[4] |
| | Data[3] |
| | Data[2] |
| | Data[1] |
| | Data[0] |

| Byte | Bit |
|---|---|
| | Data[15] |
| | Data[14] |
| | Data[13] |
| Byte 2*N | Data[12] |
| | Data[11] |
| | Data[10] |
| | Data[9] |
| | Data[8] |
| | Data[7] |
| | Data[6] |
| | Data[5] |
| Byte 2*N+1 | Data[4] |
| | Data[3] |
| | Data[2] |
| | Data[1] |
| | Data[0] |

# FIG. 33

PAYLOAD
STUFFING DATA

# FIG. 34

PAYLOAD STUFFING DATA

# FIG. 35

# FIG. 36

# FIG. 37

# FIG. 38

# FIG. 39

EIGHT LANES
ASSIGNMENT

#1

SIX LANES
ASSIGNMENT

#2

FOUR LANES
ASSIGNMENT

#3

LANE STUFFING
DATA

# FIG. 40

| PHY CONTROL CODE | USE | 8B10B SYMBOL CONFIGURATION | | | |
|---|---|---|---|---|---|
| Idle Code | GROUP OF SYMBOLS FOR KEEPING TOGGLING OUTPUT SIGNAL OTHER THAN WHEN PACKET IS TRANSMITTED (MARGIN PERIOD OR THE LIKE) | D00. 0 | | | |
| Start Code | INDICATES START OF PACKET (LINE/H) | K28. 5 | K27. 7 | K28. 2 | K27. 7 |
| End Code | INDICATES END OF PACKET (LINE/H) | K28. 5 | K29. 7 | K30. 7 | K29. 7 |
| Pad Code | GROUP OF Padding SYMBOLS TO BE INSERTED TO FILL DIFFERENCE BETWEEN PIXEL DATA (PAYLOAD DATA) BANDWIDTH AND PHY TRANSMISSION BAND | K23. 7 | K28. 4 | K28. 6 | K28. 3 |
| Sync Code | GROUP OF SYMBOLS FOR BIT SYNCHRONIZATION OF I/F AND 8B10B SYMBOL SYNCHRONIZATION | K28. 5 | Any** | ← | ← |
| Deskew Code | GROUP OF SYMBOLS USED FOR MARKING TO ALIGN Data Skew BETWEEN LANES | K28. 5 | Any** | ← | ← |
| Standby Code | GROUP OF SYMBOLS FOR NOTIFYING RX SIDE THAT TX OUTPUT BECOMES High-Z | K28. 5 | Any** | ← | ← |

# FIG. 41

Control Symbol

| Code | 8B HGF_EDCBA | 10B abcdei_fghj | | memo |
|---|---|---|---|---|
| | | RD− | RD+ | |
| K23.7 | 11110111 | 1110101000 | 0001010111 | Used in Pad Code |
| K27.7 | 11111011 | 1101101000 | 0010010111 | Used in Start Code |
| K28.0 | 00011100 | 0011110100 | 1100001011 | Reserved |
| K28.1 | 00111100 | 0011111001 | 1100000110 | Reserved |
| K28.2 | 01011100 | 0011110101 | 1100001010 | Used in Start Code |
| K28.3 | 01111100 | 0011110011 | 1100001100 | Used in Pad Code |
| K28.4 | 10011100 | 0011110010 | 1100001101 | Used in Pad Code |
| K28.5 | 10111100 | 0011111010 | 1100000101 | Comma Character |
| K28.6 | 11011100 | 0011110110 | 1100001001 | Used in Pad Code |
| K28.7 | 11111100 | 0011111000 | 1100000111 | Reserved |
| K29.7 | 11111101 | 1011101000 | 0100010111 | Used in End Code |
| K30.7 | 11111110 | 0111101000 | 1000010111 | Used in End Code |

EP 3 920 498 B1

## FIG. 42

EP 3 920 498 B1

FIG. 43

## FIG. 44

# FIG. 45

```
( PROCESS OF IMAGING DEVICE )
            │
            ▼
   PERFORM IMAGING                S1
            │
            ▼
   DATA TRANSMISSION PROCESS      S2
            │
            ▼
   DATA RECEPTION PROCESS         S3
            │
            ▼
   IS TRANSMISSION-RECEPTION OF   S4
   PIXEL DATA OF ALL LINES FINISHED?   NO
            │YES
            ▼
   GENERATE IMAGE OF ONE FRAME    S5
            │
            ▼
   PERFORM IMAGE PROCESSING       S6
            │
            ▼
        ( END )
```

# FIG. 46

```
( DATA TRANSMISSION PROCESS )
              │
              ▼
  ┌──────────────────────────────┐ S11
  │ GENERATE HEADER INFORMATION  │
  └──────────────────────────────┘
              │
              ▼
    ┌──────────────────────┐ S12
    │  CALCULATE CRC CODE   │
    └──────────────────────┘
              │
              ▼
  ┌────────────────────────────────┐ S13
  │ GENERATE HEADER USING THREE SETS│
  │ OF HEADER INFORMATION AND CRC CODE│
  └────────────────────────────────┘
              │
              ▼
  ┌──────────────────────────────┐ S14
  │ PERFORM Pixel to Byte CONVERSION │
  └──────────────────────────────┘
              │
              ▼
  ┌──────────────────────────────┐ S15
  │  STORE PIXEL DATA FOR ONE LINE │
  │   IN PAYLOAD, ADD HEADER, AND  │
  │       GENERATE PACKET          │
  └──────────────────────────────┘
              │
              ▼
  ┌──────────────────────────────┐ S16
  │    ASSIGN PACKET DATA TO       │
  │         EACH LANE              │
  └──────────────────────────────┘
              │
              ▼
    ┌──────────────────────┐ S17
    │   ADD CONTROL CODE    │
    └──────────────────────┘
              │
              ▼
  ┌──────────────────────────────┐ S18
  │  PERFORM 8B10B CONVERSION     │
  └──────────────────────────────┘
              │
              ▼
    ┌──────────────────────┐ S19
    │  TRANSMIT PACKET DATA │
    └──────────────────────┘
              │
              ▼
        ( RETURN )
```

# FIG. 47

```
            ( DATA RECEPTION PROCESS )
                       │
                       ▼
        ┌──────────────────────────┐
        │    RECEIVE PACKET DATA    │ S31
        └──────────────────────────┘
                       │
                       ▼
      ┌─────────────────────────────┐
      │  PERFORM BIT SYNCHRONIZATION │ S32
      └─────────────────────────────┘
                       │
                       ▼
   ┌────────────────────────────────────┐
   │ PERFORM SYMBOL SYNCHRONIZATION      │ S33
   │    ON BASIS OF CONTROL CODE         │
   └────────────────────────────────────┘
                       │
                       ▼
      ┌─────────────────────────────┐
      │  PERFORM 10B8B CONVERSION    │ S34
      └─────────────────────────────┘
                       │
                       ▼
    ┌──────────────────────────────────┐
    │  CORRECT Data Skew BETWEEN        │ S35
    │  LANES USING DeSkew Code          │
    └──────────────────────────────────┘
                       │
                       ▼
       ┌───────────────────────────┐
       │    REMOVE CONTROL CODE     │ S36
       └───────────────────────────┘
                       │
                       ▼
  ┌────────────────────────────────────────┐
  │ INTEGRATE PACKET DATA OF EACH LANE      │ S37
  └────────────────────────────────────────┘
                       │
                       ▼
 ┌────────────────────────────────────────────┐
 │ SEPARATE HEADER DATA AND PAYLOAD DATA       │ S38
 └────────────────────────────────────────────┘
                       │
                       ▼
 ┌──────────────────────────────────────────┐
 │ DETECT ERROR IN HEADER INFORMATION        │ S39
 │      USING CRC CODE, AND OUTPUT           │
 │      NON-ERROR HEADER INFORMATION         │
 └──────────────────────────────────────────┘
                       │
                       ▼
  ┌──────────────────────────────────────────┐
  │ PERFORM Byte to Pixel CONVERSION,         │ S40
  │      AND OUTPUT PIXEL DATA                │
  └──────────────────────────────────────────┘
                       │
                       ▼
                 (  RETURN  )
```

EP 3 920 498 B1

# FIG. 48

100

# FIG. 49

Tx SIDE

A

Link Layer
SIGNAL
PROCESSING UNIT
(OTHER TRANSMISSION
STANDARD)

Phy Layer
SIGNAL
PROCESSING UNIT
(SLVS-EC STANDARD)

Rx SIDE

B

Phy Layer
SIGNAL
PROCESSING UNIT
(SLVS-EC STANDARD)

Link Layer
SIGNAL
PROCESSING UNIT
(OTHER TRANSMISSION
STANDARD)

# FIG. 50

Tx SIDE

A

| Link Layer SIGNAL PROCESSING UNIT (SLVS-EC STANDARD) | ←→ | Phy Layer SIGNAL PROCESSING UNIT (OTHER TRANSMISSION STANDARD) | →

Rx SIDE

B

→ | Phy Layer SIGNAL PROCESSING UNIT (OTHER TRANSMISSION STANDARD) | ←→ | Link Layer SIGNAL PROCESSING UNIT (SLVS-EC STANDARD) |

EP 3 920 498 B1

## FIG. 51

Tx SIDE

A

| Link Layer SIGNAL PROCESSING UNIT (SLVS-EC STANDARD) | ↔ | Phy Layer SIGNAL PROCESSING UNIT (SLVS-EC STANDARD) | → |

Link Layer SIGNAL PROCESSING UNIT (OTHER TRANSMISSION STANDARD)

Rx SIDE

B

Phy Layer SIGNAL PROCESSING UNIT (SLVS-EC STANDARD)

Link Layer SIGNAL PROCESSING UNIT (SLVS-EC STANDARD)

Link Layer SIGNAL PROCESSING UNIT (OTHER TRANSMISSION STANDARD)

EP 3 920 498 B1

## FIG. 52

Tx SIDE

A

Link Layer
SIGNAL
PROCESSING UNIT
(SLVS-EC STANDARD)

Link Layer
SIGNAL
PROCESSING UNIT
(OTHER TRANSMISSION
STANDARD)

Phy Layer
SIGNAL
PROCESSING UNIT
(OTHER TRANSMISSION
STANDARD)

Rx SIDE

B

Phy Layer
SIGNAL
PROCESSING UNIT
(OTHER TRANSMISSION
STANDARD)

Link Layer
SIGNAL
PROCESSING UNIT
(SLVS-EC STANDARD)

Link Layer
SIGNAL
PROCESSING UNIT
(OTHER TRANSMISSION
STANDARD)

# FIG. 53

**Tx SIDE**

A

Link Layer SIGNAL PROCESSING UNIT (SLVS-EC STANDARD)

Phy Layer SIGNAL PROCESSING UNIT (SLVS-EC STANDARD)

Phy Layer SIGNAL PROCESSING UNIT (OTHER TRANSMISSION STANDARD)

**Rx SIDE**

B

Phy Layer SIGNAL PROCESSING UNIT (SLVS-EC STANDARD)

Phy Layer SIGNAL PROCESSING UNIT (OTHER TRANSMISSION STANDARD)

Link Layer SIGNAL PROCESSING UNIT (SLVS-EC STANDARD)

EP 3 920 498 B1

# FIG. 54

Tx SIDE

A

Link Layer
SIGNAL
PROCESSING UNIT
(OTHER TRANSMISSION
STANDARD)

Phy Layer
SIGNAL
PROCESSING UNIT
(SLVS-EC STANDARD)

Phy Layer
SIGNAL
PROCESSING UNIT
(OTHER TRANSMISSION
STANDARD)

Rx SIDE

B

Phy Layer
SIGNAL
PROCESSING UNIT
(SLVS-EC STANDARD)

Phy Layer
SIGNAL
PROCESSING UNIT
(OTHER TRANSMISSION
STANDARD)

Link Layer
SIGNAL
PROCESSING UNIT
(OTHER TRANSMISSION
STANDARD)

EP 3 920 498 B1

*FIG. 55*

IMAGE SENSOR 201

211 IMAGE SENSOR CIRCUIT

212 Link Layer SIGNAL PROCESSING UNIT (OTHER TRANSMISSION STANDARD)

213 CONNECTION CIRCUIT

214 Phy Layer SIGNAL PROCESSING UNIT (SLVS-EC STANDARD)

OPPOSITE DEVICE

## FIG. 56

FIG. 57

# FIG. 58

RECEPTION DEVICE 202

OPPOSITE DEVICE

241 Phy Layer SIGNAL PROCESSING UNIT (OTHER TRANSMISSION STANDARD)

242 CONNECTION CIRCUIT

243 Link Layer SIGNAL PROCESSING UNIT (SLVS-EC STANDARD)

EP 3 920 498 B1

FIG. 59

## FIG. 60

EP 3 920 498 B1

# FIG. 61

IMAGE SENSOR 201

211 IMAGE SENSOR CIRCUIT

271 Link Layer SIGNAL PROCESSING UNIT (SLVS-EC STANDARD)

272 CONNECTION CIRCUIT

273 Link Layer SIGNAL PROCESSING UNIT (OTHER TRANSMISSION STANDARD)

274

275 Phy Layer SIGNAL PROCESSING UNIT (OTHER TRANSMISSION STANDARD)

OPPOSITE DEVICE

EP 3 920 498 B1

113

## FIG. 62

# FIG. 63

FIG. 64

## FIG. 65

## FIG. 66

EP 3 920 498 B1

FIG. 67

## FIG. 68

EP 3 920 498 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012120159 A

- US 20120120289 A1